(19) Europäisches Patentamt
European Patent Office
Office européen des brevets

(11) **EP 1 263 224 B1**

(12) **EUROPEAN PATENT SPECIFICATION**

(45) Date of publication and mention of the grant of the patent:
**08.06.2011 Bulletin 2011/23**

(51) Int Cl.:
***H04N 5/76*** (2006.01)

(21) Application number: **00911411.7**

(22) Date of filing: **28.03.2000**

(86) International application number:
**PCT/JP2000/001897**

(87) International publication number:
**WO 2001/065842 (07.09.2001 Gazette 2001/36)**

(54) **METHOD AND DEVICE FOR CONTROLLING REPRODUCTION OF ADVERTISEMENT**

VERFAHREN UND VORRICHTUNG ZUR STEURUNG DER WIEDERGABE VON WERBUNG

PROCEDE ET DISPOSITIF DE COMMANDE DE LA REPRODUCTION D'UNE PUBLICITE

(84) Designated Contracting States:
**AT BE CH CY DE DK ES FI FR GB GR IE IT LI LU MC NL PT SE**

(30) Priority: **29.02.2000 JP 2000053305**

(43) Date of publication of application:
**04.12.2002 Bulletin 2002/49**

(73) Proprietor: **Dentsu Inc.**
**Tokyo 105-7001 (JP)**

(72) Inventors:
• **IIJIMA, Akio**
  **Tokyo 158-0092 (JP)**
• **KAI, Akihiko**
  **Tokyo 120-0014 (JP)**
• **ARIMURA, Takeshi**
  **Chuo-ku**
  **Tokyo 104-8610 (JP)**

(74) Representative: **HOFFMANN EITLE**
**Patent- und Rechtsanwälte**
**Arabellastraße 4**
**81925 München (DE)**

(56) References cited:
**WO-A-97/07656    WO-A-98/53406**
**WO-A-99/52285    JP-A- 8 018 521**
**JP-A- 9 009 244    JP-A- 10 308 929**
**JP-A- 11 252 533**

**Description**

FIELD OF THE INVENTION

The present invention relates to a method and an apparatus for controlling reproduction of advertisements stored in a storage device in a receiving side, and a recording medium storing a computer program for causing a computer to execute procedures similar to those of the method.

DESCRIPTION OF THE RELATED ART

Conventionally, an advertisement displaying technology has been proposed; wherein a receiver for receiving broadcast signals including program (show) signals is provided with a storage part; advertisements, which are planned to be inserted in a program, are collectively transmitted to each receiver in advance or they are delivered by mailing or the like to each receiver in advance, and are stored in the storage part of the receiver; and the stored advertisements are read out at a predetermined timing to display them on the receiver.

Moreover, as an improvement of the above advertisement displaying technology, an advertisement displaying technology has been proposed which allows the viewer/listener of each receiver to selectively store advertisements suitable for the viewer/listener and to display the advertisement.

In the above advertisement displaying technology with which advertisements are selectively stored and displayed as desired on a receiver, each sponsor/advertiser adds data specifying an audience group targeted by an advertisement, for example, data for specifying age, sex, hobbies and the like of the targeted audience group, to the data of the advertisement which will be transmitted or delivered. On the receiving side, a viewer/listener stores individual (or personal) data specifying an audience group to which the viewer/listener belongs, for example, data such as age, sex and hobbies or the like of the viewer/listener, on the receiver in advance.

When the receiver receives or installs the advertisement data and data added to it, the receiver compares the data added to each piece of advertisement data and the personal data stored on the receiver. If the additional data and the personal data coincide (or partially coincide) with each other, the receiver stores the advertisement data in the storage part. If the additional data and the personal data do not coincide with each other, the receiver discards the advertisement data without storing it. Therefore, only an advertisement with a high degree of coincidence (matching) between an audience group targeted by the advertisement and an audience group to which the audience (viewer/listener) belongs is stored. Alternatively, the above advertisement data is delivered to the audience (viewer/listener) side by mailing or the like in advance, and the viewer/listener stores desired advertisements on the receiver.

The receiver simply reads out and displays the selectively stored advertisement data sequentially, in the order in which each piece of the data was stored, at a predetermined timing.

However, when an order for an advertisement is received from a sponsor, it is a common practice for the sponsor to take the publicity effect of the advertisement into consideration and to purchase a frame for displaying the advertisement, regardless of the viewing/listening period (displaying period) of the advertisement and receivers.

Thus, concerning an advertisement for which the designated display period is short or an advertisement for which a remaining display period is short, it is necessary to increase the displaying frequency on each receiver in order to attain a predetermined total number of times of display during the period. That is, it is necessary to preferentially read out and display an advertisement for which the remaining display period is short.

It is necessary to prepare on the host side a confirming mechanism in order to ascertain the status of the display within a predetermined period.

In addition, concerning an advertisement whose ordered total number of times of display is large or an advertisement for which the remaining number of times of display until the total number of time of display is reached is large, it is necessary to increases a frequency of displaying the advertisement on each receiver in order to attain the total number of times of display within the predetermined period. That is, it is necessary to preferentially read out and display an advertisement for which the remaining number of times of display is large.

The averaged number of times of displays of an advertisement that is at least required in each of all receivers in order to attain the ordered total number of times of displays of an advertisement (averaged minimum display number, i.e., a minimum number of times of displays required in each receiver in order to attain the ordered total number of times of display of the advertisement) can be calculated by dividing the ordered total number of times of displays of the advertisement by the total number of receivers. That is, in order to complete a predetermined total number of times of displays within a predetermined period, it is necessary to increase the frequency of displays of an advertisement for which the remaining number of times of displays until the averaged minimum display number is reached is large, on each receiver. However, some advertisements are not stored on a receiver which selectively stores advertisements and displays stored advertisements. That is, for each advertisement, the number of receivers on which the advertisement is stored is different. Therefore, if even one receiver does not store the advertisement, even if all the other receivers storing the advertisement attain the averaged minimum display number, the total number of times of display cannot be attained. In addition, even if an advertisement is stored in all the receivers, if certain receivers could not complete the minimum averaged display number, the ordered total number of times of displays cannot be attained. In order to supplement the shortage of the number of times of displays, it is necessary to perform a larger number of times of displays in the other receivers. In addition, it is necessary to prevent the number of times of displays in a specific receiver from becoming too large. Thus, it is necessary to determine, based on the minimum average number of times of displays, the number of times of displays that is equally assigned to each receiver which stores a specific advertisement, that provides each receiver with room (scope) to offset a shortage of the number of times of displays of the advertisement, and that defines an upper limit on the number of times of displays of the advertisement on each receiver in order to avoid an excessive numbers of display of the advertisement (hereinafter, this number of times of display is referred to the an averaged display number). Then, it is necessary to use the averaged display number instead of the above averaged minimum display number to preferentially read out and display an advertisement for which the remaining number of times of displays until this averaged display number is reached is large. Thus, in order to complete a predetermined total number of times of display within a predetermined period, it is necessary to increase the frequency of displaying an advertisement for which the remaining number of times of display until the averaged

display number is reached is large.

In addition, in the storage part of the above conventional receiver, an advertisement for which information specifying an audience group targeted by the advertisement and information specifying an audience group to which a viewer/listener of the receiver belongs coincide each other is stored. However, the degree of coincidence (matching) varies for each stored advertisement. That is, an advertisement most suitable for the viewer/listener of the receiver, an advertisement moderately suitable for the viewer/listener and an advertisement less suitable for the viewer/listener may be included in the stored advertisements. If effects and efficiency of an advertisement are taken into consideration, it is desirable to preferentially read out and display advertisements with a high degree of coincidence.

In addition, in the method of displaying stored advertisements one after another in the stored order, as in the above conventional receiver, advertisements are always repeatedly displayed in the same order. In addition, if a method in which a priority order of displaying each advertisement is calculated each time one advertisement is displayed and advertisement is displayed in the order from one with a highest priority order, the same advertisement may be, potentially, sequentially displayed. However, if advertisements are always displayed in the same order or the identical advertisement is continuously displayed, a viewer/listener's attention cannot be drawn. That is, if the effects and efficiency of an advertisement are taken into consideration, it is not preferable to always display advertisements in the same order or to continuously display the same advertisement. Therefore, it is desired that a new order of display is predetermined after displaying advertisements in a certain order, and advertisements are displayed in accordance with the predetermined display order.

In addition, the value of the above averaged display number is the same for each receiver storing certain advertisements. That is, the degree of coincidence of information specifying an audience group targeted by an advertisement and information specifying an audience group to which a viewer/listener of a receiver belongs is not reflected at all. If efficiency of an advertisement is taken into consideration, it is not desirable to assign the same number of times of displays to both a viewer/listener with a low degree of coincidence with the advertisement and a viewer/listener with a high degree of coincidence. Thus, it is necessary to set the number of times of display that reflects a degree of coincidence between an advertisement and a viewer/listener, making each receiver offset a shortage of the number of times of displays of the advertisement while not allowing a certain advertisement to be displayed too many times on each receiver. Then, it is necessary to use that display number, that is, the number of times of displays determined for each receiver according to the degree of coincidence (hereinafter referred to as an upper limit display number), instead of the above averaged display number, to preferentially read out and display an advertisement which has large upper limit display number.

Moreover, it is necessary to coincide the display time of an advertisement to the time of lifestyle of the viewer/listener targeted by the advertisement as much as possible, and preferentially read out and display the advertisement during the matched time slot.

In addition, for an advertisement, attributes such as cars, medical products, foods and the like (that is, a field to which a good advertised by an advertisement belongs) exist, and tastes with respect to the attributes exist on the viewer/listener side. It is necessary that a viewer/listener performs voting with respect to the attributes which he/she prefers, whereby an advertisement with a viewer/listener-preferred attribute is preferentially read out and displayed.

In addition, when an advertisement that should be preferentially displayed is determined, an advertisement that would not be selected as most preferential in a comprehensive determination may be selected in some cases, if determination is performed based on one element of determination. Therefore, it is desired that an advertisement that should be most preferentially displayed is comprehensively determined based on a plurality of elements of determination.

In addition, it is also necessary to receive feedback from the receiver, thereby changing the above conditions of setting on occasion, and controlling display of an advertisement from the transmitting side.

Moreover, it is desired to have a mechanism for displaying, corresponding to a designated broadcast program, a specific advertisement according to a request from the sponsor. In this mechanism, a designated advertisement is displayed if the advertisement is distributed and stored, and, preferably, an advertisement is selected out of the other advertisements to be displayed in accordance with the above conditions if the designated advertisement is not distributed and stored.

WO 97/07656 A relates to a method and apparatus for transmitting and displaying information between a remote network and a local computer. The method provides for selecting advertisements and other information from a computer network database based on user defined preferences and transmitting the selected advertisement in background mode over a communication link. An advertisement display manager is provided to select and display advertisements from the user preference and advertisements database. A network job communicates with the local computer to select and download advertisements based on user configuration and preference data. An advertisement killer scans the database and purges advertisements. Advertisements can be stored locally in the local database.

WO 99/52285 A relates to targeted advertisement using television delivery systems. The multi-channel architecture is designed to allow targeted advertising directed to television terminals connected to an operation center. For example, information sent from a program controller is stored in a RAM within a subscriber's television terminal and will be retrieved upon calling by the program controller, e.g. on a daily, weekly or monthly basis. Programs watched using a particular television terminal are tracked to obtain information for targeted advertisements. For a number of criteria, individual groups are defined and examples of target criteria include demographic targeting (age/sex/income) and area of dominant influence (ADI). For each targeting criterion, each set top terminal is assigned to its appropriate group based on the information collected. Software may initially take each program category, e.g. sports, news, movies etc, and establish the number of programs watched for a given time slot to build a programs watched matrix so that a number of correlation algorithms may be used to weight each selected program category group. Once the groups have been weighted, the weighted groups will be correlated with various advertisements stored in network control databases so that heavily weighted advertisements can be selected and sent to a subscriber.

The present invention aims at providing a method, apparatus, storage medium and computer program for performing control such that the number of times of display of an advertisement depends on the relevance of the advertisement to the viewer.

This object is achieved by a method having the features of claim 1, an apparatus having the features of claim 8, a storage medium having the features of claim 15 and a computer program having the features of claim 22. Advantageous embodiments are described in the dependent claims.

An example is presented to provide an advertisement data reproducing method and an advertisement data reproducing apparatus for performing control such that a priority order of display of each advertisement is determined based on a displaying period of each advertisement stored on each receiving side, and advertisements are displayed in accordance with the priority order; and a recording medium for storing a computer program for causing a computer to execute procedures similar to those of the above method.

Another example is presented to provide an advertisement data reproducing method and an advertisement data reproducing apparatus for performing control such that a priority order of displaying each advertisement is determined based on an averaged display number (the remaining number of times of display until an averaged display number is reached) of each advertisement stored on each receiving side, and advertisements are displayed in accordance with the priority order; and a recording medium for storing a computer program for causing a computer to execute procedures similar to those of the above method.

Another example is presented to provide an advertisement data reproducing method and an advertisement data reproducing apparatus for performing control such that a priority order of displaying each advertisement is determined based on a degree of coincidence between the audience group targeted by each advertisement stored on each receiving side and the audience group of a viewer/listener of a receiver, and advertisements are displayed in accordance with the priority order; and a recording medium for storing a computer program for causing a computer to execute procedures similar to those of the above method.

Another example is presented to provide an advertisement data reproducing method and an advertisement data reproducing apparatus for performing control such that a predetermined display order is assigned to each advertisement stored on each receiving side to display advertisements in accordance with the order, and a new predetermined display order is assigned after displaying the advertisements, for displaying advertisements in accordance with the new order; and a recording medium for storing a computer program for causing a computer to execute procedures similar to those of the above method.

Another example is presented to provide an advertisement data reproducing method and an advertisement data reproducing apparatus for performing control such that each advertisement stored on each receiving side is preferentially displayed in accordance with the time schedule of living of the viewer/listener belonging to an audience group targeted by the advertisement; and a recording medium for storing a computer program for causing a computer to execute procedures similar to those of the above method.

Another example is presented to provide an advertisement data reproducing method and an advertisement data reproducing apparatus for performing control such that a viewer/listener of a receiver can indicate tastes (preferences) with respect to an attribute of each advertisement stored on a receiving side, a priority order of displaying each advertisement is determined based on the taste with respect to the attribute of the advertisement indicated by the viewer/listener, and advertisements are displayed in accordance with the priority order; and a recording medium for storing a computer program for causing a computer to execute procedures similar to those of the above method.

Another example is presented to provide an advertisement data reproducing method and an advertisement data reproducing apparatus for performing control such that the number of times of display of an advertisement (upper limit display number), which is required for each receiver and which reflects a degree of coincidence between the audience group targeted by each advertisement and the audience group of a viewer/listener of a receiver, is determined, a priority order of displaying each advertisement is determined based on the upper limit display number (the remaining number of times of display until the upper limit display number is reached) of each advertisement stored on each receiving side, and advertisements are displayed in accordance with the priority order; and a recording medium for storing a computer program for causing a computer to execute procedures similar to those of the above method.

Another example is presented to provide an advertisement data reproducing method and an advertisement data reproducing apparatus for performing control such that a plurality of elements for determining a priority order are comprehensively determined to give a priority order to each advertisement, and advertisements are displayed in accordance with the priority order; and a recording medium for storing a computer program for causing a computer to execute procedures similar to those of the above method.

Another example is presented to provide an advertisement data reproducing method and an advertisement data reproducing apparatus for performing control such that histories, which are actual results indicating that an advertisement is displayed on a receiver, are collected, and display control of the receiver is applied by a transmitting side based on the accumulated results; and a recording medium for storing a computer program for causing a computer to execute procedures similar to those of the above method.

Another example is presented to provide an advertisement data reproducing method and an advertisement data reproducing apparatus for performing control such that designation of an advertisement that should be most preferentially displayed is made possible, and if the designated advertisement is stored on a receiving side, the advertisement is most preferentially displayed; and a recording medium for storing a computer program for causing a computer to execute procedures similar to those of the above method.

DISCLOSURE OF THE INVENTION

An advertisement data reproducing method is characterized in that, in an advertisement data reproducing method wherein a plurality of pieces of advertisement data for a plurality of advertisements is stored at a viewer/listener side and the advertisement data is reproduced on a receiver at the viewer/listener side, it comprises the steps of, in the viewer/listener side, (1) storing data which characterizes audience groups to which the viewer/listener, who views/listens to the advertisement data o the receiver, belongs, (2) storing each piece of the advertisement data to which data characterizing audience groups which are targets of the piece of the advertisement data has been added, and (3) determining the appropriate number of times of reproductions of each piece of the advertisement data on the receiver, based on a degree of coincidence between the data characterizing audience groups to which the viewer/listener belongs and the data characterizing audience groups which are targets of each piece of the advertisement data which has been added to the piece of the advertisement data stored in the viewer/listener side.

The advertisement data reproducing method is characterized in that, in the above advertisement data reproducing method, data representing the predetermined number of times of reproductions of each piece of the advertisement data has been added to the piece of the advertisement data, and the step of item (2) comprises a step of storing, in association with the piece of the advertisement data, data representing the predetermined number of times of reproductions of the piece of the advertisement data, and the step of item (3) comprises a step of determining the appropriate number of times of reproductions of each piece of the advertisement data on the receiver, based on the degree of coincidence and the predetermined number of times of reproductions of the piece of the advertisement data.

The advertisement data reproducing method is characterized in that, in the above advertisement data reproducing method, the data representing the predetermined number of times of reproductions of the piece of the advertisement data represents the contracted total number of times of reproductions of the piece of the advertisement data.

The advertisement data reproducing method is characterized in that, in the above advertisement data reproducing method, the appropriate number of times of reproductions which is determined based on the degree of coincidence in the step of item (3) is determined in such a manner that the appropriate number of times of reproductions exceeds the number of times of reproductions which is the minimum required for the receiver in order for a total of the numbers of reproductions of the piece of the advertisement on all the receivers which store the piece of the advertisement data to just reach the contracted total number of times of reproductions.

The advertisement data reproducing method is characterized in that, in the above advertisement data reproducing method, the data characterizing the audience groups to which the viewer/listener belongs of the step of item (1) comprises first data representing one or more categories which specify the audience groups to which the viewer/listener belongs, wherein the first data which represents the one or more categories is selected from category data for specifying audience groups, wherein the category data for specifying audience groups comprises one or more items and each item comprises one or more categories for specifying audience groups; the data characterizing audience groups which are targets of the piece of the advertisement data of the step of item (2) comprises second data representing one or more categories which specify the audience groups which are targets of the piece of the advertisement data, and data representing a value of a coefficient which represents a weight assigned to each of the selected categories, wherein the second data which represents the one or more categories is selected from the category data for specifying audience groups, and wherein a value representing a greater weight is assigned to a selected category having more importance; data representing the number of viewers/listeners who belong to each of the categories specifying the audience groups which are the targets of the piece of the advertisement data has been added to the piece of the advertisement data, and the step of item (2) comprises a step of storing, in association with the piece of the advertisement data, the data representing the number of viewers/listeners who belong to each of the categories specifying the audience groups which are the targets of the piece of the advertisement data; and the step of item (3) comprises steps of, for each piece of the advertisement data, (3a) based on the data representing the value of the coefficient representing the weight assigned to each of the categories represented by the second data which coincide with the categories represented by the first data, determining, with respect to each of the coincided categories, the value of the coefficient which represents the degree of coincidence between the audience groups targeted by the advertisement and the audience groups to which the viewer/listener of the receiver belongs, (3b) applying each value of the coefficient representing the degree of coincidence, which is obtained with respect to each coincided category in the step of item (3a), to the contracted total number of times of reproductions, whereby, for each coincided category, obtaining the total number of times of reproductions in which the degree of coincidence with respect to the coincided category is taken into consideration, (3c) dividing the total number of times of reproductions, which is obtained in the step of item (3b) and in which the degree of coincidence is taken into consideration, with respect to each coincided category by the number of viewers/listeners who belong to the coincided category, whereby, for each coincided category, obtaining the number of times of reproductions in which the number of viewers/listeners belonging to the coincided category is taken into consideration, (3d) based on the numbers of reproductions, which are obtained in the step of item (3c) and in which the numbers of viewers/listeners belonging to the respective coincided categories are taken into consideration, determining the appropriate number of times of reproductions to be assigned to the viewer/listener.

The advertisement data reproducing method is characterized in that, in the above advertisement data reproducing method, it further comprises steps of, in the viewer/listener side, (A) based on the appropriate number of times of reproductions of each piece of the advertisement data, which is determined in the step of item (3), determining a remaining number of times of reproductions of the piece of the advertisement data, (B) for the remaining number of times of reproductions of each piece of the advertisement data, determining a value of a coefficient representing a weight, wherein a heavier weight is given to a greater remaining number of times of reproductions, (C) based on the value of the coefficient determined for each piece of the advertisement, determining a priority order for reproducing each piece of the advertisement data of the advertisement on the receiver, (D) selecting one or more pieces of the advertisement data to be reproduced on the receiver from the plurality of stored pieces of the advertisement data, based on the priority order, and (E) reproducing the one or more pieces of the advertisement data selected in the step of item (D) on the receiver in accordance with the priority order.

The advertisement data reproducing method is characterized in that, in the above advertisement data reproducing method, the appropriate number of times of reproductions of each piece of the advertisement data, which is determined in the step of item (3), is the number of times of reproductions which is defined as an upper limit of the number of times for reference which the receiver may reproduce the piece of the advertisement data.

An advertisement data reproducing method is characterized in that, in an advertisement data reproducing method wherein a plurality of pieces of advertisement data for a plurality of advertisements are stored at a viewer/listener side and the advertisement data is reproduced on a receiver at the viewer/listener side, it comprises the steps of, in the viewer/listener side, (1) storing each piece of the advertisement data to which time slot data representing one or more time slots and data representing each value of a coefficient representing the weight assigned to each time slot represented by the time slot data is added; wherein the time slots, which are time intervals in a day, are predefined by partitioning the time of a day into a plurality of time intervals, the time slot data represents at least one time slot, which is selected from the defined time slots, at which the piece of the advertisement data is desired to be preferentially reproduced on the receiver, and a greater weight is assigned to a time slot having more importance, (2) determining a time slot to which the present time of day belongs, (3) for each piece of advertisement data, reading out the value of the coefficient assigned to a time slot which corresponds to the time slot determined in the step of item (2), (4) based on the value of the coefficient read out in the step of item (3), determining a priority order for reproducing each piece of the advertisement data on the receiver, (5) selecting one or more pieces of the advertisement data to be reproduced on the receiver from the plurality of stored pieces of the advertisement data, based on the priority order, and (6) reproducing the one or more pieces of the advertisement data selected in the step of item (5) on the receiver in accordance with the priority order.

An advertisement data reproducing apparatus is characterized in that, in an advertisement data reproducing apparatus comprising means for storing a plurality of pieces of advertisement data for a plurality of advertisements at a viewer/listener side and a receiver for reproducing the advertisement data at the viewer/listener side, it comprises (1) means for storing data which characterizes audience groups to which the viewer/listener, who views/listens to the advertisement data on the receiver, belongs, (2) means for storing each piece of the advertisement data to which data characterizing audience groups which are targets of the piece of the advertisement data has been added, and (3) means for determining the appropriate number of times of reproductions of each piece of the advertisement data on the receiver, based on a degree of coincidence between the data characterizing audience groups to which the viewer/listener belongs and the data characterizing audience groups which are targets of each piece of the advertisement data which has been added to the piece of the advertisement data stored in the viewer/listener side.

The advertisement data reproducing apparatus is characterized in that, in the above advertisement data reproducing apparatus, data representing the predetermined number of times of reproductions of each piece of the advertisement data has been added to the piece of the advertisement data, and the means of item (2) comprises means for storing, in association with the piece of the advertisement data, data representing the predetermined number of times of reproductions of the piece of the advertisement data; and the means of item (3) comprises means for determining the appropriate number of times of reproductions of each piece of the advertisement data on the receiver, based on the degree of coincidence and the predetermined number of times of reproductions of the piece of the advertisement data.

The advertisement data reproducing apparatus is characterized in that, in the above advertisement data reproducing apparatus, the data representing the predetermined number of times of reproductions of the piece of the advertisement data represents the contracted total number of times of reproductions of the piece of the advertisement data.

The advertisement data reproducing apparatus is characterized in that, in the above advertisement data reproducing apparatus, the appropriate number of times of reproductions which is determined based on the degree of coincidence by the means of item (3) is determined in such a manner that the appropriate number of times of reproductions exceeds the number of times of reproductions which is the minimum required for the receiver in order for a total of the numbers of reproductions of the piece of the advertisement on all the receivers, which store the piece of the advertisement data, to just reach the contracted total number of times of reproductions.

The advertisement data reproducing apparatus is characterized in that, in the above advertisement data reproducing apparatus, the data characterizing the audience groups to which the viewer/listener belongs, which is stored by the means of item (1), comprises first data representing one or more categories which specify the audience groups to which the viewer/listener belongs, wherein the first data which represents the one or more categories is selected from category data for specifying audience groups, wherein the category data for specifying audience groups comprises one or more items and each item comprises one or more categories for specifying audience groups; the data characterizing audience groups which are targets of the piece of the advertisement data, which is stored by the means of item (2), comprises second data representing one or more categories which specify the audience groups which are targets of the piece of the advertisement data, and data representing a value of a coefficient which represents a weight assigned to each of the selected categories, wherein the second data which represents the one or more categories is selected from the category data for specifying audience groups, and wherein a value representing a greater weight is assigned to a selected category having more importance; data representing the number of viewers/listeners who belong to each of the categories specifying the audience groups which are the targets of the piece of the advertisement data has been added to the piece of the advertisement data, and the means of item (2) comprises means for storing, in association with the piece of the advertisement data, the data representing the number of viewers/listeners who belong to each of the categories specifying the audience groups which are the targets of the piece of the advertisement data; and the means of item (3) comprises, for each piece of the advertisement data, (3a) means for determining, based on the data representing the value of the coefficient representing the weight assigned to each of the categories represented by the second data which coincide with the categories represented by the first data, with respect to each of the coincided categories, the value of the coefficient which represents the degree of coincidence between the audience groups targeted by the advertisement and the audience groups to which the viewer/listener of the receiver belongs, (3b) means for applying each value of the coefficient representing the degree of coincidence, which is obtained with respect to each coincided category by the means of item (3a), to the contracted total number of times of reproductions for obtaining, for each coincided category, the total number of times of reproductions in which the degree of coincidence with respect to the coincided category is taken into consideration, (3c) means for dividing the total number of times of reproductions, which is obtained by the means of item (3b) and in which the degree of coincidence is taken into consideration, with respect to each coincided category by the number of viewers/listeners who belong to the coincided category for obtaining, for each coincided category, the number of times of reproductions in which the number of viewers/listeners belonging to the coincided category is taken into consideration, (3d) means for determining, based on the numbers of reproductions, which are obtained by the means of item (3c) and in which the numbers of viewers/listeners belonging to the respective coincided categories are taken into consideration, the appropriate number of times of reproductions to be assigned to the viewer/listener.

The advertisement data reproducing apparatus is characterized in that, in the above advertisement data reproducing apparatus, it further comprises, in the viewer/listener side, (A) means for determining, based on the appropriate number of times of reproductions of each piece of the advertisement data, which is determined by the means of item (3), a remaining number of times of reproductions of the piece of the advertisement data, (B) means for determining, for the remaining number of times of reproductions of each piece of the advertisement data, a value of a coefficient representing a weight, wherein a heavier weight is given to a greater remaining number of times of reproductions, (C) means for determining, based on the value of the coefficient determined for each piece of the advertisement, a priority order for reproducing each piece of the advertisement data of the advertisement on the receiver, (D) means for selecting one or more pieces of the advertisement data to be reproduced on the receiver from the plurality of stored pieces of the advertisement data, based on the priority order, and (E) means for reproducing the one or more pieces of the advertisement data selected by the means of item (D) on the receiver in accordance with the priority order.

The advertisement data reproducing apparatus is characterized in that, in the above advertisement data reproducing apparatus, the appropriate number of times of reproductions of each piece of the advertisement data, which is determined by the means of item (3), is the number of times of reproductions which is defined as an upper limit of the number of times for reference which the receiver may reproduce the piece of the advertisement data.

An advertisement data reproducing apparatus is characterized in that, in an advertisement data reproducing apparatus comprising means for storing a plurality of pieces of advertisement data for a plurality of advertisements at a viewer/listener side and a receiver for reproducing the advertisement data at the viewer/listener side, it comprises, in the viewer/listener side, (1) means for storing each piece of the advertisement data to which time slot data representing one or more time slots and data representing each value of a coefficient representing the weight assigned to each time slot represented by the time slot data is added; wherein the time slots, which are time intervals in a day, are predefined by partitioning the time of a day into a plurality of time intervals, the time slot data represents at least one time slot, which is selected from the defined time slots, at which the piece of the advertisement data is desired to be preferentially reproduced on the receiver, and a greater weight is assigned to a time slot having more importance, (2) means for determining a time slot to which the present time of day belongs, (3) means for reading out, for each piece of advertisement data, the value of the coefficient assigned to a time slot which corresponds to the time slot determined by the means of item (2), (4) means for determining, based on the value of the coefficient read out by the means of item (3), a priority order for reproducing each piece of the advertisement data on the receiver, (5) means for selecting one or more pieces of the advertisement data to be reproduced on the receiver from the plurality of stored pieces of the advertisement data, based on the priority order, and (6) means for reproducing the one or more pieces of the advertisement data selected by the means of item (5) on the receiver in accordance with the priority order.

A storage medium is characterized in that, in a storage medium for storing a program which enables a computer to carry out an advertisement data reproducing procedure in which a plurality of pieces of advertisement data for a plurality of advertisements are stored at a viewer/listener side and the advertisement data is reproduced on a receiver at the viewer/listener side, the procedure comprises the steps of, in the viewer/listener side, (1) storing data which characterizes audience groups to which the viewer/listener, who views/listens to the advertisement data on the receiver, belongs, (2) storing each piece of the advertisement data to which data characterizing audience groups which are targets of the piece of the advertisement data has been added, and (3) determining the appropriate number of times of reproductions of each piece of the advertisement data on the receiver, based on a degree of coincidence between the data characterizing audience groups to which the viewer/listener belongs and the data characterizing audience groups which are targets of each piece of the advertisement data which has been added to the piece of the advertisement data stored in the viewer/listener side.

The storage medium is characterized in that, in the above storage medium, data representing the predetermined number of times of reproductions of each piece of the advertisement data has been added to the piece of the advertisement data, and the step of item (2) comprises a step of storing, in association with the piece of the advertisement data, data representing the predetermined number of times of reproductions of the piece of the advertisement data; and the step of item (3) comprises a step of determining the appropriate number of times of reproductions of each piece of the advertisement data on the receiver, based on the degree of coincidence and the predetermined number of times of reproductions of the piece of the advertisement data.

The storage medium is characterized in that, in the above storage medium, the data representing the predetermined number of times of reproductions of the piece of the advertisement data represents the contracted total number of times of reproductions of the piece of the advertisement data.

The storage medium is characterized in that, in the above storage medium, the appropriate number of times of reproductions which is determined based on the degree of coincidence in the step of item (3) is determined in such a manner that the appropriate number of times of reproductions exceeds the number of times of reproductions which is the minimum required for the receiver in order for a total of the numbers of reproductions of the piece of the advertisement on all the receivers which store the piece of the advertisement data to just reach the contracted total number of times of reproductions.

The storage medium is characterized in that, in the above storage medium, the data characterizing the audience groups to which the viewer/listener belongs of the step of item (1) comprises first data representing one or more categories which specify the audience groups to which the viewer/listener belongs, wherein the first data which represents the one or more categories is selected from category data for specifying audience groups, wherein the category data for specifying audience groups comprises one or more items and each item comprises one or more categories for specifying audience groups; the data characterizing audience groups which are targets of the piece of the advertisement data of the step of item (2) comprises second data representing one or more categories which specify the audience groups which are targets of the piece of the advertisement data, and data representing a value of a coefficient which represents a weight assigned to each of the selected categories, wherein the second data which represents the one or more categories is selected from the category data for specifying audience groups, and wherein a value representing a greater weight is assigned to a selected category having more importance; data representing the number of viewers/listeners who belong to each of the categories specifying the audience groups which are the targets of the piece of the advertisement data has been added to the piece of the advertisement data, and the step of item (2) comprises a step of storing, in association with the piece of the advertisement data, the data representing the number of viewers/listeners who belong to each of the categories specifying the audience groups which are the targets of the piece of the advertisement data; and the step of item (3) comprises steps of, for each piece of the advertisement data, (3a) based on the data representing the value of the coefficient representing the weight assigned to each of the categories represented by the second data which coincide with the categories represented by the first data, determining, with respect to each of the coincided categories, the value of the coefficient which represents the degree of coincidence between the audience groups-targeted by the advertisement and the audience groups to which the viewer/listener of the receiver belongs, (3b) applying each value of the coefficient representing the degree of coincidence, which is obtained with respect to each coincided category in the step of item (3a), to the contracted total number of times of reproductions, whereby, for each coincided category, obtaining the total number of times of reproductions in which the degree of coincidence with respect to the coincided category is taken into consideration, (3c) dividing the total number of times of reproductions, which is obtained in the step of item (3b) and in which the degree of coincidence is taken into consideration, with respect to each coincided category by the number of viewers/listeners who belong to the coincided category, whereby, for each coincided category, obtaining the number of times of reproductions in which the number of viewers/listeners belonging to the coincided category is taken into consideration, (3d) based on the numbers of reproductions, which are obtained in the step of item (3c) and in which the numbers of viewers/listeners belonging to the respective coincided categories are taken into consideration, determining the appropriate number of times of reproductions to be assigned to the viewer/listener.

The storage medium is characterized in that, in the above storage medium, the procedure further comprises steps of, in the viewer/listener side, (A) based on the appropriate number of times of reproductions of each piece of the advertisement data, which is determined in the step of item (3), determining a remaining number of times of reproductions of the piece of the advertisement data, (B) for the remaining number of times of reproductions of each piece of the advertisement data, determining a value of a coefficient representing a weight, wherein a heavier weight is given to a greater remaining number of times of reproductions, (C) based on the value of the coefficient determined for each piece of the advertisement, determining a priority order for reproducing each piece of the advertisement data of the advertisement on the receiver, (D) selecting one or more pieces of the advertisement data to be reproduced on the receiver from the plurality of stored pieces of the advertisement data, based on the priority order, and (E) reproducing the one or more pieces of the advertisement data selected in the step of item (D) on the receiver in accordance with the priority order.

The storage medium is characterized in that, in the above storage medium, the appropriate number of times of reproductions of each piece of the advertisement data, which is determined in the step of item (3), is the number of times of reproductions which is defined as an upper limit of the number of times for reference which the receiver may reproduce the piece of the advertisement data.

A storage medium is characterized in that, in a storage medium for storing a program which enables a computer to carry out an advertisement data reproducing procedure in which a plurality of pieces of advertisement data for a plurality of advertisements are stored at a viewer/listener side and the advertisement data is reproduced on a receiver at the viewer/listener side, the procedure comprises the steps of, in the viewer/listener side, (1) storing each piece of the advertisement data to which time slot data representing one or more time slots and data representing each value of a coefficient representing the weight assigned to each time slot represented by the time slot data is added, wherein the time slots, which are time intervals in a day, are predefined by partitioning the time of a day into a plurality of time intervals; the time slot data represents at least one time slot, which is selected from the defined time slots, at which the piece of the advertisement data is desired to be preferentially reproduced on the receiver, and a greater weight is assigned to a time slot having more importance, (2) determining a time slot to which the present time of day belongs, (3) for each piece of advertisement data, reading out the value of the coefficient assigned to a time slot which corresponds to the time slot determined in the step of item (2), (4) based on the value of the coefficient read out in the step of item (3), determining a priority order for reproducing each piece of the advertisement data on the receiver, (5) selecting one or more pieces of the advertisement data to be reproduced on the receiver from the plurality of stored pieces of the advertisement data, based on the priority order, and (6) reproducing the one or more pieces of the advertisement data selected in the step of item (5) on the receiver in accordance with the priority order.

BRIEF DESCRIPTION OF THE DRAWINGS

Fig. 1 is a table showing a concept of a method for determining a priority order of display of advertisements.
Fig. 2 illustrates a construction of an apparatus on a transmitting side in an advertisement display controlling system.
Fig. 3 illustrates a construction of an apparatus on a receiving side in the advertisement display controlling system.
Fig. 4 is a flow chart showing preparation steps on the receiving side.
Fig. 5 is a flow chart showing a step, on a broadcasting side, for analyzing audience data.
Fig. 6 is a flow chart showing steps, on the broadcasting side, for preparing and transmitting advertisement data.
Fig. 7 is a flow chart showing steps, on the receiving side, for receiving, selecting and storing advertisement data.
Fig. 8 is a flow chart showing steps, on the transmitting side, for preparing an advertisement command signal.
Fig. 9 is a flow chart showing steps, on the receiving side, for determining a priority order of stored advertisement data and displaying an advertisement.
Fig. 10 is a flow chart continuing from Fig. 9 and indicates the steps for determining a priority order of the stored advertisement data and displaying an advertisement on the receiving side.
Fig. 11 is a flow chart continuing from Fig. 10 and indicates the steps for determining a priority order of the stored advertisement data and displaying an advertisement on the receiving side.
Fig. 12 is a flow chart continuing from Fig. 11 and indicates the steps for determining a priority order of the stored advertisement data and displaying an advertisement on the receiving side.
Fig. 13 is a flow chart continuing from Fig. 12 and indicates the steps for determining a priority order of the stored advertisement data and displaying an advertisement on the receiving side.
Fig. 14 is a flow chart showing steps, on the receiving side, for storing history data concerning advertisement displays.
Fig. 15 is a flow chart showing steps, on the transmitting side, for processing and controlling history data that is fed back from the receiving side.
Fig. 16 is a flow chart showing steps, on the transmitting side, for generating statistical data based on the history data that is fed back from the receiving side.
Fig. 17 is a flow chart showing steps, on a transmitting side, for preparing and transmitting advertisement data in a second embodiment.

DETAILED DESCRIPTION OF THE PREFERRED EMBODIMENT

Embodiments of the present invention will be hereinafter described.
First, a basic concept of an example will be described. An example causes receiver to store advertisements desired by a viewer/listener in advance and to display the stored plurality of advertisements, by sending commands from a transmitting side (host side), in accordance with a priority order based on necessary elements determined by a sponsor, thereby realizing improvement of advertisement effects.
The elements for determining a priority order of stored advertisements are, for example, (1) a viewing/listening period (display period) of each advertisement stored on each receiver, (2) the ordered number of times of reproducing of each advertisement (the number of times of displaying), that is, the total number of times of reproductions in all receivers (the total number of times of displaying), (3) a degree of coincidence between an audience group targeted by each advertisement and an audience group to which the viewer/listener of each receiver belongs, (4) preferred display time designated by a sponsor, (5) a predetermined reproduction order (predetermined display order) to be assigned to each advertisement stored on each receiver, (6) the number of times of displays required by each receiver in order to attain the total number of times of displays of each advertisement, and (7) an attribute of the advertisement, that is, a degree of preference of a viewer/listener of a receiver with respect to a category to which each advertisement belongs. Each of these elements is converted into a value representing a weight, and a high priority order is given to an advertisement with a large sum of weight values. Moreover, as an element for determining a priority order of stored advertisements, there is (8) an interrupt command (advertisement designation command) for displaying an advertisement of a specific ID.

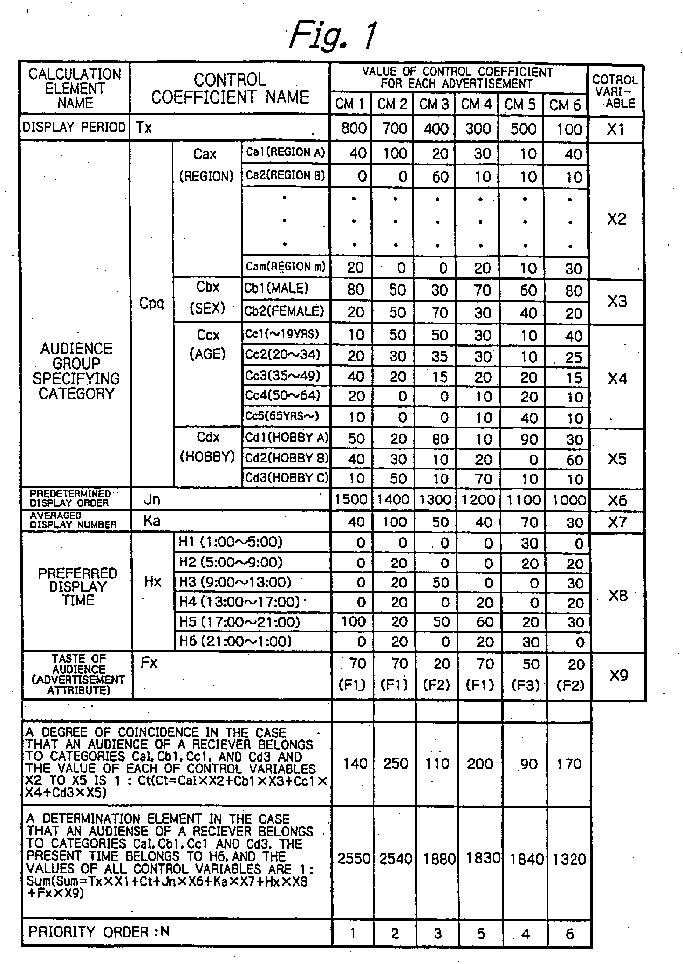

Fig. 1 shows a table for showing a concept of a method for determining a priority order of displaying of advertisements.

A table in the upper part of Fig. 1 indicates names of calculation elements for determining a priority order of displaying each of advertisements CM1, CM2, CM3, CM4, CM5 and CM6, names of control coefficients for the calculation elements, values of the control coefficients applied to each advertisement, and control variables applied to the control coefficients. A table in the lower part of Fig. 1 relates to the table in the upper part, and indicates, for each advertisement, a coincidence degree value indicating a degree of matching (coincidence) between a viewer/listener and the advertisement, values of determination elements of a priority order with respect to each advertisement, and a priority order.

The calculation elements include a display period, an audience group specifying category, a predetermined display order, the averaged display number, a preferred display time, and the taste of a viewer/listener (advertisement attributes).

The display period of the calculation elements is an element corresponding to a viewing/listening period of above item (1). The display period element is a weighted value that is calculated based on the display period of each advertisement stored on each receiver, and is represented by a control coefficient $Tx$. The control coefficient $Tx$ changes as time passes, and the shorter the remaining display period the larger the value becomes.

The audience group specifying category of the calculation element is an element which is a basis for determining the degree of coincidence of above item (3), and is data that is inputted when the advertisement is ordered, in order for a sponsor to specify an audience group that is to be a target of an advertisement. Information for specifying an audience group is classified into a plurality of main items such as region, sex, age and the like, and each item is sub-classified into a plurality of categories. For example, if an item, that is, a main classification is "sex," information is sub-classified into the category of "male" and the category of "female." A sponsor assigns a value representing a weight to each category of the audience group specifying category, in order to specify an audience group to be a target of an advertisement. A weighted value is represented by a control coefficient $Cpq$, and a larger value is assigned to a category which is regarded to be more important. The value assigned by the sponsor is a fixed value, and does not change. On the receiver, this weighted value is reflected only on a category to which the viewer/listener belongs.

The predetermined display order of the calculation element is an element corresponding to the predetermined display order of above item (5). The predetermined display order element is a weighted value that is calculated based on a predetermined order of display assigned to each advertisement stored on each receiver, and is represented by a control coefficient $Jn$. The control coefficient $Jn$ is changed when an advertisement is displayed. The higher the predetermined display order the larger the control coefficient $Jn$ becomes in value.

The averaged display number of the calculation element is an element corresponding to the number of times of displays of above item (6). The averaged display number element is a weighted value that is calculated based on the remaining number of times of displays until the averaged display number is reached, and is represented by a control coefficient $Ka$ ($Ka$ is a value obtained by applying a coefficient to the remaining number of times of display). The value of the averaged display number is obtained by multiplying a value (the averaged minimum display number), which is obtained by dividing the ordered total number of times of displays of each advertisement by the number of all receivers, by a coefficient. The value of the averaged display number (initial value) obtained for each advertisement is the same for all the receivers storing the advertisement. The remaining number of times of displays is obtained by subtracting one from the averaged display number each time an advertisement is displayed. The control coefficient $Ka$ becomes zero when the remaining number of times of display becomes zero. An advertisement with the control coefficient $Ka$ reaching zero is no longer displayed.

A coincidence degree value ($Ct$) indicates a degree of coincidence between an audience group targeted by an advertisement and an audience group to which the viewer/listener belongs. On the receiving side, the viewer/listener selects a category indicating an audience group to which the viewer/listener belongs out of the audience group specifying category data, and stores it as personal data. The total of the control coefficients $Cpq$ assigned by each sponsor with respect to the categories indicated in the personal data becomes a value indicating the degree of coincidence of above item (3). The initial value of the control coefficient $Ct$ is a constant value for each advertisement material, and is changed only by a control variable application command. For example, in the case in which the control coefficient $Cpq$ ($Cax$, $Cbx$, $Ccx$, and $Cdx$) is multiplied by a control variable $Xn$ ($X2$ to $X5$), since the value of the control coefficient $Cpq$ changes if the control variable $Xn$ is a value other than one, the coincidence degree value $Ct$ also changes. The higher the degree of coincidence the larger the control coefficient $Cpq$ becomes.

The preferred display time of the calculation element is an element corresponding to the preferred display time of above item (4). A value of the preferred display time element, that is, a preferred display time value ($Hx$) is an element with the purpose that an advertisement is preferentially displayed during a time slot designated by a sponsor. All receivers become targets of preferred display, and a numerical value to be reflected changes according to a time slot during which an advertisement is displayed. That is, if the present time and the designated time slot coincide with each other, a value assigned for the time slot is made effective.

The tastes of a viewer/listener of the calculation element is an element corresponding to the preference of a viewer/listener of above item (7). An advertisement attribute ($Fx$) indicates to which category an advertisement belongs.

The advertisement attribute is classified into categories such as cars, foods, electric appliances, etc., and is represented by adding a weight to each of them. Initially assigned numerical values of the Fx's (F1 to Fn) are equivalent for all advertisements, but the value for each category increases or decreases every time a voting input regarding preference/non-preference is inputted by an inputting device (inputting system) of a receiver. That is, for example, if a preferred advertisement is an advertisement for a car, the values assigned to all the categories specifying the attribute "car" equally increase and, consequently, the priority of the advertisements become higher than advertisements belonging to other categories. In this case, advertisements belonging to the category of cars tend to be more preferentially displayed.

In addition, if the advertisement is not preferred, the priority becomes lower, and the advertisement tends to be displayed less.

The control variable Xn (X1 to X9 in Fig. 1) applied by the control variable application command determines the importance of each control coefficient (Tx, Cpq, Jn, Ka, Hx and Fx), and it is the coefficient which is determined on the transmitting side (host side) in order to determine which coefficient should be prioritized based on feedback of a history (a history of display states of an advertisement or the like), business information or the like. By multiplying Xn (X1 to X9) to coefficients Tx, Cpq, Jn, Ka, Hx and Fx, respectively, it is possible to define a coefficient(s) which is regarded to be important. A command for application of the control coefficient is given in a step before finally summing up all the control coefficients, that is, before calculating a determination element (Sum) that will be hereinafter described. For example, when a deadline for a display approaches, multiply the values for the number and(or) the period, that is, the control coefficients Tx and(or) Ka by a large value, and multiply the other control coefficients by small values, thereby making it possible to increase priorities of the number and the period.

The determination element (Sum) indicates the sum of the values of the control coefficients Tx, Jn, Ka, Hx and Fx to which the control variable Xn is applied and the value of Ct (i.e., a sum of the values of Tx', Jn', Ka', Hx', Fx', Cax', Cbx', Ccx' and Cdx'). This value of the sum is a value comprehensively indicating the weight of each advertisement, and a final priority order is determined based on this value. The control coefficient Tx is a variable that varies depending on time, the control coefficients Ka and Jn are variables that vary depending on display of an advertisement, the control coefficient Hx is a variable that varies depending on time of the day, the control coefficient Fx is a variable that varies according to the voting of a viewer/listener. Moreover, since the control variable (Xn) is applied to each of all the control coefficients, values of the control coefficients vary depending on values of the control variables. Therefore, the value of the sum (Sum) of the control coefficient also varies depending on time, display of an advertisement, time of day, the voting of a viewer/listener, and the control variables.

A priority order (N) indicates the ranks of higher to lower places assigned to advertisements in the order of a larger value of the determination element (Sum), and is a final priority order. A receiver displays stored advertisements in accordance with this priority order.

An embodiment of the present invention will now be described with reference to the drawings.

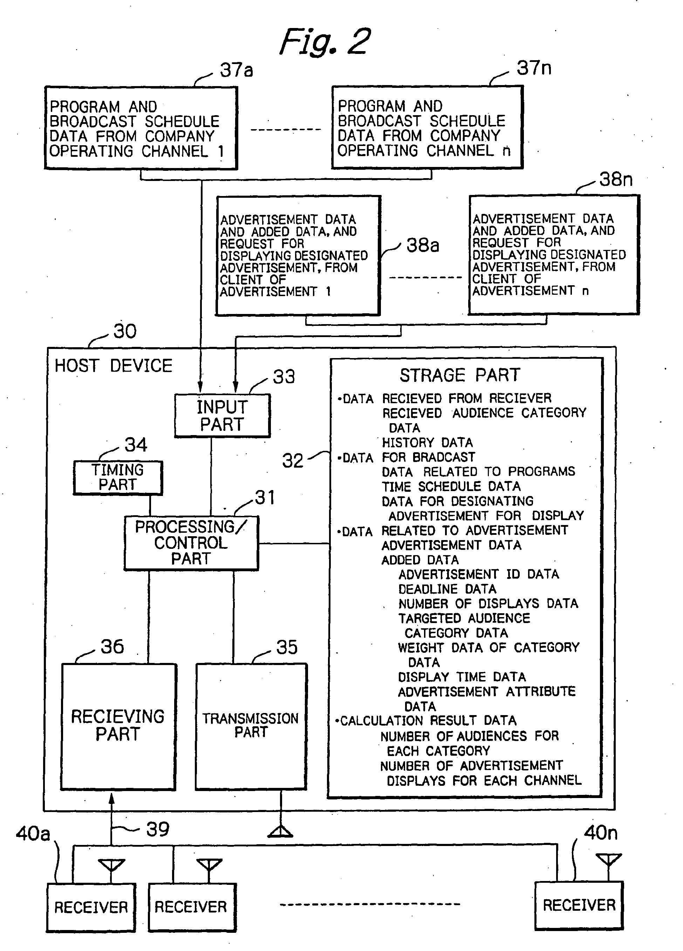

Fig. 2 illustrates the configuration of an apparatus on the transmitting side in the advertisement display controlling system of the present invention. The apparatus on the transmitting side is provided with a processing/control part 31. The processing/control part 31 performs processing for overall control of a host device 30, management, constructing, editing and transmission/reception of advertisement data and additional data, management of personal data of the viewer/listener of each receiver, management of history data concerning a display states of each advertisement collected from each receiver, constructing and management of a control command to be transmitted to a receiver, constructing and management of various kinds of data for calculation, constructing and management of data for accounting, and the like. A storage part 32, an input part 33, a timing part 34, a transmission part 35 and receiving part 36 are connected to the processing/control part 31.

The input part 33 receives program(show) data and broadcast schedule data 37 (37a to 37n) from the broadcasting company for each channel, and also receives advertisement data and additional data 38 (38a to 38n) relating to the advertisement from a client of each advertisement or an advertisement agency, stores the received data in the storage part 32, processes the stored data in the processing/control part 31, and transmits the data to a receiver 40 (40a to 40n) via the transmission part 35.

In addition, the receiving part 36 receives history data accumulated on the receiver 40, processes the data in the processing/control part 31, and stores the data in the storage part 32.

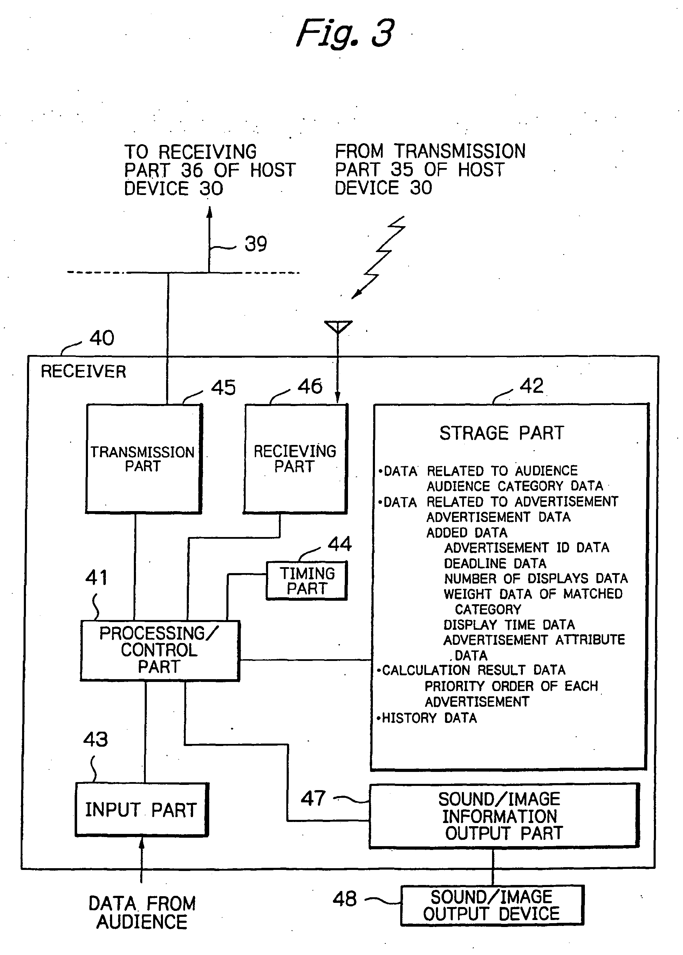

Fig. 3 illustrates a configuration of an apparatus on the receiving side in the advertisement display controlling system of the present invention. The main part of the apparatus on the receiving side is the receiver 40.

The receiver 40 is provided with a processing/control part 41. A storage part 42, an input part 43, a timing part 44, a transmission part 45, a receiving part 46 and a sound/image information output part 47 are connected to the processing/control part 41.

The processing/control part 41 performs processing for overall control of the receiver 40, control of display of an advertisement, control of management of history data concerning display states of each advertisement, and the like.

The receiver 40 receives program(show) data, and advertisement data and additional data 38 relating to the advertisement, processes the received data in the processing/control part 41, and outputs the processed data to a sound/image output device 48 via the sound/image information output part 47. In addition, the receiver 40 is a receiving device for communicating with and receiving arbitrary wire and wireless broadcasts and telecommunications such as a CS, BS, terrestrial TV, cable, etc.

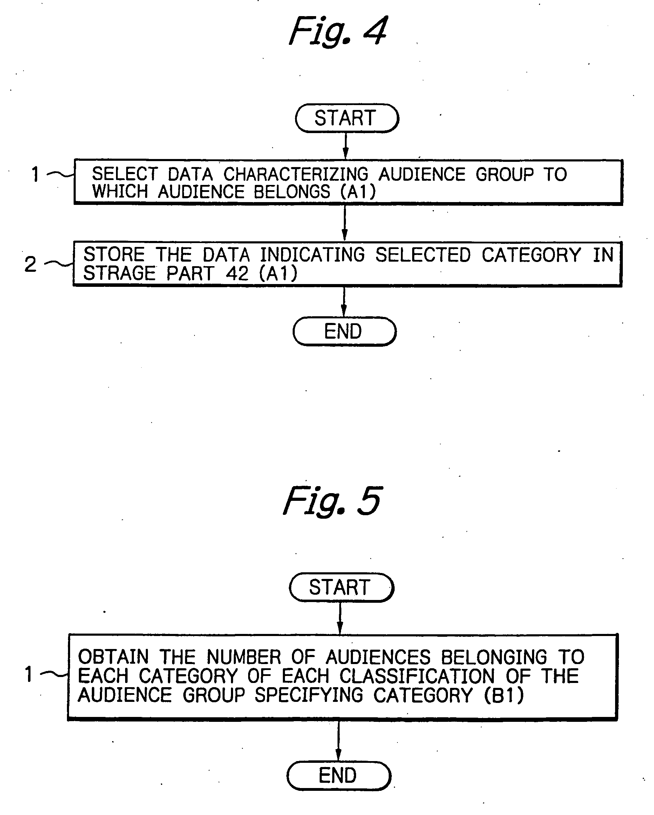

A first exemplified embodiment of operations of an advertisement display controlling system will now be described with reference to Figs. 4 to 16. In this embodiment, the display period (control coefficient Tx), the audience groups specifying category (control coefficient Cpq), the predetermined display order (control coefficient Jn), the average number of times of display (control coefficient Ka), the preferred display time (control coefficient Hx) and the tastes of the audience (advertisement attribute) (Fx), which are shown in Fig. 1, are used as calculation elements of a priority order of advertisements.

Fig. 4 shows preparation steps on the receiving side, that is, the receiver 40.

A. Preparation step on the receiving side:

A1. In step 1, the viewer/listener of the receiver 40 selects data characterizing an audience group to which the viewer/listener belongs out of, for example, a plurality of categories indicated in audience group specifying category data described in a questionnaire sheet, a mark sheet or the like that are prepared on the transmitting side (a company operating a broadcasting business using the host device 30, etc.) and supplied to the viewer/listener. In step 2, the viewer/listener stores the data indicating the selected categories in the storage part 42 via the input part 43 and the processing/control part 41.

In addition, the system may be configured such that, on the receiver 40, an inputting device such as a GUI and a keyboard, etc., is provided with the input part 43, software for selecting a category from the audience group specifying category data is loaded in the storage part 42, and the audience group specifying category data is displayed on the sound/image output device 48, whereby a category is selected and inputted using the above input device.

The audience groups specifying category data is classified into a plurality of main items, and each item is sub-classified into a plurality of categories. This sub-classification is hereinafter referred to as a category. Referring to the example of Fig. 1, the audience group specifying category data is classified into four main classifications (items) of region (Cax), sex (cbx), age (Ccx) and hobby (Cdx). Moreover, the classification Cax is sub-classified into m categories of region A (Ca1) to region m (Cam); the classification Cbx is sub-classified into two categories of male (Cb1) and female (Cb2); the classification Ccx is sub-classified into five categories of 19 years old or under (Cc1) to 65 years old or over (Cc5); and the classification Cdx is sub-classified into three categories of hobby A (Cd1) to hobby C (Cd3). In this embodiment, for example, if the viewer/listener of the receiver 40 lives in the region A, is a male, 19 years old or under, and has the hobby C, the viewer/listener selects the categories Ca1, Cb1, Cc1 and Cd3, inputs the data from the input part 43 as personal data, and stores the data in the storage part 42.

In addition, data indicating a channel number (the name of a broadcasting company) of a pay broadcast that the viewer/listener subscribes to, and other data (e.g., data indicating a telephone number, a credit card number, the name of a place of employment. etc.) may be further included in the personal data.

Also, although it is optional, by registering the personal data in the storage part 32 of the host device 30, it becomes possible to produce various kinds of audience data. The method of communicating the personal data to the host device 40 is arbitrary, and which includes, for example, a method of directly transmitting from the, transmission part 45 of the receiver 40 to the receiving part 36 of the host device 30 through a line 39 such as a telephone line, a method of writing on paper and transmitting by facsimile, mail or the like, a method of recording in a recording medium such as a magnetic disk or an optical disk and transmitting by mail or the like, and a method of orally communicating through a telephone or the like.

In addition, for example, in the case in which a plurality of viewers/listeners with members in different age groups, sexes, hobbies, etc., (for example, a family) use one receiver or the case in which one viewer/listener has a plurality of hobbies, it is necessary to designate a plurality of categories in each main classification in order to reflect all the characteristics. Therefore, the system can be configured such that the viewer/listener of the receiver 40 can select a plurality of categories in one classification, and a plurality of viewers/listeners can be separately registered on the receiver in advance. If a plurality of viewers/listeners are separately registered on the receiver in advance, for example, selection buttons for identifying each viewer/listener are provided with the receiver, and each viewer/listener presses a selection button for identifying the viewer/listener when the viewer/listener uses the receiver (views and listens to a program).

The storage part 42 of the receiver 40 stores a computer program for performing the above steps.

Fig. 5 shows a step for analyzing audience data on the broadcasting side, that is, the host device 30.

B. Audience data analyzing step on the broadcasting side:

B1. In step 1, the host device 30 obtains the number of viewers/listeners (Sa1 to Sd3) belonging to each category (Ca1 to Cd3) of each classification of the audience group specifying category, with respect to residents in an area in which a broadcast can be received. The method of obtaining the number of viewers/listeners is arbitrary. For example, if personal data transmitted form the transmission part 45 of the receiver 40 is received by the receiving part 36 and stored in the storage part 32, the number of viewers/listeners for each category can be calculated by the processing/control part 31 based on the data. If data is obtained by a market research or the like concerning the residents, the number of viewers/listeners for each category which is obtained based on the data is stored in the storage part 32 from the input part 33 through the processing/control part 31.

In this example, reference symbol Sa1 denotes the number of viewers/listeners belonging to the category Ca1 and reference symbol Sa2 denotes the number of viewers/listeners belonging to the category Ca2. Similarly, in the description below, among reference symbols representing categories and reference symbols representing the numbers of viewers/listeners, reference symbols having two characters on the right side in common are related.

The number of viewers/listeners to be targets of an advertisement, that is, the size of the market can be seen from the number of viewers/listeners belonging to each category. The size of a market can be used as a standard in determining an outline of the number or the period of displaying an advertisement. In addition, it becomes possible to estimate an effect of the advertisement, that is, the number of viewers/listeners who watch the advertisement; and the data can be utilized when selling an advertisement frame. In addition, the number of receivers may be counted instead of the number of viewers/listeners belonging to each category.

The method for obtaining personal data to be used for calculating the number of viewers/listeners (the number of receivers) belonging to each category is arbitrary. For example, if a large number of pieces of personal data are registered in the host device 30 in the above step A1, it is possible to use the same.

As another method of obtaining personal data, for example, market research (a questionnaire or the like taken by paper, orally, etc.) is performed in one region where advertisement data can be received; personal data of residents is obtained; and the number of residents belonging to each category of the audience group specifying category is aggregated. The personal data of residents may be obtained by selecting residents at random by using a method such as a spot check, rather than selecting all the residents. The number of residents belonging to each category among all the residents can be approximately calculated by calculating a percentage of the number of residents belonging to each category from the personal data obtained from randomly selected residents and multiplying the percentage to the total number of residents. Moreover, as one method of calculating the number of receivers held by viewers/listeners belonging to each category, for example, it is advisable to multiply the total number of residents by the prevalence of the receiver.

For example, in the case in which an advertisement A targets a viewer/listener belonging to a category Cx2 of a classification Cxx of the audience group specifying category data, the total number of residents in an area where a broadcast can be received is 10,000, the prevalence of the receiver with respect to the number of residents is 90 percent, and 5 percent of the residents belong to the category Cx2, the number of receivers in which the advertisement A is stored can be calculated as 450 (= 10,000 x 0.9 x 0.05).

Moreover, the number of viewers/listeners belonging to each category is checked for each channel (Chl to Chn), that is, it is checked how many viewers/listeners belong to which category of which classification of which channel. For example, data are obtained such as how many viewers/listeners belong to the categories Ca1, Ca2, Ca3, ..., Cd2 and Cd3 of the classification Cax of the channel 1, how many viewers/listeners belong to the categories Ca1, ... of the classification Cax of the channel 2, and how many viewers/listeners belong to the categories Ca1, ... of the classification Cax of the channel 3 and so on, whereby more detailed data can be prepared. For example, such data can be approximately calculated by obtaining the number of viewers/listeners belonging to each category among all the viewers/listeners and a rating of each channel, and multiplying them together.

If personal data (including data indicating an audience group to which each viewer/listener belongs, data indicating a channel number such as that for a pay broadcast that each viewer/listener subscribes, and other data) can be obtained from many viewers/listeners of many receivers, more detailed data can be prepared in the host device 30.

The data, which is stored in the storage part 32 and indicates the number of viewers/listeners (receivers) belonging to each category, is used in calculating the upper limit display number (control coefficient Ku) of the second embodiment to be described later.

The storage part 32 of the host device 30 stores a computer program for performing the above step.

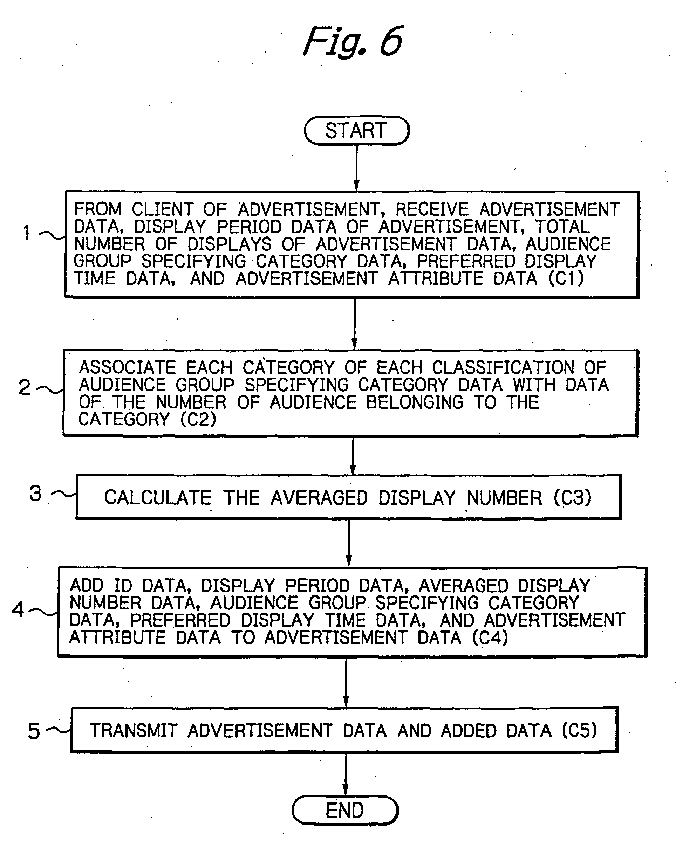

Fig. 6 indicates steps for preparing and transmitting advertisement data on the broadcasting side, that is, the host device 30.

C. Advertisement data preparing and transmitting steps on the broadcasting side:

C1. In step 1, the host device 30 receives, from a client of an advertisement, advertisement data, display period data of the advertisement, data indicating the total number of times of display of the advertisement, data for characterizing an audience group targeted by the advertisement (audience group specifying category data), data indicating a time slot in which the advertisement is desired to be displayed (preferred display time data), and data indicating a field of the advertisement (advertisement attribute data), inputs the data from the input part 33, and stores the data in the storage part 32 via the processing/control part.

The advertisement data is data representing images and sounds of an advertisement. The display period data is data representing, for example, a final date of display, the number of days to display an advertisement, etc. The data indicating the total number of times of display of the advertisement is data indicating the ordered number of times of display. The audience group specifying category data is data specifying audience groups targeted by the advertisement (the audience group specifying category of Fig. 1). The preferred display time data is data indicating a time slot (time of day) in which the advertisement is preferred to be preferentially displayed. The advertisement attribute data is data indicating a field (an advertisement attribute) to which goods to be publicized by the advertisement belongs. The advertisement attribute is classified as, for example, cars, insurance, foods or the like.

A sponsor assigns in advance a value representing a weight to each category of each classification of the audience group specifying category data, in order to specify an audience group targeted by an advertisement.

The sponsor selects a category indicating an audience group targeted by an advertisement out of a plurality of categories indicated in the audience group specifying category data which is described in a sheet such as a questionnaire sheet and a mark sheet that is prepared on the transmitting side (company operating a broadcasting business using the host device 30, or the like) and supplied to the sponsor, and enters the category into the sheet. The sponsor then determines and enters a value indicating how much a viewer/listener belonging to the selected category is regarded to be important (a value indicating importance). Then, the data which indicates the category indicating the audience group targeted by the advertisement, and the data which indicates the value indicating the degree of importance assigned to the category, which was entered in the above sheet, is associated with the advertisement data and stored in the storage part 32 from the input part 33 of the host device 30 via the processing/control part 31.

In addition, the host device 30 may be configured such that an input device such as a GUI and a keyboard is provided with the input part 33, software for selecting categories from the audience group specifying category data and assigning values indicating importance of the selected categories is loaded in the storage part 32, the audience group specifying category data is displayed on the host device 30, and categories are selected and values for the selected categories are determined and inputted by using the above input device.

In the example of Fig. 1, the audience group specifying category data is classified into four main classifications of Cax, Cbx, Ccx and Cdx, and each classification is sub-classified into a plurality of categories (Ca1 to Cam, Cb1 to Cb2, Cc1 to Cc5, Cd1 to Cd3).

A sponsor assigns a large value to a category to which the sponsor attaches importance. In addition, the sponsor distributes numerical values such that the total of values to be assigned to the categories in one classification is 100. For example, in the classification Cbx (sex) of the advertisement CM1, 80 is assigned to the category Cb1 (male) and 20 is assigned to the category Cb2 (female), and the total of these values is 100. This indicates that CM1 targets both male and female, but male is regarded to be more important than female with the ratio of 80 to 20. Also, for example, in the classification Cdx of CM5, 90 is assigned to the category Cd1, 0 is assigned to the category Cd2, and 10 is assigned to the category Cd3. This indicates that an audience group belonging to the category Cd1, an audience group belonging to the category Cd2 and an audience group belonging to the category Cd3 are attached importance at the ratio of 90 to 0 to 10. Further, the value of 0 means that the audience group is not considered as a target at all.

In addition, the sponsor assigns a value representing a weight to each time slot of the preferred display time data in order to specify a time slot(s) in which the sponsor wishes to display an advertisement.

The sponsor selects a time slot (one or a plurality of time slots) in which the sponsor wishes to display an advertisement preferentially out of a plurality of time slots indicated in the preferred display time data described on the above sheet such as a questionnaire sheet and a mark sheet, and determines and enters a value indicating the degree of importance the sponsor attaches to the time slot (a value indicating importance). The sponsor then associates the preferred display time data, which indicates the selected time slot(s) and the assigned value indicating the importance of the time slot, with the advertisement data, and stores the data in the storage part 32 from the input part 33 of the host device 30 via the processing/control part 31.

Also, the host device 30 may be configured such that an inputting device such as a GUI and a keyboard is provided with the input part 33, software for selecting a time slot out of the preferred display time data and assigning a value indicating importance is loaded in the storage part 32, the preferred display time data is displayed on the host device 30, and a time slot(s) is selected and a value(s) for the selected time slot(s) is determined and inputted by using the above input device.

In the example of Fig. 1, the preferred display time data is classified into six time slots of H1 (1 o'clock to 5 o'clock), H2 (5 o'clock to 9 o'clock), H3 (9 o'clock to 13 o'clock), H4 (13 o'clock to 17 o'clock), H5 (17 o'clock to 21 o'clock) and H6 (21 o'clock to 1 o'clock). A sponsor assigns a larger value to a time slot in which the sponsor wishes to display an advertisement, that is, a time slot to which the sponsor attaches importance. In addition, the sponsor distributes numerical values such that the total of values assigned to all the time slots is 100. For example, in the advertisement CM4, 0 is assigned to the time slots H1, H2 and H3, 20 is assigned to H4, 60 is assigned to H5, and 20 is assigned to H6, and the total of these values is 100. This indicates that the sponsor attaches importance to the time slots of H1, H2, H3, H4, H5 and H6 at the ratio of 0 to 0 to 0 to 20 to 60 to 20, and wishes that the advertisement is displayed preferentially in the time slots of H4, H5 and H6 (especially in the time slot of H5). Further, the value of 0 means that the sponsor does not wish the advertisement to be displayed in the time slot.

Moreover, the sponsor designates an advertisement attribute in order to specify a field to which the good to be publicized by the advertisement (attribute) belongs. The advertisement attribute includes, for example, car, food, electric appliance, and so on. As described above, an advertisement attribute that coincides with an attribute of the advertisement is selected out of advertisement attribute data described in a sheet such as a questionnaire sheet and a mark sheet, the advertisement attribute data indicating the advertisement attribute is associated with the advertisement data, and the data is stored in the storage part 32 from the input part 33 of the host device 30 via the processing/control part 31. Also, the host device 30 may be configured such that an inputting device such as a GUI and a keyboard is provided with the input part 33, software for selecting an advertisement is loaded in the storage part 32, the advertisement attribute data is displayed on the host device 30, and an advertisement attribute is selected and inputted using the above input device.

In the example of Fig. 1, an advertisement attribute is indicated in the column of the calculation element name "taste of an audience (advertisement attribute)." The advertisement attribute of the advertisements CM1, CM2, CM4 is F1, the advertisement attribute of CM3 and CM6 is F2, and the advertisement attribute of CM 5 is F3. The symbols F1 to F3 shown here indicate advertisement attributes, that is, fields to which advertisements (goods publicized by advertisements) belong.

C2. In step 2, the processing/control part 31 associates each category (Ca1 to Cd3 of Fig. 1) of each classification of the audience group specifying category data stored in the storage part 32 with data of the number of viewers/listeners belonging to the category (Sa1 to Sd3). (Sa1 to Sd3 are used in a step for calculating the upper limit display number that will be described in the description of the operation of the second embodiment of the advertisement display controlling system.)

C3. In step 3, the processing/control part 31 calculates the averaged display number for each stored advertisement. The averaged display number is obtained by dividing the ordered total number of times of display of an advertisement by the number of all receivers to find the display number which is the average and is the required minimum display number for each of all the receivers (the averaged minimum display number), and multiplying the averaged minimum display number by a coefficient.

However, as described above, some of all the receivers may not store the advertisement or, even if they store the advertisement, some of them may not be able to complete the averaged minimum display number within a predetermined period. Therefore, it is difficult to attain the ordered total number of times of display of an advertisement if the averaged minimum display number calculated for the advertisement is assigned to a receiver storing the advertisement. Therefore, by multiplying the averaged minimum display number by a coefficient, the display number (averaged display number), which gives each receiver storing the advertisement scope for offsetting (mutually supplementing) a shortage of the number of times of displaying the advertisement, defines an upper limit of the display number for avoiding the advertisement to be displayed on each receiver too many times, and is assigned equally, is determined.

The value of the coefficient multiplying the averaged minimum display number becomes small, for example, if it is determined that the advertisements is aimed at an audience group including the large number of people, that is, the number of receivers storing the advertisement is large. To the contrary, the value becomes large if it is determined that the advertisements is aimed for an audience group including the small number of people, that is, the number of receivers storing the advertisement is small. The value of the coefficient can be experientially determined from, for example, data of display results of advertisements in the past, data concerning the number of people of an audience group or the like obtained by a questionnaire or the like described in the above item A, and data concerning an audience group that is targeted by an advertisement and is designated by the sponsor.

For example, it is assumed that the ordered total number of times of display is 10,000 for an advertisement belonging to a certain field, and the number of all receivers is 500. In addition, it is assumed that a percentage of receivers in which an advertisement belonging to a field is stored is statistically known to be 50 percent from data in the past or the like. In such a case, the averaged minimum display number for each receiver among all the receivers is 20 (10,000/500). This averaged minimum display number (20) is divided by the percentage of receivers in which the advertisement belonging to the field is stored (50 percent, i.e., 0.5). ((10,000/500)/0.5 = 40). That is, the percentage of receivers in which the advertisement belonging to the field is stored is applied to the averaged minimum display number as a coefficient. In this way, the number of times of displays of the advertisement that is at least required on each receiver storing the advertisement is approximately calculated. By further applying a coefficient to give scope to this value of the number of times of displays, the averaged display number is determined.

C4. In step 4, the processing/control part 31 adds ID data, display period data, audience group specifying category data (Ca1 to Cd3), preferred display time data (Hx), advertisement attribute data (F1 to F3) and averaged display number data to the advertisement data stored in the storage part 32, and prepares data for transmission to the receiver 40. ID data of an advertisement is data indicating an identification number of the advertisement, and is assigned when an order for an advertisement is received or when advertisement data is stored.

Steps similar to C1 to C4 are applied to other advertisements, and the advertisement data is associated with the additional data.

C5. In step 5, the processing/control part 31 makes one package by combining a plurality of pairs of the advertisement data and the additional data, and transmits the package from the transmission part 35 to the receiver 40 on occasion or periodically. A package may include only one pair of the advertisement data and the additional data. Although the advertisement data and the additional data may be transmitted by any wired system or wireless system, the data is transmitted by a wireless system in this example. (In the case of the first embodiment, since data of the number of viewers/listeners Sa1 to Sd3 is not used on the receiver 40, the data of the number of viewers/listeners may not be included in the additional data to be transmitted.)

Steps similar to the above items C1 to C5 (steps 1 to 5) are applied to an advertisement whose order is received anew.

The storage part 32 of the host device 30 stores a computer program for performing the above steps.

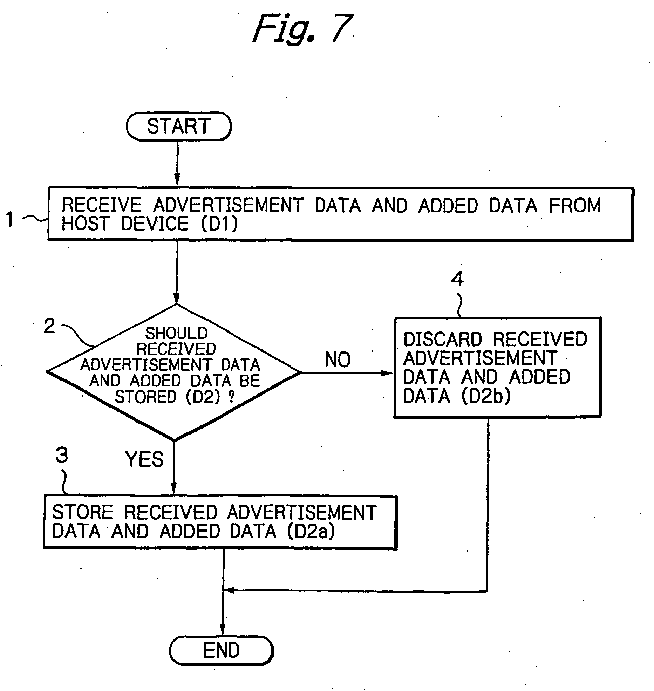

Fig. 7 describes advertisement data receiving, selecting and storing steps on the receiving side, that is, on the receiver 40.

D. Steps for receiving, selecting and storing advertisement data on the receiving side:

D1. In step 1, the receiver 40 receives a package of the advertisement data and the additional data, which is transmitted from the transmission part 35 of the host device 30 in wireless manner, by the receiving part 46.

D2. In step 2, the processing/control part 41 compares the audience group specifying category data (Ca1 to Cd3) among the additional data added to each piece of received advertisement data and the data indicating a category to which the viewer/listener belongs among the personal data stored on the receiver 40, and, based on results of the comparison, determines whether or not the advertisement data and the additional data to be stored in the storage part 42. In this comparison, categories corresponding to categories indicated in the personal data out of categories included in the audience group specifying category data in the received additional data are extracted, and it is examined whether or not the sponsor selected the categories which were selected by the viewer/listener, that is, whether or not a numerical value is assigned to the categories.

In this example, it is assumed that data indicating the categories Ca1 (region A), Cb1 (male), Cc1 (19 years old or under) and Cd3 (hobby C) is included in the personal data stored in the storage part 42. The processing/control part 41 examines the categories Ca1, Cb1, Cc1 and Cd3 in the audience group specifying category data (Ca1 to Cd3) in the received additional data, and examines whether or not the sponsor selected these categories, that is, whether or not numerical values are assigned to those categories.

D2a. If a numerical value other than zero is assigned to any of the above four categories, it is determined that the audience group selected by the sponsor and the audience group to which the viewer/listener belongs coincide with each other at least partially, and the processing/control part 41 stores the advertisement data and the additional data in the storage part 42 in step 3.

D2b. If the numerical value zero is assigned to all of the above four categories, it is determined that there is no coincidence, and the processing/control part 41 discards the advertisement data and the additional data without storing them in step 4.

A criterion in the above selection for determining whether or not the advertisement data is stored in the storage part 42 is based on whether or not the numerical value zero is assigned to all of the categories selected by the viewer/listener. However, as another method, for example, it is possible to determine whether or not an advertisement is stored based on a total of values assigned to each category selected by the viewer/listener. For example, it is possible to define the criterion that only an advertisement having a total value larger than a predetermined value is stored.

Moreover, if the same advertisement has already been received, it is to be discarded.

The storage part 42 of the receiver 40 stores a computer program for performing the above steps.

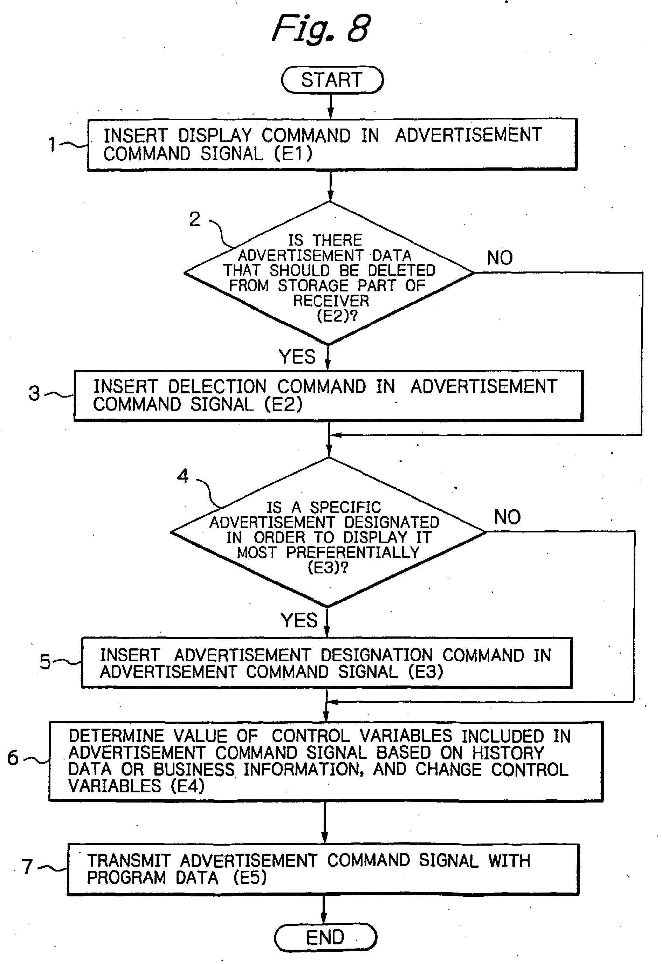

Fig. 8 describes advertisement command signal producing steps on the transmitting side, that is, in the host device 30.

E. Steps for producing an advertisement command signal on the transmitting side:

E1. The host device 30 produces an advertisement command signal to be transmitted together with program (show) data from the transmission part 35. The advertisement command signal includes a display command, a deletion command, a control variable application command, an advertisement designation command and the like.

In step 1, the processing/control part 31 of the host device 30 inserts a display command in an advertisement command signal. The display command is a command for causing the processing/control part 41 of the receiver 40 to read out an advertisement from the storage part 42 and display it. The display command includes a signal indicating that an advertisement time slot begins when a predetermined time (e.g., 10 seconds) passes from the receipt of the advertisement command signal, and a length of the advertisement time slot (e.g., 180 seconds). The above predetermined time is set to be longer than a length of time from a time when the receiver 40 receives the advertisement command signal at the receiving part 46 to a time when the receiver 40 completes preparation for displaying the advertisement.

Also, the length of the advertisement time slot can be freely set in the host device 30 for a program (show) whose schedule is not decided such as a live broadcast.

E2. In step 2, the processing/control part 31 determines whether or not there is advertisement data that should be deleted from the storage part 42 of the receiver 40 and, if there is such advertisement data, inserts a deletion command in the advertisement command signal in step 3. The deletion command is a command for deleting an advertisement whose ordered total number of times of display has completed, an advertisement for which the data indicating that its continuation is determined to be terminated is stored in the storage part 32 via the input part 33, or the like, from the storage part 42 of the receiver 40. A judgement as to whether or not the ordered total number of times of display is completed is made based on a result of aggregation of history data fed back from each receiver 40. History data will be described in item H below.

E3. In step 4, the processing/control part 31 determines whether or not it has received an instruction to display a specific advertisement most preferentially. This instruction is issued by a sponsor, and if a specific advertisement is wished to be displayed most preferentially, ID data of the advertisement is inputted from the input part 33 together with the instruction. If the instruction to display the specific advertisement most preferentially is received, and if the ID data of the advertisement has been inputted, the processing/control part 31 prepares an advertisement designation command and inserts it in the advertisement command signal in step 5. The advertisement designation command is a command for instructing that the specific advertisement be displayed most preferentially, and the ID data of the advertisement that should be displayed most preferentially is included in this command.

When the receiver 40 receives the advertisement command signal, if an advertisement designation command is included in it and an advertisement corresponding to the ID data indicated in the advertisement designation command exists in the storage part 42, the advertisement is read out of the storage part 42 and displayed. If the advertisement does not exist, advertisements are displayed according to the priority order.

E4. In step 6, the processing/control part 31 changes a value of the control variable Xn included in the control variable application command of the advertisement command signal, based on the result of collection of the history data fed back from each receiver 40 or business information (including, for example, an instruction from a sponsor). The control variable application command is a command for instructing the processing/control part 41 of the receiver 40 to change a value of a coefficient (a variable Xn) to be applied to each of the six kinds of control coefficients (Tx, Kt, Jn, Cpq, Hx and Fx).

For example, if it is determined from the history data that advertisement data having a large remaining number of times of displays despite the fact that a display deadline is approaching is stored in the storage part 42 of the receiver 40, in the cases in which a sponsor instructs to promptly complete the ordered number of times of displays of a specific advertisement, in the case in which it is necessary to promptly complete the display (the ordered number of times of display) of a specific advertisement due to some reason, or the like, it is necessary to raise the priority order of the advertisement higher in order to display it more. That is, in order to raise the priority order of the advertisement higher, it is necessary to increase a value(s) of the coefficient(s) to be the basis of the priority order. In such a case, a value of the coefficient (variable Xn) applied to each of the six kinds of control coefficients (Tx, Ka, Jn, Cpq, Hx and Fx) is changed, and a value of each control coefficient is varied, whereby the priority order of the display of the object advertisement is raised. A method of determining a control variable will be described in item H5b below.

E5. In step 7, the processing/control part 31 transmits the advertisement command signal from the transmission part 35 to the receiver 40 together with the program (show) data. Although the program data and the advertisement command signal can be transmitted in any wire or wireless broadcasting form, they are multiplexed or superimposed and transmitted in wireless manner.

Timing for transmitting the advertisement command signal is determined based on program (show) schedule data stored in the storage part 32. The program schedule data includes, for example, starting and ending times of an advertisement frame (advertisement slot), and, taking into consideration the time that the receiver 40 requires to read out the stored advertisement and completes preparation for display, the advertisement command signal is transmitted just before the start of the advertisement frame.

In the case of a broadcast whose starting and ending times of an advertisement frame are not decided, such as in the case of a live broadcast, an operator of the host device 30 inputs from the input part 33, at an appropriate time, an instruction to transmit the advertisement command signal.

The storage part 32 of the host device 30 stores a computer program for performing the above steps.

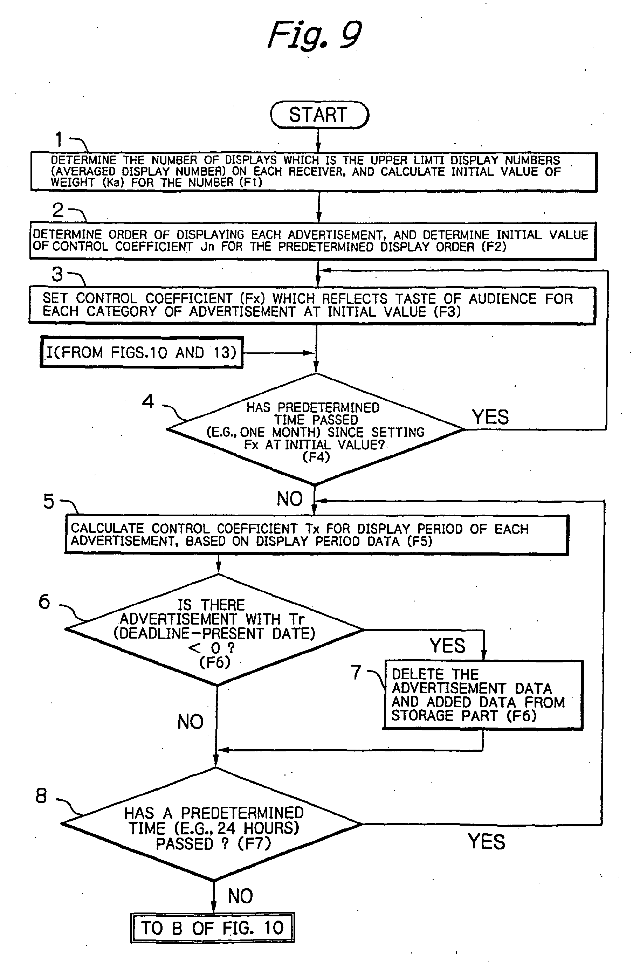

Figs. 9, 10, 11, 12 and 13 show one continuous flow chart and describe steps for determining a priority order of stored advertisement data and displaying advertisements on the receiving side, that is, on the receiver 40.

F. Steps for determining a priority order of stored advertisement data and displaying advertisements on the receiving side:

F1. In step 1 of Fig. 9, the processing/control part 41 of the receiver 40 determines an initial value of a value representing a weight for the averaged display number of each advertisement stored on each receiver (the control coefficient Ka of Fig. 1), based on the averaged display number data (the averaged display number) in the additional data of the advertisement data that was received from the host device 30 and stored in the storage part 42. The control coefficient Ka is obtained by multiplying the remaining number of times of displays until the averaged display number is reached by a coefficient (i.e., Ka = remaining number of times of display x coefficient). For example, if a value of the control coefficient Ka is desired to be the same as a value of the remaining number of times of display, the coefficient to multiply the remaining number of times of display is set to 1 and a value of a control variable X7 to be applied later in step 23 is set to 1.

One is deducted from the remaining number of times of displays each time the advertisement is displayed. When the remaining number of times of display reaches zero, the control coefficient Ka becomes zero. An advertisement with its control coefficient Ka reached zero is not displayed any more.

In the example of Fig. 1, the values of the control coefficient Ka is 40 for CM1, 100 for CM2, 50 for CM3, 40 for CM4, 70 for CM5, and 30 for CM6. In the case that the processing/control part 41 determines a priority order of advertisement based only on the values of the control coefficient Ka at this point, the priority order is CM2, CM5, CM3, CM1 and CM4, and CM6 from the top.

F2. In step 2, the processing/control part 41 predetermines an order for displaying each stored advertisement and determines an initial value of a value representing a weight for the predetermined display order (the control coefficient Jn of Fig. 1).

An initial predetermined display order may be determined by any appropriate method. For example, a method of assigning a higher predetermined display order to an advertisement stored earlier, a method of assigning a predetermined display order in the order of an alphabet or the number of an ID number added to each advertisement data, or the like may be used.

In assigning an initial control coefficient Jn, a control coefficient for an advertisement of the lowest predetermined display order is set to be a predetermined minimum value, and a predetermined increment value is added each time the predetermined display order is up by one. In the example of Fig. 1, the minimum value of the control coefficient Jn is set to 1,000, and the increment value is set to 100. In the example of Fig. 1, CM6 is the lowest in the predetermined display order, thus, the value of its control coefficient is 1,000. The predetermined display order of CM5 is the second lowest, and the value of its control coefficient is 1,000 + 100, that is, 1,100. The predetermined display order of CM4 is the third lowest, and the value of its control coefficient is 1,100 + 100, that is, 1,200. The value of the coefficient that is calculated in the similar manner is 1,500 for CM1, 1,400 for CM2 and 1,300 for CM3.

The control coefficient Jn of each advertisement is updated when the advertisement is displayed. That is, the processing/control part 41 makes the value of the control coefficient Jn for the displayed advertisement lower, and makes the value of the control coefficient Jn for advertisements that are not shown higher. A method of updating the control coefficient Jn will be described in detail in item F22 below.

In the case that the processing/control part 41 determines a priority order of advertisements based only on the value of the control coefficient Jn at this point, the priority order is CM1, CM2, CM3, CM4, CM5 and CM6 from the top.

F3. In step 3, the processing/control part 41 assigns an initial value to a value reflecting a taste (preference) of a viewer/listener (the control coefficient Fx) for a field of each stored advertisement (advertisement attribute). That is, initially, the processing/control part 41 of the receiver 40 assigns a same initial value to all the advertisement attributes and stores it in the storage part 42.

The input part 43 of the receiver 40 is provided with voting buttons with which a viewer/listener expresses (votes on) whether the viewer/listener likes or dislikes an advertisement that the viewer/listener is viewing/listening to ("like button" and "dislike button"). When a viewer/listener presses the "like button" while an advertisement is displayed, values of the control coefficient Fx for all advertisement having the same advertisement attribute as the advertisement attribute of the advertisement are increased. When a viewer/listener presses the "dislike button," values of the control coefficient Fx for all advertisement having the same advertisement attribute as the advertisement attribute of the advertisement decreases. Operations for these voting buttons will be described in detail in item F23 below (description of step 33).

For the value of the control coefficient Fx, an upper limit value is set such that it does not increase too much, that is, the priority of an advertisement(s) having a specific advertisement attribute does not become too high, and a lower limit value is set such that the priority of an advertisement(s) having a specific advertisement attribute does not become too low. The above initial value is set at, for example, a value in the middle of the upper limit value and the lower limit value.

In the example of Fig. 1, the initial value is 50, the lowest limit value is 0, and the upper limit value is 100, and, in Fig. 1, the values of the control coefficients Fx for attributes of respective advertisements after the voting buttons are pressed a plurality of times are indicated. In Fig. 1, the value of the control coefficient Fx for the advertisement attribute (F1) of the advertisements CM1, Cm2 and CM4 is 70, which indicates that the "like button" has been pressed more. The value of the control coefficient Fx for the advertisement attribute (F2) of CM3 and CM6 is 20, which indicates that the "dislike button" has been pressed more. The value of the control coefficient Fx for the advertisement attribute (F3) of CM5 is 50, which indicates that the voting buttons have not been pressed or the "like button" and the "dislike button" have been pressed the same number of times. In the case that a priority order of advertisements is determined based only on the values of the control coefficient Fx at this point, CM1, CM2 and CM4 at the top, CM3 and CM6 are at the second place, and CM5 is at the third place of the priority order.

F4. In step 4, the processing/control part 41 determines whether or not a predetermined period (for example, one week, one month, etc.) has passed after setting the control coefficient Fx at an initial value, based on the data which is the basis of date and time and is obtained from a timing part 44. If the predetermined period has passed, the operation step returns to step 3 and resets the control coefficient Fx for all the advertisements to the initial value. If the predetermined period has not passed, the operation step proceeds to step 5.

If a value of the control coefficient Fx for an advertisement having a specific attribute is maintained to be high over a certain period, the other advertisements tend to be displayed less during the period. Also, to the contrary, if a value of the control coefficient Fx for an advertisement having a specific attribute is maintained to be low over a certain period, the advertisement tends to be displayed less during the period. When the efficiency of advertisements is taken into consideration, it is not preferable to maintain a biased displaying period of advertisements reflecting a taste of a viewer/listener, as described above, excessively long. Therefore, the control coefficient Fx for every advertisement is reset to an initial value when a predetermined period has passed.

Also, it may be possible to configure the system such that, when the control coefficient Fx for any advertisement attribute reaches an upper limit value or a lower limit value, the control coefficient Fx for every advertisement is reset to an initial value. By this configuration, for example, a situation in which a value of the control coefficient Fx only for an advertisement having a specific attribute is increased and the priority of the advertisement becomes higher, whereby display of the other advertisements is excessively disturbed, can be prevented. In addition, to the contrary, a situation in which a value of the control coefficient Fx only for an advertisement having a specific attribute is decreased and the priority of the advertisement becomes lower, whereby the display of the advertisement is excessively disturbed, can be prevented.

F5. In step 5, the processing/control part 41 determines a value representing a weight for a display period of each stored advertisement, that is, a weight for a remaining display period (the control coefficient Tx of Fig. based on the display period data in the additional data of the advertisement data stored in the storage part 42. The control coefficient Tx is calculated as described below.

i. A total display period (Tt) is obtained based on the date of a deadline of display and the data when an advertisement is sent to a receiver.

$$\texttt{Tt = (Deadline date) - (Advertisement transmitted date)}$$

ii. A remaining display period (Tr) is obtained based on the date of the deadline of display and the present date.

$$\texttt{Tr = (Deadline date) - (Present date)}$$

iii. A ratio of the remaining display period to the total display period is obtained, and the ratio is multiplied by a coefficient (1,000 in this example) to obtain a value Tx'.

$$\texttt{Tx' = (Tr/Tt) x 1,000}$$

The shorter the remaining display period the smaller the value Tx' becomes.

iv. The period coefficient Tx' is subtracted from a predetermined coefficient (1,000 in this example) to obtain a period coefficient Tx.

$$Tx = 1,000 - Tx'$$

Data to be the basis of date and time in calculating the remaining display period is generated in the timing part 44. If a display period is calculated by a unit of one day, the processing/control part 41 calculates the control coefficient Tx and updates the value every time one day passes (i.e., everyday) (see step 8). The control coefficient Tx becomes a maximum value (1,000) when the remaining display period reaches zero.

However, there may be an advertisement for which the display period is only one day and, in this case, the date of the deadline of display and the date when an advertisement is transmitted (the date to start displaying of the advertisement) become the same. In such a case, the value of the total display period (Tt) obtained in the above step i is zero. If Tt = 0, an answer for the expression of the following step iii cannot be obtained. Therefore, the processing/control part 41 determines whether Tt is zero or not immediately after the above step i. If Tt is zero, the processing/control part 41 assigns a maximum value to the control coefficient Tx without performing the above steps ii to iv, and if Tt is not zero, the processing/control part 41 performs the above steps ii to iv to calculate Tx.

In the example of Fig. 1, the value of the control coefficient Tx is 800 for CM1, 700 for CM2, 400 for CM3, 300 for CM4, 500 for CM5, and 100 for CM6. In the case that the processing/control part 41 determines a priority order of the advertisements based only on the values of the control coefficient Tx at this point, the priority order is CM1, CM2, CM5, CM3, CM4 and CM6 from the top.

F6. In step 6, the processing/control part 41 examines each advertisement to find if an advertisement for which value of Tr (a value obtained in step ii of the above step 5), that is, the value obtained by subtracting the present date from the date of the deadline is smaller than zero is stored. If there is an advertisement for which Tr < 0, the advertisement data and additional data is deleted from the storage part 42 in step 7. Note that the ID data of the advertisement and history data concerning the display states of the advertisement (which will be described in the description below) stored in the storage part 42 is retained in the storage part 42 until it is transmitted to the host device 30.

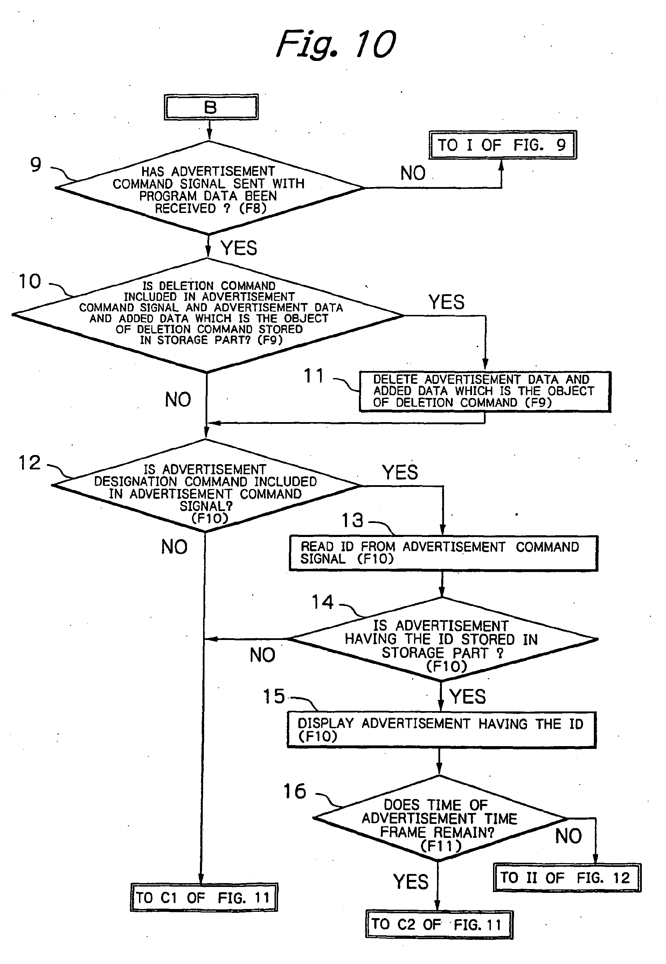

F7. Next, in step 8, the processing/control part 41 examines whether or not a predetermined time, for example, one day has passed, based on the data to be a basis of date and time obtained from the timing part 44. If the predetermined time has passed, the operation of the processing/control part 41 returns to step 5, and the control coefficient Tx is calculated again. If the predetermined time has not passed, the operation proceeds to step 9 of Fig. 10.

F8. In step 9 of Fig. 10, the receiver 40 waits for an advertisement command signal to be transmitted with program (show) data from the transmission part 35 of the host device 30. If the receiving part 46 of the receiver 40 has not received the advertisement command signal, the operation of the receiver 40 returns to step 4 of Fig. 9, and repeats the steps from step 4. When the receiver 40 receives the advertisement command signal at the receiving part 46, the operation proceeds to step 10. The advertisement command signal includes a display command, a deletion command, a control variable application command, an advertisement designation command and the like. The processing/control part 41 of the receiver 40 reads out these commands from the advertisement command signal and performs processing in accordance with the commands.

F9. In step 10, if the processing/control part 41 determines that a deletion command is included in the advertisement command signal received by the receiving part 46, and that advertisement data and additional data of an advertisement designated by the deletion command is stored in the storage part 42, the processing/control part 41 deletes the advertisement data and the additional data being the object of deletion from the storage part 42 in step 11. Note that the advertisement ID data and the history data is retained until it is transmitted to the host device 40.

If a deletion command is not included in the advertisement command signal, or if an deletion command is included but an advertisement being the object of deletion is not stored in the storage part 42, the operation directly proceeds to step 12.

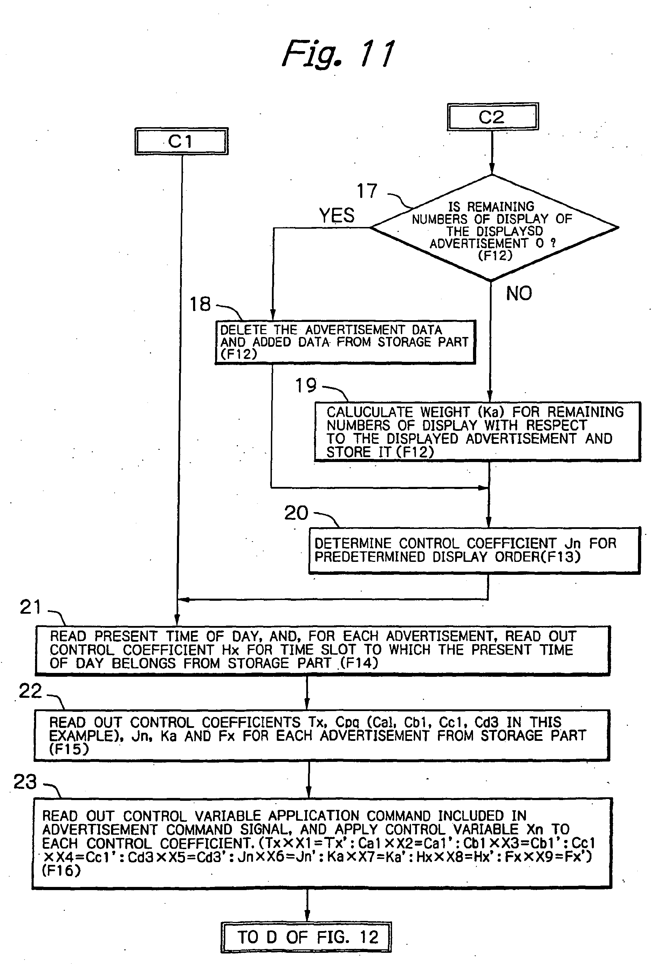

F10. In step 12, the processing/control part 41 determines whether or not an advertisement designation command is included in the advertisement command signal. If an advertisement designation command is not included, the operation proceeds to step 21 (F14) of Fig. 11.

If an advertisement designation command is included, the processing/control part 41 reads out ID data included in the advertisement designation command in step 13, and determines whether or not an advertisement having the ID data is stored in the storage part 42 in step 14. If it is determined in step 14 that the advertisement designated by the advertisement designation command is not stored in the storage part 42, the operation proceeds to step 21 of Fig. 11 (F14). If it is determined that the advertisement is stored, in step 15, the processing/control part 41 reads out the advertisement from the storage part 42, responds to a display command included in the advertisement command signal, and displays the advertisement most preferentially on the sound/image output device 48 in an advertisement time frame which starts at a time designated by the display command. Next, the operation proceeds to step 16.

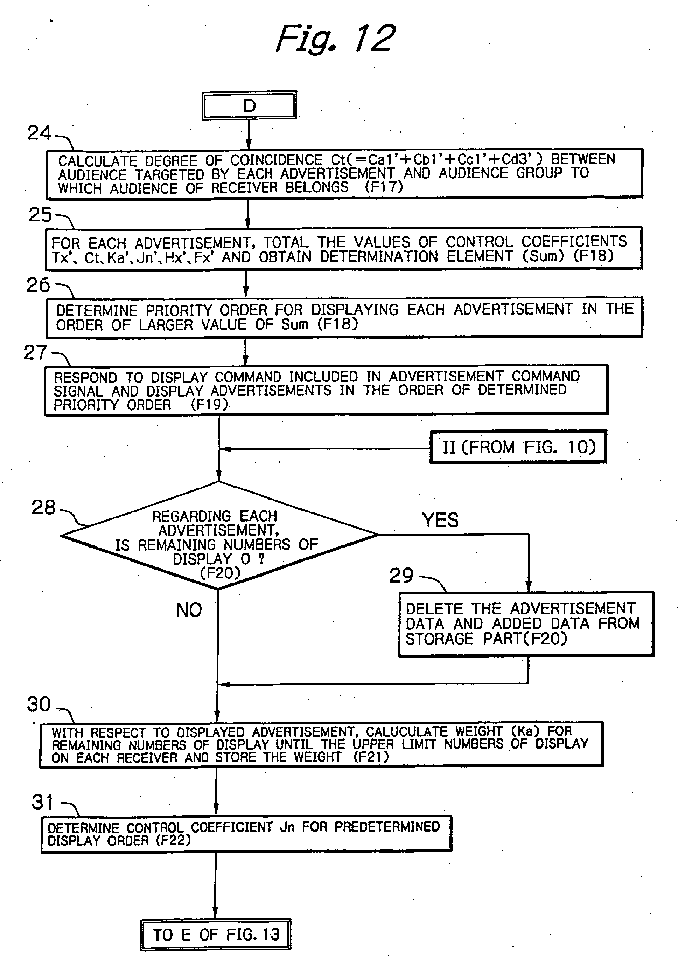

F11. In step 16, the processing/control part 41 of the receiver 40 subtracts the length (display time) of the advertisement designated by the advertisement designation command from the length of the advertisement time frame specified by the display command included in the advertisement command signal, and determines whether or not the advertisement time frame remains. If the processing/control part 41 determines that a time in which another advertisement can be displayed does not remain, the operation proceeds to step 28 of Fig. 12. If the processing/control part 41 determines that a time in which another advertisement can be displayed remains, the operation proceeds to step 17 of Fig. 11.

F12. In step 17 of Fig. 11, the processing/control part 41 of the receiver 40 subtracts one from the remaining number of times of display of the advertisement which is designated by the advertisement designation command and displayed, and determines whether or not the remaining number of times of display is zero. If it is determined that the remaining number of times of display is zero, the advertisement data and the additional data of the advertisement is deleted from the storage part 41 in step 18. The advertisement ID data and the history data of the advertisement is retained until it is transmitted to the host device 40. If the advertisement data and the additional data of the advertisement is deleted in step 18, the operation proceeds to step 20.

In step 17, if it is determined that the remaining number of times of display is not zero, the operation of the processing/control part 41 proceeds to step 19. In step 19, the weight for the remaining number of times of display (the control coefficient Ka) with respect to the advertisement is calculated and stored in the storage part 42.

F13. Next, in step 20, the processing/control part 41 updates a value representing a weight for a predetermined display order of each stored advertisement (the control coefficient Jn). The processing/control part 41 maintains without change the control coefficient Jn of an advertisement(s) which is ranked higher in the predetermined display order than the advertisement displayed in step 15, makes the control coefficient of the advertisement displayed in step 15 a minimum value, and adds an increment value (100) to the control coefficient for each advertisement which is ranked lower in the predetermined display order than the advertisement displayed in step 15 to increase the value of the control coefficient Jn for each advertisements by the amount for one rank. (A method of updating the control coefficient Jn will be described in detail in item F22 below.)

Note that steps 16 to 20 can be performed while the advertisement designated by the advertisement designation command is displayed.

F14. In step 21, the processing/control part 41 reads out a present time from the timing part 44. The processing/control part 41 then reads a control coefficient (Hx) assigned to a time slot to which the present time belongs out of the control coefficients (Hx) assigned respectively to a plurality of time slots (H1 to H6) in the preferred display time data included in the additional data of each advertisement stored in the storage part 42.

In the example of Fig. 1, for example, for the time slot H6 (2100 hours to 0100 hours), values 0, 20, 0, 20, 30 and 0 are assigned to CM1, CM2, CM3, CM4, CM 5 and CM6, respectively. These control coefficients assigned to the time slot H6 are only effective during the time between 21 o'clock and 1 o'clock in one day, and increase the priorities of CM2, CM4 and CM5 during this time slot. A sponsor can designate to some extent a time slot(s) during which an advertisement is displayed, by using this control coefficient Hx.

For example, in the case that the present time is 22 o'clock and the processing/control part 41 determines a priority order of advertisements based only on the values of the control coefficients Hx at the point, CM5 is at the top, CM2 and CM4 are at the second place, and CM1, cM3 and CM6 are at the third place.

F15. Next, in step 22, the processing/control part 41 reads out all control coefficients Tx, Cpq, Jn, Ka, Hx and Fx for each advertisement. In this example, since the viewer/listener of the receiver belongs to the categories Ca1, Cb1, Cc1 and Cd3 in the audience group specifying category data, the values of Ca1, Cb1, Cc1 and Cd3 are read out with respect to Cpq.

F16. In step 23, the processing/control part 41 reads out the control variable application command from the advertisement command signal, and applies variable values (Xn) designated by the control variable application command to the control coefficients (Tx, Cpq, Jn, Ka, Hx and Fx) only for that time to determine a new control coefficient. That is, the processing/control part 41 reads out the control variables X1 to X9 from the control variable application command, and multiply corresponding control coefficients by each control variable to calculate values of new control coefficients, $Tx'(= Tx \times X1)$, $Cax'(= Cax \times X2)$, $Cbx'(= Cbx \times X3)$, $Ccx'(= Ccx \times X4)$, $Cdx'(= Cdx \times X5)$, $Jn'(= Jn \times X6)$, $Ka'(= Ka \times X7)$, $Hx'(= Hx \times X8)$ and $Fx'(= Fx \times X9)$. If it is desired for a value of a certain control variable not to be changed, a value of the control variable Xn for the control coefficient is set to one.

It is desirable that this step is performed before a step for calculating the value of the degree of coincidence Ct (see step 24, F17) and a step for totaling the values of all the control coefficients (Tx, Cpq (Ct), Ka, Jn, Hx and Fx) (see step 25, F18). By the processing in this step 23, it becomes possible to control which calculation element should be attached importance from the host side.

The operation continues to step 24 of Fig. 12.

F17. In step 24, the processing/control part 41 determines the value indicating a weight for a degree of coincidence (the degree of coincidence value Ct) between an audience group targeted by each stored advertisement and an audience group to which a viewer/listener of a receiver belongs, based on the audience group specifying category data in the additional data of the advertisement data stored in the storage part 42.

The degree of coincidence Ct is obtained by totaling numerical values assigned to categories (i.e., numerical values obtained by applying a control variable to the numerical values), among all the categories of the audience group specifying category data (Ca1 to Cd3) included in the additional data of each advertisement data stored in the storage part 42, that coincide with categories to which the viewer/listener belongs.

The above viewer/listener belongs to the categories Ca1, Cb1, Cc1 and Cd3. Also, in this example, it is assumed that values of the control variables (X2, X3, X4 and X5) applied to Cpq (Cax, Cbx, Ccx and Cdx) in the above step 23 were all one. In this case, as shown in the table in the lower part of Fig. 1, the numerical value Ct (= Ca1' + Cb1' + Cc1' + Cd3') representing the degree of coincidence for CM1 of the above viewer/listener is 40 + 80 + 10 + 10 = 140. Similarly, the numerical value Ct is 250 for CM2, 110 for CM3, 200 for CM4, 90 for CM5 and 170 for CM6.

In the case that the processing/control part 41 determines a priority order of advertisements based only on these values of the control coefficients Ct's, the priority order is CM2, CM4, Cm6, CM1, CM3 and CM5 from the top.

F18. In step 25, the processing/control part 41 totals the values of control coefficients Tx', Ka', Jn', Hx' and Fx' and Ct for each advertisement to obtain a determination element (the determination element (Sum) of Fig. 1). Next, in step 26, based on this determination element (Sum), the processing/control part 41 determines a final priority order (the priority order (N) of Fig. 1) for displaying each advertisement in the order of the value of the determination element.

In the case of the example of Fig. 1, that is, in the case in which a viewer/listener of a receiver belongs to the categories Ca1, Cb1, Cc1 and Cd3, a present time belongs to the time slot H6, and all the control variables Xn (X1 to X9) are one, values of the determination elements (Sum) of CM1 to CM6 are 2,550, 2,540, 1,880, 1,830, 1,840 and 1,320, and the priority order N (the first to sixth places) based on the determination elements Sum is CM1, CM2, Cm3, CM5, CM4 and CM6 from the top.

F19. Next, in step 27, the processing/control part 41 responds to the display command included in the advertisement command signal; reads out advertisement data, that can be displayed during a designated time frame from a designated time, from the storage part 42 in the order of the determined priority order; and outputs the advertisement data from the sound/image information output part 47 to the sound/image output device 48 to display the advertisement.

If an advertisement is displayed in the above step 15, the processing/control part 41 reads out advertisement data that can be displayed in the remaining time of the advertisement time frame from the storage part 42 in the order of the determined priority order, and outputs it from the sound/image information output part 47 to the sound/image output device 48 to display the advertisement from the time immediately after ending the display of the advertisement in step 15.

The processing/control part 41 subtracts a value of the number of times of display (usually one) from the value of the remaining number of times of display with respect to the displayed advertisement, and stores the updated remaining number of times of display in the storage part 42.

F20. In step 28, the processing/control part 41 examines the remaining number of times of display of each advertisement and, if there is an advertisement for which the remaining number of times of display is zero, deletes advertisement data and additional data of the advertisement from the storage part 42 in step 29. The ID data of the advertisement and the history data concerning the display states of the advertisement stored in the storage part 42 is maintained in the storage part 42 until it is transmitted to the host device 30.

F21. For each advertisement for which remaining number of times of display is determined to be not zero in the above step 28, the processing/control part 41 calculates a value representing the weight for the remaining number of times of display (the control coefficient Ka) and stores the value in the storage part 42 in step 30.

F22. In step 31, the processing/control part 41 updates a value representing the weight for the predetermined display order of each stored advertisement (the control coefficient Jn).

For example, if an advertisement at the first place of the predetermined display order has read out from the storage part 42 and displayed on the sound/image output device 48 via the sound/image information output part 47, the processing/control part 41 sets the control coefficient for the advertisement to the minimum value (1,000), and adds the above increment value to the control coefficient for each advertisement in the second place or lower in the predetermined display order to increase the value of the control coefficient Jn by the amount for raising one place. In this example, if CM1 is displayed, the control coefficient of CM1 is changed to the minimum value of 1,000, and 100 is added to each of the control coefficients of CM2 to CM6. As a result, the values of the control coefficients for CM2, CM3, CM4, CM5. CM6 become 1,500, 1,400, 1,300, 1,200, 1,100, respectively. The priority order of display for the next time based only on the updated control coefficient Jn is CM2, CM3, CM4, CM5, CM6 and CM1 from the top.

Also, for example, if the advertisement time frame is long, and the processing/control part 41 sequentially reads out a plurality of advertisements from the storage part 42 in the order of the priority order based on the control coefficient Jn and sequentially displays the advertisements on the sound/image output device 48 through the sound/image information output part 47, the processing/control part 41 collectively recalculates the control coefficient Jn after ending the display. For example, it is assumed that the advertisements are in the order of CM1, CM2, CM3, CM4, CM5 and CM6 from the highest to the lower values of the control coefficients Jn, and CM1 to CM3 are sequentially read out and displayed in the order. In this case, the processing/control part 41 moves CM1 to CM3 collectively to the last place in this order, and assigns control coefficients in the manner similar to the above. That is, the control coefficients of CM 1, CM2 and CM3 are set to 1,200, 1,100 and 1,000, respectively. Since each of the orders for CM4, CM5 and CM6 is raised up by three places, an increment value for the three places (300) is add to their original control coefficients, respectively.

Note that when the processing/control part 41 uses a plurality of determination elements in determining a priority order of display, other determination elements (one or more) may be prioritized. Thus, even if the advertisements are in the order of CM1, CM2, CM3, CM4, CM5 and CM6 from the one with a higher value of the control coefficient Jn, an advertisement having an intermediate control coefficient value Jn, for example, CM3 may be read out and displayed earlier. In addition, if an advertisement designation command is included in the advertisement display command, and the advertisement designation command designates, for example, CM3, the processing/control part 41 reads out and displays CM3 most preferentially without taking any control coefficient value into consideration (i.e., even if the control coefficient value Jn of CM3 is not the maximum value). In these cases, the control coefficients Jn, which are in places higher than that of CM3, of the advertisements, that is, those of CM1 and CM2 in this example, are maintained as they are; the minimum value 1,000 is assigned to CM3; and the increment value 100 is added to the control coefficient Jn of each of the advertisements having the control coefficient Jn in a place lower than that of CM3, that is, CM4, CM5 and CM6 in this example. As a result, the priority order of the next display based only on this control coefficient becomes CM1, CM2, CM4, CM5, CM6 and CM3 from the top.

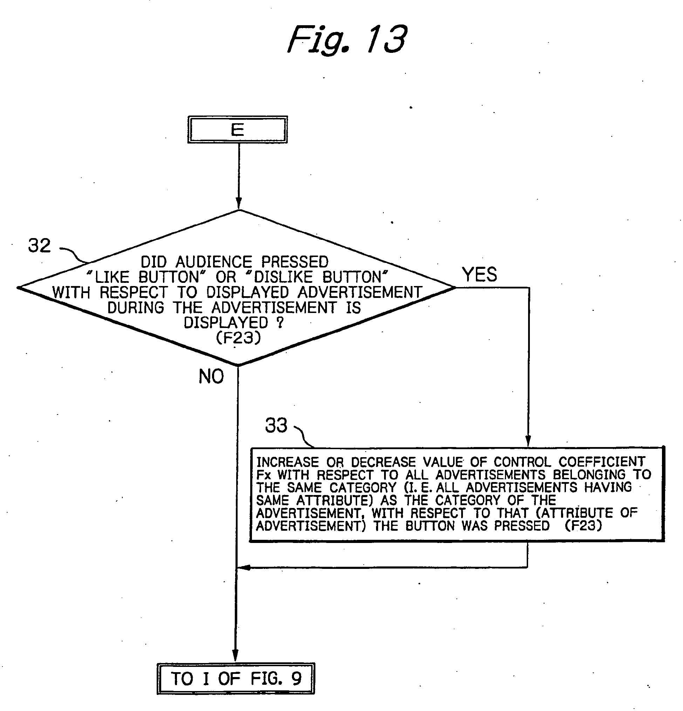

The operation continues from step 31 of Fig. 12 to step 32 of Fig. 13.

F23. In step 32 of Fig. 13, the processing/control part 41 examines whether or not the voting buttons of the input part 43 of the receiver 40 have been pressed while the advertisement is displayed.

When a viewer/listener presses the "like button" while the advertisement is displayed, that is, votes "like," the processing/control part 41 stores, in the storage part 42, voting information indicating that the viewer/listener voted "like" with respect to the advertisement attribute of the advertisement. When a viewer/listener presses the "dislike button," that is, votes "dislike," the processing/control part 41 stores, in the storage part 42, voting information indicating that the viewer/listener voted "dislike" with respect to the advertisement attribute of the advertisement. Also, the processing/control part 41 stores only one vote in the storage part 42 as an effective vote even if the viewer/listener votes a plurality of times while one advertisement is displayed.

The processing/control part 41 reads out the voting information stored in the storage part 42 after displaying the advertisement. If the voting information indicating that the viewer/listener pressed the "like button," that is, voted "like" while the advertisement is displayed is stored, the processing/control part 41 increases the control coefficient Fx for all advertisements having the same advertisement attribute as the advertisement attribute of the displayed advertisement by a predetermined value in step 33. To the contrary, if the voting information indicating that the viewer/listener pressed the "dislike button," that is, voted "dislike" is stored, the processing/control part 41 decreases the control coefficient Fx for all advertisements having the same advertisement attribute as the displayed advertisement attribute of the advertisement by a predetermined value in step 33.

For example, in the example of Fig. 1, the advertisement attribute of the advertisements CM1, CM2 and CM4 is F1 (for example, car), the advertisement attribute of CM3 and CM6 is F2 (for example, food), and the advertisement attribute of CM5 is F3 (for example, cosmetic). In addition, the initial value, the upper limit value and the lower limit value of the control coefficient Fx are set at 50, 100 and 0, respectively.

If a viewer/listener presses the "like button" when the viewer/listener views/listens to CM1 which is an advertisement of a car, the numerical value for the advertisement attribute F1 to which CM1 belongs increases by a predetermined value, and the priority of the advertisement becomes higher than that of advertisements having other advertisement attributes. That is, the priorities of the advertisements of cars, CM1, CM2 and CM4 become higher than those of CM3, CM5 and CM6. If a viewer/listener presses the "dislike button" when the viewer/listener views/listens to CM3 which is an advertisement of food, the numerical value for the advertisement attribute F2 to which CM3 belongs decreases by a predetermined value, and the priority of the advertisement becomes lower than those of advertisements having other advertisement attributes. That is, the priorities of the advertisements of foods, CM3 and CM6 become lower than those of CM1, CM2, CM4 and CM5. If the buttons are not pressed while an advertisement is displayed, the control coefficient Fx for the advertisement attribute for the advertisement does not change.

In addition, to an advertisement that is distributed anew, the processing/control part 41 assigns a corresponding present control coefficient Fx on the receiver 40. For example, if the advertisement attribute of an advertisement CMX that is distributed anew is F1 and the value of the present control coefficient Fx for the advertisement attribute F1 on the receiver 40 is 70, value 70 is assigned to the advertisement attribute F1 of the advertisement CMX.

After step 33, the operation step returns to step 4 of Fig. 9, and performs operations similar to those described above.

The storage part 42 of the receiver 40 stores a computer program for performing the above steps.

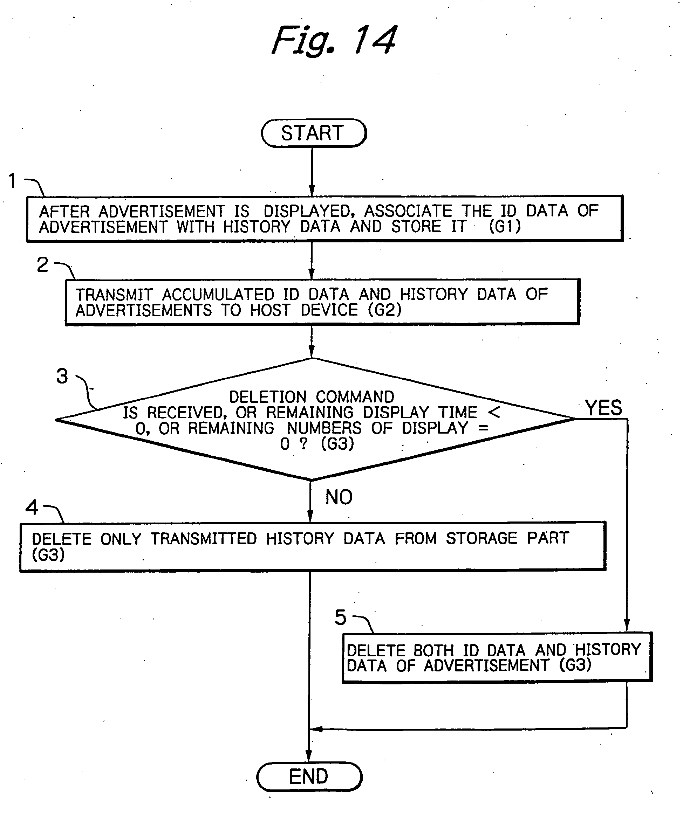

Fig. 14 describes steps on the receiving side, that is, on the receiver 40, for storing history data concerning display of an advertisement.

G. Steps for storing history data concerning display of an advertisement on the receiving side:

G1. On each receiver 40, when an advertisement is displayed, the processing/control part 41 stores history data in association with ID data of the advertisement stored in the storage part 42, in step 1. The history data includes data indicating the number of times that the advertisement was displayed.

If more detailed data is required, the receiver 40 constructs, for each advertisement, history data including a date and time when the advertisement was displayed and a channel number that was tuned at that time, the number of times the advertisement was displayed for each channel, the total number of times the advertisement was displayed, an ID number of a transmitting device (viewer/listener) that transmitted the history data, an attribute of the viewer/listener and the like.

G2. In step 2, upon receiving a history data transmission command transmitted from the transmission part 35 of the host device 30 at the receiving part 46, the receiver 40 transmits accumulated ID data and history data of the advertisements from the transmission part 45 to the receiving part 36 of the host device 30 through the line 39.

Alternatively, in step 2, the system may be configured such that the receiver 30 voluntarily and periodically transmits the accumulated ID data and history data of the advertisements to the host device 30.

The host device 30 stores the history data received at the receiving part 36 in the storage part 32.

G3. After transmitting the ID data and the history data of the advertisement to the host device 30, the processing/control part 41 examines whether or not a deletion command has been issued to the advertisement stored in the storage part 42, whether or not the remaining display period has become less than zero (Tr < 0), and whether or not the remaining number of times of displays has become zero (i.e., whether Ka = 0 or not) in step 3.

With respect to an advertisement for which a deletion command has not been issued, the remaining display period is zero or more, and the remaining number of times of displays is more than zero, the processing/control part 41 maintains the ID data of the advertisement as it is and deletes the transmitted history data only from the storage part 42 in step 4.

With respect to an advertisement that has received a deletion command, an advertisement for which the remaining display period is less than zero, and an advertisement for which the remaining number of times of display is zero, the processing/control part 41 deletes both the ID data and the history data of the advertisement from the storage part 42 in step 5.

The storage part 42 of the receiver 40 stores a computer program for performing the above steps.

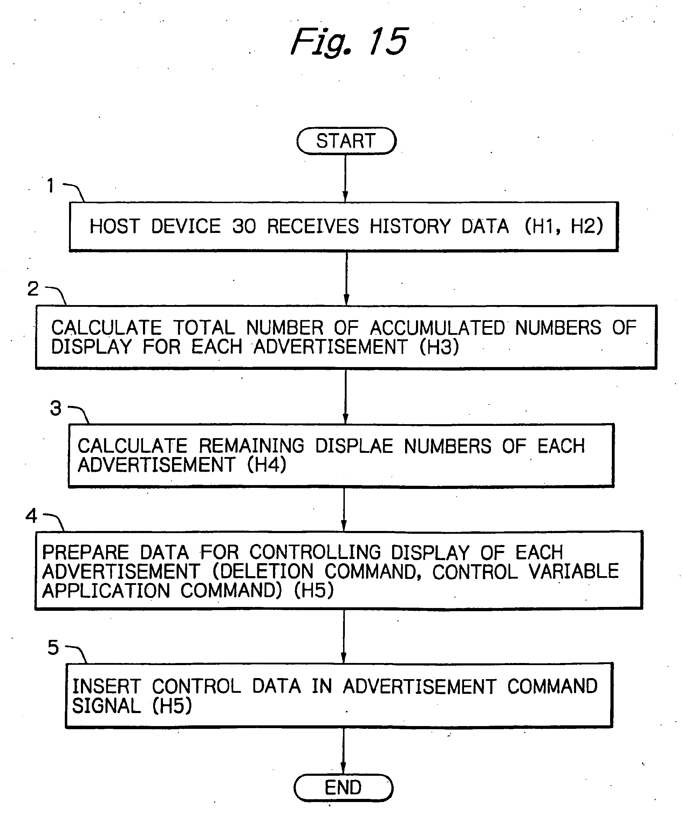

Fig. 15 describes steps on the transmitting side, that is, in the host device 30, for processing and controlling history data fed back from the receiver 40.

H. Steps on the transmitting side for processing and controlling history data fed back from the receiving side:

H1. In step 1, the host device 30 transmits a history data transmission command from the transmission part 35 to each receiver 40 and causes the processing/control part 41 of the receiver 40 to read out the history data from the storage part 42 and transmit the history data from the transmission part 45. Alternatively, the system may be configured such that the receiver 40 voluntarily and periodically transmits history data.

H2. The host device 30 receives the history data transmitted from the transmission part 45 of each receiver 40 through the line 39 by the receiving part 36 and stores the history data in the storage part 32.

H3. In step 2, the processing/control part 31 first obtains a total of the number of times each advertisement was displayed in all the receivers 40, based on the history data received at this time. Then, the processing/control part 31 adds the total number of times of displays of this time and the total number of times of display derived by accumulating the previously obtained history data stored in the storage part 32, thereby obtaining the number of times each advertisement was displayed in all the receivers at this point.

H4. In step 3, the processing/control part 31 compares the number of times each advertisement was displayed in all the receivers 40, which was obtained in the above item H3 and the total number of times of displays defined at the time of receiving an order of the advertisement, and finds a remaining number of times of displays of each advertisement.

H5. In step 4, based on the remaining number of times of displays found in the above item H4, the processing/control part 31 generates control data for display of each advertisement and, in step 5, includes the control data in an advertisement command signal. The processing steps in the processing/control part 31 are as follows.

H5a. If the remaining number of times of displays becomes zero or less, the processing/control part 31 includes a deletion command for the advertisement in the next advertisement command signal.

H5b. If the remaining number of times of display is not zero, the processing/control part 31 first finds the number of times of displays per a unit time that is required for attaining the total number of times of displays during the remaining display period.

First, the number of times of displays per a unit time (the actual number of times of displays) from the number of times an advertisement was displayed in a certain period. For example, the number of times the advertisement was displayed from the date when the advertisement data was transmitted until the date when the history data was obtained is divided by the number of days during the period to find the number of times the advertisement was displayed in one day. Then the actual number of times of displays and the required number of times of displays are compared and, if the required number of times of display is larger, a value of a control variable Xn included in a control variable application command of the next advertisement command signal is changed in order to make the priority order of the advertisement higher.

Which control variable (Xn) corresponding to which control coefficient is changed may be determined experientially or, after time has passed since the system was operated, may be determined based on the obtained statistical data; and the basis of determination may be stored in the storage part 32. Alternatively, it is also possible, according to the situation, to input data indicating what kind of control variable (Xn) is applied to what kind of control coefficient from the input part 33, and insert the data in the advertisement command signal in the processing/control part 31.

For example, in the example of Fig. 1, it is assumed that the priority order of an advertisement having a short remaining display period is desired to be made higher. In this case, the value of the control variable X1 included in the control variable application command is increased. For example, the value of the control variable X1 applied to the control coefficient Tx of Fig. 1 is set to 10. When the control coefficient Tx is multiplied by the control variable 10, determination elements (Sum) of CM1 to CM6 become 9,750, 8,840, 5,480, 4,530, 6,340 and 2,220, respectively. The priority order based on these determination elements is CM1, CM2, CM5, CM3, CM4 and CM6 from the top. In this example, the priority order of CM1 which has the shortest remaining display period (i.e., having the largest value of the control coefficient Tx) is at the top, and the priority order of CM2 having the second shortest remaining display period is positioned at the second place. Although the newly determined priority order of CM1 and CM2 is the same as the original priority order, it is in the order of shortness of the remaining display period. The priority order of the advertisement CM5 which has the third shortest remaining display period is up one rank from the fourth place to the third place, and the priority order of the advertisement CM3 having the fourth shortest remaining display period is down one rank from the third place to the fourth place. In order to attach more importance to an advertisement having a short remaining period, a larger control variable is multiplied to the control coefficient thereof.

The way in which a priority order goes up changes depending on a control variable (Xn) to multiply.

The storage part 32 of the host device 30 stores a computer program for performing the above steps.

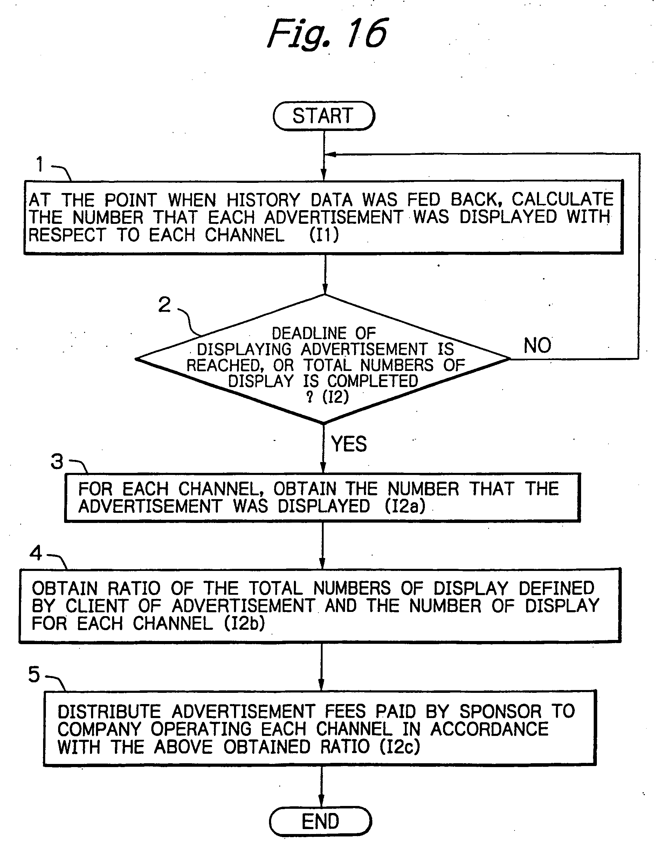

Fig. 16 describes steps on the transmitting side, that is, the host device 30, for generating statistical data based on history data fed back from the receiving side, that is, the receiver 40.

I. Steps on the transmitting side for generating statistical data based on history data fed back from the receiving side:

I1. If data indicating the number of times an advertisement was displayed for each channel is included in the history data which is received at the receiving part 36 and stored in the storage part 32, the processing/control part 31 adds, for each advertisement, the total number of times the advertisement was displayed for each channel, which was found from the previously obtained history data, and the total number of times the advertisement was displayed for each channel found from the history data of this time to obtain the number of times the advertisement was displayed for each channel in all the receivers at the time of the calculation, in step 1.

I2. In step 2, the processing/control part 31 examines whether each advertisement stored in the storage part 32 has reached a display deadline of the advertisement or has attained the total number of times of displays. If it is determined that the advertisement has reached the display deadline (the display period has expired) or has attained the total number of times of displays, the processing/control part 31 performs the following steps based on the history data.

If data indicating cancellation has been inputted in order to discontinue the advertisement halfway, it is determined that the display period has expired at the point when the data was inputted.

I2a. In step 3, the number of times the advertisement was displayed for each channel is obtained.

I2b. In step 4, a ratio of the total number of times of display defined by a client (sponsor) and the number of times the advertisement was displayed in each channel is obtained.

Also, for example, in the case that the total number of times of displays of the advertisement in all the receivers exceeds the total number of times of display defined by the client, or becomes less than the total number of times of displays defined by the client due to discontinuation of the advertisement or the like, it may be configured to obtain a ratio of the number of times the advertisement was displayed in all the receivers and the number of times the advertisement was displayed in each channel.

I2c. In step 5, the advertisement fee paid by the sponsor is divided and distributed, in accordance with the above ratio, to a company operating each channel.

The storage part 32 of the host device 30 stores a computer program for performing the above steps.

A series of steps from receipt by the host device 30 of a request for an advertisement, through display of the advertisement on each receiver 40, to distribution of advertisement fees to each broadcasting (program) company after displays of the advertisement are completed as described above.

A second example of operations of an advertisement display controlling system will now be described.

In this example, as calculation elements of a priority order of advertisements, a display period (control coefficient Tx), an audience group specifying category (control coefficient Cpq), a predetermined display order (control coefficient Jn), an upper limit display number (control coefficient Ku), a preferred display time (control coefficient Hx), and a taste of a viewer/listener (advertisement attribute) (Fx) are used. That is, in the second example, the upper limit display number (control coefficient Ku) is used instead of the averaged display number (control coefficient Ka) used in the first example.

The averaged display number (Ka) of an advertisement used in the above first example is the same value for all the receivers storing the advertisement. That is, it does not take a weight for an audience group to which a viewer/listener of each receiver belongs into consideration. For example, in the example of Fig. 1, a sponsor assigns, in the classification Cdx of the audience group specifying element of CM3, 80 to the category Cd1, 10 to the category Cd2, and 10 to the category Cd3. This means that the sponsor attaches importance to an audience group belonging to the category Cd1, an audience group belonging to the category Cd2 and an audience group belonging to the category Cd3 at the ratio of 80 to 10 to 10. However, whether CM3 is stored in a receiver of a viewer/listener belonging to the category Cd1 (hobby A) to which importance is attached, or stored on a receiver of a viewer/listener belonging to the category Cd3 (hobby C) to which less importance is attached, the averaged display number assigned to each receiver, that is, the initial value of the control coefficient indicating a weight is the same. Therefore, the viewer/listener to whom importance is attached and the viewer/listener to whom importance is not attached are equally induced to see the advertisement. This is inconvenient when effects and efficiency of an advertisement are taken into consideration.

Therefore, in the second example, the number of times of displays that takes into consideration the degree of coincidence between an audience group targeted by each advertisement and an audience group of a viewer/listener of each receiver, that is, the upper limit display number (control coefficient Ku) is used, instead of the averaged display number (control coefficient Ka).

The second embodiment is similar to the first embodiment except that the upper limit display number

[0251] (control coefficient Ku) is used instead of the averaged display number (control coefficient Ka). Therefore, if a concept of a method of determining the priority order for displaying advertisements is shown in the form of a table, it will become similar to the table shown in Fig. 1. That is, the table of the second embodiment will be a table in which the calculation element name "averaged display number" and the control coefficient name "Ka" of Fig. 1 are replaced by "upper limit display number" and "Ku."

Since the operations of the second embodiment and those of the first embodiment of the advertisement display controlling systems have many points in common, only different points are described.

A'. Preparation steps on the receiving side:

The steps of item A' are those corresponding to the steps described in item A of the above first embodiment (the steps shown in Fig. 4), and the steps similar to the steps described in item A are performed.

The storage part 42 of the receiver 40 stores a computer program for performing the above steps.

B'. A step for analyzing audience (viewer/listener) data on the broadcasting side:

The steps of item B' are those corresponding to the steps described in item B of the above first embodiment (the steps shown in Fig. 5), and the steps similar to those described in item B are performed.

The storage part 32 of the host device 30 stores a computer program for performing the above step.

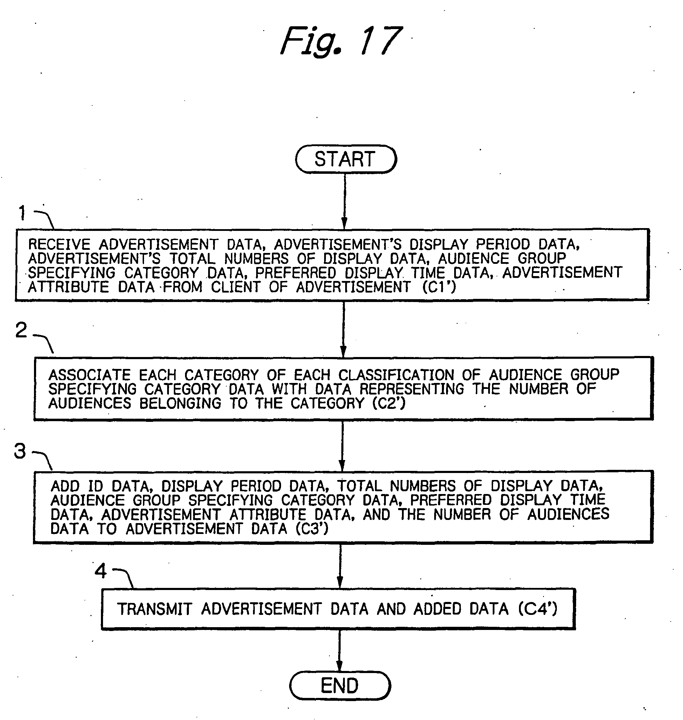

Fig. 17 is a figure corresponding to Fig. 6, and describes steps on the broadcasting side, which will be described in item C' below, for preparing and transmitting advertisement data.

C'. Steps on the broadcasting side for preparing and transmitting advertisement data:

The steps described here correspond to the steps described in item C of the above first embodiment (the steps of Fig. 6) except some parts.

C1'. As step 1, a step similar to the step described in item C1 of the first embodiment (step 1 of Fig. 6) is performed.

C2'. As step 2, a step similar to the step described in item C2 of the first embodiment (step 2 of Fig. 6) is performed.

C3'. In step 3, the processing/control part 31 adds ID data, display period data, audience group specifying category data (Ca1 to Cd3), preferred display time data (Hx), advertisement attribute data (F1 to F3), the total number of times of display data and, the number of viewers/listeners data (Sa1 to Sd3) to advertisement data stored in the storage part 32, and prepares data for transmission to the receiver 40.

In the second embodiment, since the averaged display number is not used as a calculation element of a priority order of advertisements, the step described in item C3 of item C of the first embodiment (step 3 of Fig. 6) is not performed.

C4'. As step 4, a step similar to the step described in item C5 of the first embodiment (step 5 of Fig. 6) is performed. That is, in this step, the processing/control part 31 makes one package by combining a plurality of pairs of the advertisement data and the additional data, and transmits the package from the transmission part 35 to the receiver 40 on occasion or periodically. However, unlike the case of the first embodiment, the additional data does not include averaged display number data, but includes the total number of times of display data and the number of viewers/listeners data (Sa1 to Sd3) instead.

The storage part 32 of the host device 30 stores a computer program for performing the above steps.

D'. Steps for receiving, selecting and storing advertisement data on the receiving side:

The steps of item D' are steps corresponding to the steps described in item D of the above first embodiment (the steps of Fig. 7), and are performed in a similar manner to the steps described in item D.

The storage part 42 of the receiver 40 stores a computer program for performing the above steps.

E'. Steps for preparing an advertisement command signal on the transmitting side:

The steps of item E' are steps corresponding to the steps described in item E of the above first embodiment (the steps of Fig. 8), and are performed in a similar manner to the steps described in item E.

However, the second embodiment is different from the first embodiment in that the averaged display number (control coefficient Ka) used in the first embodiment is replaced by the upper limit display number (control coefficient Ku). That is, in the second embodiment, the control variable X7 among the control variables Xn is a control variable applied to the control coefficient Ku rather than to the control coefficient Ka.

The storage part 32 of the host device 30 stores a computer program for performing the above steps.

F'. Steps on the receiving side for determining and displaying a priority order of stored advertisement data:

The steps of item F' are steps corresponding to the steps described in item F of the above first embodiment (the steps of Figs. 9, 10, 11, 12 and 13), and are performed in a similar manner to the steps described in item F. However, in the second embodiment, the upper limit display number (control coefficient Ku) is used instead of the averaged display number (control variable Ka) used in the first embodiment. Therefore, steps relating to the control variable Ka among the steps described in item F of the first embodiment are different. In the description below, the parts different from the first embodiment will be described in detail.

F1'. In step 1, the processing/control part 31 of the receiver 30 obtains a value of the upper limit display number of each advertisement stored on each receiver, based on the total number of times of display data (the ordered total number of times of displays (K)), the audience group specifying category data (Ca1 to Cd3), and the number of viewers/ listeners data of each category (Sa1 to Sd3) in the additional data of the advertisement data received from the host device 40 and stored in the storage part 32, and determines an initial value of the value representing the weight (control coefficient Ku) for the above value.

The upper limit display number indicates an upper limit of the number of times of display of each advertisement on each receiver. When the remaining number of times of display until the upper limit display number becomes zero, the control coefficient Ku becomes zero. An advertisement for which the control coefficient Ku has become zero is not displayed any more.

Steps for calculating the upper limit display number for one stored advertisement, which take into consideration a degree of coincidence between an audience group targeted by each advertisement and an audience group of a viewer/ listener of each receiver, which is one characteristic of the present invention, will be hereinafter described. The steps are performed in the processing/control part 41 of the receiver 40.

F1'a. A value of the control coefficient Cpq for each category to which a viewer/listener of the receiver 40 belongs is read out. For example, if the viewer/listener belongs to the categories Ca1, Cb1, Cc1 and Cd3, for CM 1, control coefficients 40, 80, 10 and 10 assigned to Ca1, Cb1, Cc1 and Cd3 are read out.

F1'b. The control coefficient Cpq for each category is divided by the total of numerical values (100 in this example) assigned to all the categories included in a classification including the category, thereby finding a weight of the assigned numerical values as a ratio (RCpq). Here, the total of the numerical values assigned to all the categories in each main classification is 100, so that Cpq/100 is the ratio of the assigned numerical values.

$$Rpq = Cpq/100$$

Describing with reference to the above example, concerning CM1, the total of four values of ratio is found, namely, Ra1 = 0.4 (= Ca1/100 = 40/100) for the category Ca1, Rb1 = 0.8 for the category Cb1, Rc1 = 0.1 for the category Cc1, and Rd3 = 0.1 for the category Cd3.

F1'c. The ordered number of times of displays of an advertisement (K) is multiplied by each Rpq found in the above step F1'b individually. From this calculation, a value associating the ordered number of times of displays of an advertisement K with a degree of coincidence of a viewer/listener with respect to the advertisement (KRpq) is found.

$$KRpq = K \times Rpq = K \times (Cpq/100)$$

For example, if K of CM1 is 10,000, four values of KRpq, that is, KRa1 = 4,000 (= 10,000 x 0.4), KRb1 = 18,000 (=10,000 x 0.8), KRc1 = 1,000 (=10,000 x 0.1) and KRd3 = 1,000 (=10,000 x 0.1) are found.

F1'd. The number of all viewers/listeners belonging to each category to which the viewer/listener of the receiver 40 belongs (or, the number of receivers that stores personal data indicating that the viewer/listener belongs to the category) (Spq) is extracted from the additional data. Since the viewer/listener of the receiver 40 belongs to a plurality of categories, the number of kinds of Spq is the same as the number of the categories.

In this example, since the viewer/listener belongs to the categories Ca1, Cb1, Cc1 and Cd3, the values of Sa1, Sb1, Sc1 and Sd3 are extracted.

F1'e. Each value of KRpq, which is found by associating the degree of coincidence with each category to which the viewer/listener belongs in the above step of F1'c, is individually divided by the value of Spq which corresponds to each category and is extracted in the above step of F1'd. By this calculation, a plurality of the numbers of displays of an advertisement (Kc) on each receiver, which takes the number of viewers/listeners (the number of receivers) belonging to each category into consideration, is found.

$$Kc = KRpq/Spq = K \times (Cpq/100)/Spq$$

In this example, four values of Kc are found. For example, if Sa1 is 500, Sb1 is 200, Sc1 is 1,000 and Sd3 is 5,000, 8 (= KRa1/Sal = 4,000/500), 40 (= KRb1/Sb1 = 8,000/200), 1 (= KRc1/Sc1 = 1,000/1,000) and 0.2 (= KRd3/Sd3 = 1,000/5,000) are found as the four values of Kc.

F1'f. The largest value among the plurality of values of Kc calculated in the above step of F1'e is selected, and the value is set to be the final value of Kc. In the above example, the value of Kc is set to 40. The upper limit display number (Ku) that takes a degree of coincidence into consideration is calculated by multiplying this value by an appropriate coefficient (for example, a coefficient indicating room that is statistically found).

$$Ku = Kc \times coefficient$$
$$=(K \times (Cpq/100)/Spq) \times coefficient$$

This is used as the control coefficient Ku indicating a weight of the upper limit display number.

F2' to F7'. As steps 2 to 8, steps similar to the steps described in items F2 to F7 of item F of the first embodiment (steps 2 to 8 of Fig. 9) are performed.

F8'. As step 9, the processing/control part 41 performs a step similar to the step described in item F8 of item F of the first embodiment (step 9 of Fig. 10). However, control coefficients to be the objects of a control variable application command included in an advertisement command signal received in this step are the display period (control coefficient Tx), the audience group specifying category (control coefficient Ct (Cpq)), the predetermined display order (control coefficient Jn), the upper limit display number (control coefficient Ku), the preferred display time (control coefficient Hx) and the taste of a viewer/listener (advertisement attribute) (Fx).

F9' to F11'. As steps 10 to 16, steps similar to the steps described in items F9 to F11 of item F of the first embodiment (steps 10 to 16 of Fig. 10) are performed.

F12'. In step 17, the processing/control part 41 of the receiver 40 subtracts one from the remaining number of times of displays of an advertisement designated and displayed by the advertisement designation command (the remaining number of times of displays until the upper limit display number is reached), and determines whether or not the remaining number of times of displays is zero. If it is determined that the remaining number of times of displays is zero, the advertisement data and the additional data of the advertisement is deleted from the storage part 42 in step 18. The advertisement ID data and the history data of the advertisement are retained until they are transmitted to the host device 40. If the advertisement data and the additional data of the advertisement are deleted in step 18, the operation proceeds to step 20.

In step 17, if it is determined that the remaining number of times of displays is not zero, the operation of the processing/control part 41 proceeds to step 19. In step 19, the weight concerning the remaining number of times of displays (the control coefficient Ku) for the advertisement is calculated and stored in the storage part 42.

F13'. As step 20, a step similar to the step described in item F13 of item F of the first embodiment (step 20 of Fig. 11) is performed.

F14'. As step 21, a step similar to the step described in item F14 of item F of the first embodiment (step 21 of Fig. 11) is performed.

F15'. Next, in step 22, the processing/control part 41 reads out all the control coefficients Tx, Cpq, Jn, Ku, Hx and Fx for each advertisement. In this embodiment, the viewer/listener of a receiver belongs to the categories Ca1, Cb1, Cc1 and Cd3 in the audience group specifying category data as in the first embodiment. Therefore, concerning Cpq, the values of Ca1, Cb1, Cc1 and Cd3 are read out.

F16'. In step 23, the processing/control part 41 reads out the control variable application command from the advertisement command signal, and determines control coefficients anew by applying the variable values (Xn) designated by the control variable application command to the control coefficients (Tx, Cpq, Jn, Ku, Hx and Fx) for that time only. That is, the processing/control coefficient 41 reads out the control variables X1 to X9 from the control variable application command, and multiplies each control variable and its corresponding control variable, thereby calculating new values of control coefficients, Tx' (= Tx x X1), Cax' (= Cax x X2), Cbx' (= Cbx x X3), Ccx' (= Ccx x X4), Cdx' (= Cdx x X5), Jn' (=Jn x X6), Ku' (=Ku x X7), Hx' (= Hx x X8) and Fx' (Fx x X9).

It is desirable that this step is performed before a step for totaling the values of all the coefficients (see step 25, item F18').

F17'. As step 24, a step similar to the step described in item F17 of item F of the first embodiment (step 24 of Fig. 12) is performed.

F18'. In step 25, the processing/control part 41 totals the values of the control coefficients Tx', Ku', Jn', Hx' and Fx' and Ct for each advertisement to find a determination element (Sum). Then, in step 26, based on the determination elements (Sum), the processing/control part 41 determines a final priority order (N) of display of each of the advertisements in the order of larger value of the determination element.

F19'. Then, in step 27, the processing/control part 41 responds to a display command included in the advertisement command signal, reads out advertisement data, which can be displayed within a designated time frame from a designated time, from the storage part 42 in the order of the determined priority order, and outputs the advertisement data from the sound/image information output part 47 to the sound/image output device 48 to display the advertisement.

In addition, if the advertisement is displayed in step 15, the processing/control part 41 reads out advertisement data that can be displayed within the remaining advertisement time frame from the storage part 42 in the order of the determined priority order, and outputs the advertisement data from the sound/image information output part 47 to the sound/image output device 48, from a time immediately after the display of the advertisement in step 15, to display the advertisement.

The processing/control part 41 subtracts a value of the displayed number (usually one) from the value of the remaining number of times of displays until the upper limit display number is reached with respect to the displayed advertisement, and stores the updated value of the remaining number of times of display (the remaining number of times of displays until the upper limit display number is reached) in the storage part 42.

F20'. In step 28, the processing/control part 41 examines the remaining number of times of displays of each advertisement and, if there is an advertisement for which remaining number of times of displays is zero, deletes advertisement data and additional data of the advertisement from the storage part 42 in step 29. Note that ID data of an advertisement stored in the storage part 42 and history data concerning display states of the advertisement is retained in the storage part 42 until they are transmitted to the host device 30.

F21'. With respect to the advertisement for which it is determined that the remaining number of times of displays is not zero in step 28, the processing/control part 41 calculates a value representing the weight (the control coefficient Ku) for the remaining number of times of displays, and stores the value in the storage part 42 in step 30.

F22'. As step 31, a step similar to the step described in item F22 of item F of the first embodiment (step 31 of Fig. 12) is performed.

F23'. As steps 32 and 33, steps similar to the steps described in item F23 of item F of the first embodiment (steps 32 and 33 of Fig. 13) are performed.

After step 33, the operation step returns to step 4, and the operations similar to the above operations are performed.

The storage part 42 of the receiver 40 stores a computer program for performing the above steps.

G'. Steps on the receiving side for storing history data concerning display of an advertisement:

The steps of G' are steps corresponding to the steps described in item G of the above first embodiment (the steps of Fig. 14), and are performed in a similar manner to the steps described in item G. However, in the second embodiment, the upper limit display number (control coefficient Ku) is used instead of the averaged display number (control variable Ka) used in the first embodiment. Therefore, steps relating to the control variable Ka in the steps described in item G of the first embodiment are different. In the following description, the different parts are described.
G1'. As step 1, a step similar to the step described in item G1 of item G of the first embodiment (step 1 of Fig. 14) is performed.
G2'. As step 2, a step similar to the step described in item G2 of item G of the first embodiment (step 2 of Fig. 14) is performed.
G3'. After transmitting the ID data and the history data of an advertisement to the host device 30, in step 3, the processing/control part 41 examines whether or not a deletion command is issued to the advertisement stored in the storage part 42, whether or not the remaining display period has reached less than zero (Tr < 0), and whether or not the remaining number of times of displays until the upper limit display number is reached is zero (i.e., whether or not Ku = 0).
With respect to an advertisement to which a deletion command is not issued and for which the remaining display period is zero or more and the remaining number of times of displays is more than zero, the processing/control part 41 maintains the ID data of the advertisement as it stands, and deletes only the transmitted history data from the storage part 42, in step 4.
With respect to an advertisement to which a deletion command is issued, an advertisement for which remaining display period is less than zero, and an advertisement for which remaining number of times of displays is zero, the processing/control part 41 deletes both the ID data and the history data from the storage part 42, in step 5.
The storage part 42 of the receiver 40 stores a computer program for performing the above steps.

H'. Steps on the transmitting side for processing and controlling history data fed back from a receiver:

The steps of item H' are steps corresponding to the steps described in item H of the above first embodiment (the steps of Fig. 15), and are performed in the similar manner as the steps described in item H. However, the second embodiment is different in that the upper limit display number (control coefficient Ku) is used instead of the averaged display number (control variable Ka) used in the first embodiment. That is, the second embodiment is different in that the control coefficient Ka for the upper limit display number among the control coefficients to be objects of the control variable application command included in the advertisement command signal is replaced by the control coefficient Ku for the upper limit display number.
The storage part 32 of the host device 30 stores a computer program for performing the above steps.

I'. Steps on the transmitting side for generating statistical data based on history data fed back from the receiving side:

The steps of item I' are steps corresponding to the steps described in item I of the above first embodiment (the steps of Fig. 16), and are performed in a similar manner to the steps described in item I.
The storage part 32 of the host device 30 stores a computer program for performing the above steps.
A series of steps from receiving of a request for an advertisement by the host device 30, through displaying of the advertisement on each receiver 40, to distributing of advertisement fees to each broadcasting (program) company after completion of display of the advertisement are completed as described above.
Further, in the present invention, kinds of main classifications of audience group specifying category data and sub-classifications (categories) of each main classification can be appropriately increased or decreased if necessary. In addition, restrictions and rules that are applied when a sponsor assigns a numerical value (a weight value) to each category can be changed arbitrarily.
In addition, in an example, kinds of time slots of the preferred display time can be increased or decreased appropriately if necessary. In addition, restrictions and rules that are applied when a sponsor assigns a numerical value (a weight value) to each time slot can also be changed arbitrarily.
In addition, in determination of priority orders, there may be a case that a value of a control coefficient of a certain advertisement and a value of a control coefficient of another advertisement become the same and, thus, priority orders of these advertisements become the same. In such a case, the advertisement that was stored earlier is displayed first, or the advertisement that has an ID number, which is attached to the advertisement, higher in place is displayed first, for example.
In addition, in the above description, an example is described in which the transmitting side transmits advertisement data and additional data therefrom and the receiving side selects and stores the advertisement data and the additional data. However, advertisement data and additional data may be stored in a recording medium such as a magnetic disk or an optical disk at the transmitting side, and the recording medium may be passed to the receiving side.

In addition, although an example in which both sounds and images are reproduced is described in the above examples, the advertisement data reproducing method of the present invention can be used for reproducing either sounds or images only.

Effects of the invention

As described above, a plurality of pieces of advertisement data are stored in a viewer/listener side, and, when the stored advertisement data is reproduced by a receiver, weighting for priority of display is executed with respect to each piece of the advertisement data, a priority order for reproducing each piece of advertisement data on the receiver is determined based on the weighting, and, in response to an advertisement data reproduction command, the pieces of stored advertisement data are reproduced in accordance with the priority order.

The present invention allows a sponsor to weight an advertisement based on a characteristic inherent in the advertisement, allows respective advertisements to be reproduced with a condition that optimally matches the characteristic inherent in the advertisement before a viewer/listener, thereby realizing advertisement effects that the sponsor desires.

An Example has a technical effect that a publicity effect of an advertisement can be significantly increased compared with a conventional advertisement reproducing technology with which advertisements are reproduced in a fixed order.

Also, since a higher priority order is given to an advertisement with a short display period to read out and display the advertisement preferentially, there is an effect that, even if a display period is short, a predetermined number of times of displays can be attained.

Also, for each receiver, an averaged display number of each advertisement, which is required on each receiver in order to complete a predetermined total number of times of displays within a predetermined period, is set, a higher priority order is given to an advertisement which has the large remaining number of times of displays until the averaged display number of each advertisement is reached, and such an advertisement is read out and displayed preferentially.

Therefore, there is an effect that it is possible to attain a predetermined number of times of displays within a predetermined display period even if the large number of times of displays remains, and that a situation in which a certain advertisement is displayed too many times in a specific receiver is prevented.

Also, a high priority order is given to an advertisement having a high degree of coincidence between information specifying an audience group targeted by an advertisement and information specifying an audience group to which a viewer/listener of a receiver belongs, and such an advertisement is read out and displayed preferentially. That is, since an advertisement that a viewer/listener seems to wish to see is displayed preferentially, attention of the viewer/listener can be drawn. Therefore, there is an effect that effects and efficiency of an advertisement are extremely improved. Moreover, it is also convenient for a viewer/listener because the viewer/listener can preferentially see an advertisement that the viewer/listener wishes to see or may be interested in.

Also, a predetermined display order of advertisements is defined, a high priority order is assigned to the advertisements in order from the top of the predetermined display order to preferentially read out and display the advertisement that is given a high priority order; and a new predetermined display order is defined after displaying the advertisement(s), a high priority order is again assigned to the advertisements in order from the top of the predetermined display order to preferentially read out and display the advertisement that is given a high priority order. Therefore, attention of a viewer/listener can be drawn compared with the case in which advertisements are repeatedly displayed in the same order or the case in which the same advertisements are continuously displayed. Consequently, significantly improved effects and efficiency of an advertisement can be attained.

Also, each advertisement stored on each receiving side is preferentially displayed in a time slot that matches to the lifestyle of a viewer/listener targeted by the advertisement and a time slot that conforms to the nature of goods that is publicized by the advertisement. Therefore, an advertisement that a viewer/listener seems to wish to see is preferentially displayed in a time slot in which the viewer/listener is viewing/listening to a program and attention of the viewer/listener can be drawn, whereby significant improvements in the effects and efficiency of an advertisement is attained.

Also, a viewer/listener of a receiver can indicate a taste (preference) with respect to an attribute of each advertisement stored on the receiving side, the priority order of displaying advertisements is determined based on the viewer/listener-indicated taste with respect to the attributes of the advertisements, and the advertisements are displayed in accordance with the priority order. Therefore, for a viewer/listener, since an advertisement suitable for the viewer/listener is preferentially displayed, there is an effect that the viewer/listener can obtain more of his/her desired information.

Also, for each receiver, an upper limit display number is set, wherein the upper limit display number reflects the degree of coincidence between an advertisement and a viewer/listener, mutually supplements shortage of the number of times of displays on receivers to attain a predetermined total number of times of displays, and prevents a certain advertisement from being displayed too many times on each receiver; a high priority order is given to an advertisement which has a large remaining number of times of displays until the upper limit display number is reached; and such an advertisement is read out and displayed preferentially. Therefore, there is an effect that, even if a large number of times of displays remains, it is possible to attain a predetermined number of times of displays within a predetermined display period, and a certain advertisement is prevented from being displayed too many times in a specific receiver. In addition, an advertisement that a viewer/listener seems to wish to see is displayed many times and attention of a viewer/listener can be drawn. Therefore, there is an effect that effects and efficiency of an advertisement are extremely improved. In addition, for a viewer/listener, since the number of times of displaying an advertisement suitable for the viewer/listener increases and the number of times of displaying an advertisement not suitable for the viewer/listener decreases, there is an effect that the viewer/listener can obtain more of his/her desired information.

Also, a priority order which is not biased to a specific determination element can be given by comprehensively taking a plurality of determination elements of a priority order into consideration. Therefore, there is an effect that appropriateness of a priority order given to each advertisement is improved.

Also, display states of an advertisement on a receiver is confirmed on a host side, and display of an advertisement stored on each receiver is controlled from the host side according to the display states. That is, it is possible to apply advertisement display control of higher accuracy to all receivers from the host side. Therefore, for example, in the event of an unexpected accident, even if the total number of times of displays ordered by a sponsor cannot be attained within a predetermined period by an ordinary advertisement displaying operation, the required number of times of displays can be attained within the predetermined period by controlling the receiver from the host side.

Also, it is possible to designate an advertisement that should be displayed most preferentially and, if the designated advertisement is stored on a receiving side, the receiver is controlled such that the advertisement is displayed most preferentially. Therefore, if a sponsor designates a date, a time slot, a program, etc., that an advertisement is to be displayed, the advertisement can be displayed as designated. Thus there is an effect that the sponsor can be satisfied, and there is an effect that an advertisement frame can be sold more easily. In addition, there is an effect that, if it is necessary to display a certain advertisement urgently, the advertisement can be easily inserted in a desired advertisement frame.

## Claims

1. An advertisement data reproducing method wherein advertisement data for each of a plurality of advertisements are stored at a viewer/listener side and the advertisement data is reproduced on a receiver at the viewer/listener side, the method comprises the steps of:

   in the viewer/listener side,

      (1) storing data which characterizes audience groups to which the viewer/listener, who views/listens to the advertisement data on the receiver, belongs,
      (2) storing the advertisement data of each of the advertisements to which data characterizing audience groups which are targets of the advertisement data of the advertisement has been added,
      (3) determining the appropriate number of times of reproduction of the advertisement data of each of the advertisements on the receiver, based on a degree of coincidence between (i) the data characterizing audience groups to which the viewer/listener belongs and (ii) the data that has been added to the advertisement data of the advertisement stored in the viewer/listener side and characterizes the audience groups which are targets of the advertisement data of the advertisement,
      (4) determining a priority order for reproducing the advertisement data of each advertisement on the receiver, and
      (5) reproducing the advertisement data of one or more advertisements in accordance with the priority order.

2. The advertisement data reproducing method set forth in claim 1 **characterized in that**
   data representing the predetermined number of times of reproduction of the advertisement data of each advertisement has been added to the advertisement data of the advertisement, and the step of item (2) comprises a step of storing, in association with the advertisement data of the advertisement, data representing the predetermined number of times of reproduction of the advertisement data of the advertisement, and
   the step of item (3) comprises a step of determining the appropriate number of times of reproduction of the advertisement data of each advertisement on the receiver, based on the degree of coincidence and the predetermined number of times of reproduction of the advertisement data of the advertisement.

3. The advertisement data reproducing method set forth in claim 2 **characterized in that** the data representing the predetermined number of times of reproduction of the advertisement data of the advertisement represents the contracted total number of times of reproduction of the advertisement data of the advertisement.

4. The advertisement data reproducing method set forth in claim 3 **characterized in that** the appropriate number of times of reproduction which is determined based on the degree of coincidence in the step of item (3) is determined in such a manner that the appropriate number of times of reproduction exceeds the number of times of reproduction which is the minimum required for the receiver in order for a total of the numbers of reproduction of the advertisement data of the advertisement on all the receivers which store the advertisement data of the advertisement to just reach the contracted total number of times of reproduction.

5. The advertisement data reproducing method set forth in claims 3 or 4 **characterized in that**
the data characterizing the audience groups to which the viewer/listener belongs of the step of item (1) comprises first data representing one or more categories which specify the audience groups to which the viewer/listener belongs; wherein the first data which represents the one or more categories is selected from category data for specifying audience groups, wherein the category data for specifying audience groups comprises one or more items and each item comprises one or more categories for specifying audience groups,
the data characterizing audience groups which are targets of the advertisement data of the advertisement of the step of item (2) comprises second data representing one or more categories which specify the audience groups which are targets of the advertisement data of the advertisement, and data representing a value of a coefficient which represents a weight assigned to each of the selected categories; wherein the second data which represents the one or more categories is selected from the category data for specifying audience groups, and wherein a value representing a greater weight is assigned to a selected category having more importance,
data representing the number of viewers/listeners who belong to each of the categories specifying the audience groups which are the targets of the advertisement data of the advertisement has been added to the advertisement data of the advertisement, and the step of item (2) comprises a step of storing, in association with the advertisement data of the advertisement, the data representing the number of viewers/listeners who belong to each of the categories specifying the audience groups which are the targets of the advertisement data of the advertisement, and
the step of item (3) comprises steps of, for the advertisement data of each of the advertisements,

> (3a) based on the data representing the value of the coefficient representing the weight assigned to each of the categories represented by the second data which coincide with the categories represented by the first data, determining, with respect to each of the coincided categories, the value of the coefficient which represents the degree of coincidence between the audience groups targeted by the advertisement and the audience groups to which the viewer/listener of the receiver belongs,
> (3b) applying each value of the coefficient representing the degree of coincidence, which is obtained with respect to each coincided category in the step of item (3a), to the contracted total number of times of reproduction; whereby, for each coincided category, obtaining the total number of times of reproduction in which the degree of coincidence with respect to the coincided category is taken into consideration,
> (3c) dividing the total number of times of reproduction, which is obtained in the step of item (3b) and in which the degree of coincidence is taken into consideration, with respect to each coincided category by the number of viewers/listeners who belong to the coincided category; whereby, for each coincided category, obtaining the number of times of reproduction in which the number of viewers/listeners belonging to the coincided category is taken into consideration,
> (3d) based on the numbers of reproduction, which are obtained in the step of item (3c) and in which the numbers of viewers/listeners belonging to the respective coincided categories are taken into consideration, determining the appropriate number of times of reproduction to be assigned to the viewer/listener.

6. The advertisement data reproducing method set forth in any one of claims 1 to 5 **characterized in that** it further comprises steps of
in the viewer/listener side,

> (A) based on the appropriate number of times of reproduction of the advertisement data of each advertisement, which is determined in the step of item (3), determining a remaining number of times of reproduction of the advertisement data of the advertisement,
> (B) for the remaining number of times of reproduction of the advertisement data of each advertisement, determining a value of a coefficient representing a weight, wherein a heavier weight is given to a greater remaining number of times of reproduction,

(C) based on the value of the coefficient determined for the advertisement data of each advertisement, determining a priority order for reproducing the advertisement data of each advertisement on the receiver,
(D) selecting the advertisement data of one or more advertisements to be reproduced on the receiver from the stored advertisement data of the plurality of advertisements, based on the priority order, and
(E) reproducing the advertisement data of the one or more advertisements selected in the step of item (D) on the receiver in accordance with the priority order.

7. The advertisement data reproducing method set forth in any one of claims 1 to 6 **characterized in that** the appropriate number of times of reproduction of the advertisement data of each advertisement, which is determined in the step of item (3), is the number of times of reproduction which is defined as an upper limit of the number of times for reference which the receiver may reproduce the advertisement data of the advertisement.

8. An advertisement data reproducing apparatus comprising means for storing advertisement data of each of a plurality of advertisements at a viewer/listener side and a receiver for reproducing the advertisement data at the viewer/listener side, the apparatus comprises:

(1) means (42) for storing data which characterizes audience groups to which the viewer/listener, who views/listens to the advertisement data on the receiver, belongs,
(2) means (42) for storing the advertisement data of each advertisement to which data characterizing audience groups which are targets of the advertisement data of the advertisement has been added,
(3) means (41) for determining the appropriate number of times of reproduction of the advertisement data of each of the advertisements on the receiver, based on a degree of coincidence between (i) the data characterizing audience groups to which the viewer/listener belongs and (ii) the data that has been added to the advertisement data of the advertisement stored in the viewer/listener side and characterizes the audience groups which are targets of the advertisement data of the advertisement,
(4) means for determining a priority order for reproducing the advertisement data of each advertisement on the receiver, and
(5) means for reproducing the advertisement data of one or more advertisements in accordance with the priority order.

9. The advertisement data reproducing apparatus set forth in claim 8 **characterized in that**
data representing the predetermined number of times of reproduction of the advertisement data of each advertisement has been added to the advertisement data of the advertisement, and the means of item (2) comprises means for storing, in association with the advertisement data of the advertisement, data representing the predetermined number of times of reproduction of the advertisement data of the advertisement, and
the means of item (3) comprises means for determining the appropriate number of times of reproduction of the advertisement data of each advertisement on the receiver, based on the degree of coincidence and the predetermined number of times of reproduction of the advertisement data of the advertisement.

10. The advertisement data reproducing apparatus set forth in claim 9 **characterized in that** the data representing the predetermined number of times of reproduction of the advertisement data of the advertisement represents the contracted total number of times of reproduction of the advertisement data of the advertisement.

11. The advertisement data reproducing apparatus set forth in claim 10 **characterized in that** the appropriate number of times of reproduction which is determined based on the degree of coincidence by the means of item (3) is determined in such a manner that the appropriate number of times of reproduction exceeds the number of times of reproduction which is the minimum required for the receiver in order for a total of the numbers of reproduction of the advertisement of the advertisement on all the receivers, which store the advertisement data of the advertisement, to just reach the contracted total number of times of reproduction.

12. The advertisement data reproducing apparatus set forth in claim 10 or 11 **characterized in that**
the data characterizing the audience groups to which the viewer/listener belongs, which is stored by the means of item (1), comprises first data representing one or more categories which specify the audience groups to which the viewer/listener belongs; wherein the first data which represents the one or more categories is selected from category data for specifying audience groups, wherein the category data for specifying audience groups comprises one or more items and each item comprises one or more categories for specifying audience groups,
the data characterizing audience groups which are targets of the advertisement data of the advertisement, which is stored by the means of item (2), comprises second data representing one or more categories which specify the audience groups which are targets of the advertisement data of the advertisement, and data representing a value of a coefficient which represents a weight assigned to each of the selected categories; wherein the second data which represents the one or more categories is selected from the category data for specifying audience groups, and wherein a value representing a greater weight is assigned to a selected category having more importance, data representing the number of viewers/listeners who belong to each of the categories specifying the audience groups which are the targets of the advertisement data of the advertisement has been added to the advertisement data of the advertisement, and the means of item (2) comprises means for storing, in association with the advertisement data of the advertisement, the data representing the number of viewers/listeners who belong to each of the categories specifying the audience groups which are the targets of the advertisement data of the advertisement, and

the means of item (3) comprises, for the advertisement data of each of the advertisements,

(3a) means for determining, based on the data representing the value of the coefficient representing the weight assigned to each of the categories represented by the second data which coincide with the categories represented by the first data, with respect to each of the coincided categories, the value of the coefficient which represents the degree of coincidence between the audience groups targeted by the advertisement and the audience groups to which the viewer/listener of the receiver belongs,
(3b) means for applying each value of the coefficient representing the degree of coincidence, which is obtained with respect to each coincided category by the means of item (3a), to the contracted total number of times of reproduction for obtaining, for each coincided category, the total number of times of reproduction in which the degree of coincidence with respect to the coincided category is taken into consideration,
(3c) means for dividing the total number of times of reproduction, which is obtained by the means of item (3b) and in which the degree of coincidence is taken into consideration, with respect to each coincided category by the number of viewers/listeners who belong to the coincided category for obtaining, for each coincided category, the number of times of reproduction in which the number of viewers/listeners belonging to the coincided category is taken into consideration,
(3d) means for determining, based on the numbers of reproduction, which are obtained by the means of item (3c) and in which the numbers of viewers/listeners belonging to the respective coincided categories are taken into consideration, the appropriate number of times of reproduction to be assigned to the viewer/listener.

13. The advertisement data reproducing apparatus set forth in any one of claims 8 to 12 **characterized in that** it further comprises, in the viewer/listener side,

(A) means for determining, based on the appropriate number of times of reproduction of the advertisement data of each advertisement, which is determined by the means of item (3), a remaining number of times of reproduction of the advertisement data of the advertisement,
(B) means for determining, for the remaining number of times of reproduction of the advertisement data of the advertisement, a value of a coefficient representing a weight, wherein a heavier weight is given to a greater remaining number of times of reproduction,
(C) means for determining, based on the value of the coefficient determined for the advertisement data of each advertisement, a priority order for reproducing the advertisement data of each advertisement on the receiver,
(D) means for selecting the advertisement data of on or more advertisements to be reproduced on the receiver from the stored advertisement data of the plurality of advertisements, based on the priority order, and
(E) means for reproducing the advertisement data of the one or more advertisements selected by the means of item (D) on the receiver in accordance with the priority order.

14. The advertisement data reproducing apparatus set forth in any one of claims 8 to 13 **characterized in that** the appropriate number of times of reproduction of the advertisement data of each advertisement, which is determined by the means of item (3), is the number of times of reproduction which is defined as an upper limit of the number of times for reference which the receiver may reproduce the advertisement data of the advertisement.

15. A storage medium for storing a program which enables a computer to carry out an advertisement data reproducing procedure in which advertisement data for each of a plurality of advertisements are stored at a viewer/listener side and the advertisement data is reproduced on a receiver at the viewer/listener side, the procedure comprises the steps of:

in the viewer/listener side,

(1) storing data which characterizes audience groups to which the viewer/listener, who views/listens to the advertisement data on the receiver, belongs,

(2) storing the advertisement data of each of the advertisements to which data characterizing audience groups which are targets of the advertisement data of the advertisement has been added,

(3) determining the appropriate number of times of reproduction of the advertisement data of each of the advertisements on the receiver, based on a degree of coincidence between (i) the data characterizing audience groups to which the viewer/listener belongs and (ii) the data that has been added to the advertisement data of the advertisement stored in the viewer/listener side and characterizes the audience groups which are targets of the advertisement data of the advertisement,

(4) determining a priority order for reproducing the advertisement data of each advertisement on the receiver, and

(5) reproducing the advertisement data of one or more advertisements in accordance with the priority order.

**16.** The storage medium set forth in claim 15 **characterized in that**
data representing the predetermined number of times of reproduction of the advertisement data of each advertisement has been added to the advertisement data of the advertisement, and the step of item (2) comprises a step of storing, in association with the advertisement data of the advertisement, data representing the predetermined number of times of reproduction of the advertisement data of the advertisement, and
the step of item (3) comprises a step of determining the appropriate number of times of reproduction of the advertisement data of each advertisement on the receiver, based on the degree of coincidence and the predetermined number of times of reproduction of the advertisement data of the advertisement.

**17.** The storage medium set forth in claim 16 **characterized in that** the data representing the predetermined number of times of reproduction of the advertisement data of the advertisement represents the contracted total number of times of reproduction of the advertisement data of the advertisement.

**18.** The storage medium set forth in claim 17 **characterized in that** the appropriate number of times of reproduction which is determined based on the degree of coincidence in the step of item (3) is determined in such a manner that the appropriate number of times of reproduction exceeds the number of times of reproduction which is the minimum required for the receiver in order for a total of the numbers of reproduction of the advertisement data of the advertisement on all the receivers which store the advertisement data of the advertisement to just reach the contracted total number of times of reproduction.

**19.** The storage medium set forth in claim 17 or 18 **characterized in that**
the data characterizing the audience groups to which the viewer/listener belongs of the step of item (1) comprises first data representing one or more categories which specify the audience groups to which the viewer/listener belongs; wherein the first data which represents the one or more categories is selected from category data for specifying audience groups, wherein the category data for specifying audience groups comprises one or more items and each item comprises one or more categories for specifying audience groups,
the data characterizing audience groups which are targets of the advertisement data of the advertisement of the step of item (2) comprises second data representing one or more categories which specify the audience groups which are targets of the advertisement data of the advertisement, and data representing a value of a coefficient which represents a weight assigned to each of the selected categories; wherein the second data which represents the one or more categories is selected from the category data for specifying audience groups, and wherein a value representing a greater weight is assigned to a selected category having more importance,
data representing the number of viewers/listeners who belong to each of the categories specifying the audience groups which are the targets of the advertisement data of the advertisement has been added to the advertisement data of the advertisement, and the step of item (2) comprises a step of storing, in association with the advertisement data of the advertisement, the data representing the number of viewers/listeners who belong to each of the categories specifying the audience groups which are the targets of the advertisement data of the advertisement, and
the step of item (3) comprises steps of, for the advertisement data of each of the advertisements,

(3a) based on the data representing the value of the coefficient representing the weight assigned to each of the categories represented by the second data which coincide with the categories represented by the first data, determining, with respect to each of the coincided categories, the value of the coefficient which represents the degree of coincidence between the audience groups targeted by the advertisement and the audience groups to which the viewer/listener of the receiver belongs,

(3b) applying each value of the coefficient representing the degree of coincidence, which is obtained with respect to each coincided category in the step of item (3a), to the contracted total number of times of reproduction; whereby, for each coincided category, obtaining the total number of times of reproduction in which the degree of coincidence with respect to the coincided category is taken into consideration,

(3c) dividing the total number of times of reproduction, which is obtained in the step of item (3b) and in which the degree of coincidence is taken into consideration, with respect to each coincided category by the number of viewers/listeners who belong to the coincided category; whereby, for each coincided category, obtaining the number of times of reproduction in which the number of viewers/listeners belonging to the coincided category is taken into consideration,

(3d) based on the numbers of reproduction, which are obtained in the step of item (3c) and in which the numbers of viewers/listeners belonging to the respective coincided categories are taken into consideration, determining the appropriate number of times of reproduction to be assigned to the viewer/listener.

20. The storage medium set forth in any one of claims 15 to 19 **characterized in that** the procedure further comprises steps of,

in the viewer/listener side,

(A) based on the appropriate number of times of reproduction of the advertisement data of each advertisement, which is determined in the step of item (3), determining a remaining number of times of reproduction of the advertisement data of the advertisement,

(B) for the remaining number of times of reproduction of the advertisement data of each advertisement, determining a value of a coefficient representing a weight, wherein a heavier weight is given to a greater remaining number of times of reproduction,

(C) based on the value of the coefficient determined for the advertisement data of the advertisement, determining a priority order for reproducing the advertisement data of each advertisement on the receiver,

(D) selecting the advertisement data of one or more advertisements to be reproduced on the receiver from the stored advertisement data of the plurality of advertisements, based on the priority order, and

(E) reproducing the advertisement data of the one or more advertisements selected in the step of item (D) on the receiver in accordance with the priority order.

21. The storage medium set forth in any one of claims 15 to 20 **characterized in that** the appropriate number of times of reproduction of the advertisement data of each advertisement, which is determined in the step of item (3), is the number of times of reproduction which is defined as an upper limit of the number of times for reference which the receiver may reproduce the advertisement data of the advertisement.

22. A computer program which enables a computer to carry out an advertisement data reproducing procedure in which advertisement data for each of a plurality of advertisements are stored at a viewer/listener side and the advertisement data is reproduced on a receiver at the viewer/listener side, the procedure comprises the steps of:

in the viewer/listener side,

(1) storing data which characterizes audience groups to which the viewer/listener, who views/listens to the advertisement data on the receiver, belongs,

(2) storing the advertisement data of each of the advertisements to which data characterizing audience groups which are targets of the advertisement data of the advertisement has been added,

(3) determining the appropriate number of times of reproduction of the advertisement data of each of the advertisements on the receiver, based on a degree of coincidence between (i) the data characterizing audience groups to which the viewer/listener belongs and (ii) the data that has been added to the advertisement data of the advertisement stored in the viewer/listener side and characterizes the audience groups which are targets of the advertisement data of the advertisement,

(4) determining a priority order for reproducing the advertisement data of each advertisement on the receiver, and

(5) reproducing the advertisement data of one or more advertisements in accordance with the priority order.

23. The computer program set forth in claim 22 **characterized in that**

data representing the predetermined number of times of reproduction of the advertisement data of each advertisement has been added to the advertisement data of the advertisement, and the step of item (2) comprises a step of storing, in association with the advertisement data of the advertisement, data representing the predetermined number of times of reproduction of the advertisement data of the advertisement, and

the step of item (3) comprises a step of determining the appropriate number of times of reproduction of the advertisement data of each advertisement on the receiver, based on the degree of coincidence and the predetermined number of times of reproduction of the advertisement data of the advertisement.

24. The computer program set forth in claim 23 **characterized in that** the data representing the predetermined number of times of reproduction of the advertisement data of the advertisement represents the contracted total number of times of reproduction of the advertisement data of the advertisement.

25. The computer program set forth in claim 24 **characterized in that** the appropriate number of times of reproduction which is determined based on the degree of coincidence in the step of item (3) is determined in such a manner that the appropriate number of times of reproduction exceeds the number of times of reproduction which is the minimum required for the receiver in order for a total of the numbers of reproduction of the advertisement data of the advertisement on all the receivers which store the advertisement data of the advertisement to just reach the contracted total number of times of reproduction.

26. The computer program set forth in claim 24 or 25 **characterized in that**
the data characterizing the audience groups to which the viewer/listener belongs of the step of item (1) comprises first data representing one or more categories which specify the audience groups to which the viewer/listener belongs; wherein the first data which represents the one or more categories is selected from category data for specifying audience groups, wherein the category data for specifying audience groups comprises one or more items and each item comprises one or more categories for specifying audience groups,
the data characterizing audience groups which are targets of the advertisement data of the advertisement of the step of item (2) comprises second data representing one or more categories which specify the audience groups which are targets of the advertisement data of the advertisement, and data representing a value of a coefficient which represents a weight assigned to each of the selected categories; wherein the second data which represents the one or more categories is selected from the category data for specifying audience groups, and wherein a value representing a greater weight is assigned to a selected category having more importance,
data representing the number of viewers/listeners who belong to each of the categories specifying the audience groups which are the targets of the advertisement data of the advertisement has been added to the advertisement data of the advertisement, and the step of item (2) comprises a step of storing, in association with the advertisement data of the advertisement, the data representing the number of viewers/listeners who belong to each of the categories specifying the audience groups which are the targets of the advertisement data of the advertisement, and
the step of item (3) comprises steps of, for the advertisement data of each of the advertisements,

 (3a) based on the data representing the value of the coefficient representing the weight assigned to each of the categories represented by the second data which coincide with the categories represented by the first data, determining, with respect to each of the coincided categories, the value of the coefficient which represents the degree of coincidence between the audience groups targeted by the advertisement and the audience groups to which the viewer/listener of the receiver belongs,
 (3b) applying each value of the coefficient representing the degree of coincidence, which is obtained with respect to each coincided category in the step of item (3a), to the contracted total number of times of reproduction; whereby, for each coincided category, obtaining the total number of times of reproduction in which the degree of coincidence with respect to the coincided category is taken into consideration,
 (3c) dividing the total number of times of reproduction, which is obtained in the step of item (3b) and in which the degree of coincidence is taken into consideration, with respect to each coincided category by the number of viewers/listeners who belong to the coincided category; whereby, for each coincided category, obtaining the number of times of reproduction in which the number of viewers/listeners belonging to the coincided category is taken into consideration,
 (3d) based on the numbers of reproduction, which are obtained in the step of item (3c) and in which the numbers of viewers/listeners belonging to the respective coincided categories are taken into consideration, determining the appropriate number of times of reproduction to be assigned to the viewer/listener.

27. The computer program set forth in any one of claims 22 to 26 **characterized in that** the procedure further comprises steps of,
in the viewer/listener side,

 (A) based on the appropriate number of times of reproduction of the advertisement data of each advertisement, which is determined in the step of item (3), determining a remaining number of times of reproduction of the advertisement data of the advertisement,

(B) for the remaining number of times of reproduction of the advertisement data of each advertisement, determining a value of a coefficient representing a weight, wherein a heavier weight is given to a greater remaining number of times of reproduction,

(C) based on the value of the coefficient determined for the advertisement data of each advertisement, determining a priority order for reproducing the advertisement data of each advertisement on the receiver,

(D) selecting the advertisement data of on e or more the advertisements to be reproduced on the receiver from the stored advertisement data of the plurality of advertisements, based on the priority order, and

(E) reproducing the advertisement data of the one or more advertisements selected in the step of item (D) on the receiver in accordance with the priority order.

**28.** The computer program set forth in any one of claims 22 to 27 **characterized in that** the appropriate number of times of reproduction of the advertisement data of each advertisement, which is determined in the step of item (3), is the number of times of reproduction which is defined as an upper limit of the number of times for reference which the receiver may reproduce the advertisement data of the advertisement.


**Patentansprüche**

**1.** Werbungsdaten-Reproduzierverfahren, wobei Werbungsdaten für eine Vielzahl von Werbungen an einer Betrachter/Zuhörerseite gespeichert sind und die Werbungsdaten an einem Empfänger an der Betrachter/Zuhörerseite reproduziert werden, wobei das Verfahren die Schritte umfasst:

an der Betrachter/Zuhörerseite,

(1) Speichern von Daten, welche die Publikumsgruppe kennzeichnen zu welcher der Betrachter/Zuhörer gehört, welcher die Werbungsdaten an dem Empfänger betrachet/zuhört,

(2) Speichern der Werbungsdaten an jeder der Werbungen, zu welcher Daten hinzugefügt werden, die Publikumsgruppen charakteristisieren, welches Ziele der Werbungsdaten der Werbung sind,

(3) Bestimmen der angemessenen Zahl von Malen der Reproduktion den Werbungsdaten von jeder der Werbungen an dem Empfänger, basierend auf dem Grad von Übereinstimmung zwischen (i) der Daten, die die Publikumsgruppen kennzeichnen, zu welcher der Betrachter/Zuhörer gehört und (ii) den Daten, die zu den Werbungsdaten der Werbung gefügt wurden, die auf der Betrachter/Zuhörerseite gespeichert sind und die Publikumsgruppen kennzeichnen, welches Ziele der Werbungsdaten der Werbung sind,

(4) Bestimmen einer Prioritätsordnung zur Reproduktion der Werbungsdaten für jede Werbung auf dem Empfänger, und

(5) Reproduzieren der Werbungsdaten von einem oder mehreren Werbungen in Übereinstimmung mit der Prioritätsordnung.

**2.** Werbungsdaten-Reproduktionsverfahren nach Anspruch 1, **dadurch gekennzeichnet, dass**

Daten, die die vorbestimmte Zahl von Malen der Reproduktion der Werbungsdaten von jeder Werbung repräsentieren, zu den Werbungsdaten der Werbung hinzugefügt werden, und der Schritt von Element (2) einen Schritt des Speicherns von Daten umfasst, in Assoziation mit der Werbungsdaten der Werbung, die die vorbestimmte Zahl von Malen der Reproduktion der Werbungsdaten der Werbung repräsentieren, und

der Schritt von Element (3) einen Schritt umfasst des Bestimmens der angemessenen Zahl von Malen der Reproduktion der Werbungsdaten für jede Werbung an dem Empfänger, basierend auf dem Grad von Übereinstimmung und der vorbestimmten Zahl von Malen der Reproduktion der Werbungsdaten der Werbung.

**3.** Werbungsdaten-Reproduktionsverfahren nach Anspruch 2, **dadurch gekennzeichnet, dass** die Daten, die die vorbestimmte Zahl von Malen der Reproduktion der Werbungsdaten der Werbung repräsentieren, die vereinbarte Gesamtzahl von Malen der Reproduktion der Werbungsdaten der Werbung repräsentieren.

**4.** Werbungsdaten-Reproduktionsverfahren nach Anspruch 3, **dadurch gekennzeichnet, dass** die angemessene Zahl von Malen der Reproduktion, welche basierend auf dem Grad von Übereinstimmung in dem Schritt von Element (3) bestimmt wird, in einer Weise bestimmt wird, dass die angemessene Zahl von Malen der Reproduktion die Zahl von Malen der Reproduktion überschreitet, welches das Minimum ist, das für den Empfänger benötigt wird dafür, dass eine Gesamtheit der Zahl von Reproduktionen der Werbungsdaten der Werbung an allen Empfängern, welche die Werbungsdaten der Werbung speichern, lediglich die vereinbarte Gesamtzahl von Malen der Reproduktion erreicht.

**5.** Werbungsdaten-Reproduktionsverfahren nach Anspruch 3 oder 4, **dadurch gekennzeichnet, dass**
die Daten, die die Publikumsgruppen kennzeichnen, zu welcher der Betrachter/Zuhörer gehört, des Schritts von Element (1) erste Daten umfasst, die eine oder mehrere Kategorien repräsentieren, welche die Publikumsgruppen spezifizieren, zu welchen der Betrachter/Zuhörer gehört; wobei die ersten Daten, welche die einen oder mehreren Kategorien repräsentieren, aus Kategoriedaten zum Spezifizieren von Publikumsgruppen ausgewählt werden, wobei die Kategoriedaten zum Spezifizieren von Publikumsgruppen einen oder mehrere Elemente umfassen und jedes Element eine oder mehrere Kategorien umfasst zum Spezifizieren von Publikumsgruppen,

die Daten, die Publikumsgruppen kennzeichnen, welches Ziele von Werbungsdaten der Werbung des Schritts von Element (2) sind, zweite Daten umfassen, die einen oder mehrere Kategorien repräsentieren, welche Publikumsgruppen spezifizieren, welches Ziele von Werbungsdaten der Werbung sind, und Daten, die einen Wert eines Koeffizienten repräsentieren, welcher eine Gewichtung repräsentiert, welche zu jeder der ausgewählten Kategorien assoziiert ist; wobei die zweiten Daten, welche die einen oder mehreren Kategorien repräsentieren, aus den Kategoriedaten zum Spezifizieren von Publikumsgruppen ausgewählt sind, und wobei ein Wert, der ein größeres Gewicht repräsentiert zu einer ausgewählten Kategorie mit höherer Wichtigkeit zugeordnet ist;

Daten, die die Zahl von Betrachtern/Zuhörern repräsentieren, die zu jeder der Kategorien gehören, die die Publikumsgruppen spezifizieren, welches die Ziele der Werbungsdaten der Werbung sind, zu den Werbungsdaten der Werbung hinzugefügt werden, und der Schritt von Element (2) einen Schritt umfasst des Speicherns, in Assoziation mit den Werbungsdaten der Werbung, der Daten, die die Zahl von Betrachtern/Zuhörern repräsentieren, welche zu jeder der Kategorien gehören, welche die Publikumsgruppen spezifizieren, welche die Ziele der Werbungsdaten der Werbung sind, und

der Schritt von Element (3) die Schritte umfasst, für die Werbungsdaten von jeder der Werbungen,

(3a) basierend auf den Daten, die den Wert des Koeffizienten repräsentieren, der das Gewicht repräsentiert, das zu jeder der Kategorien zugeordnet ist, das durch die zweiten Daten repräsentiert wird, welches mit den Kategorien übereinstimmen, die durch die ersten Daten repräsentiert werden, Bestimmen, mit Bezug auf jede der übereinstimmenden Kategorien, den Wert des Koeffizienten, welcher den Grad der Übereinstimmung zwischen den Publikumsgruppen, die durch die Werbung anvisiert werden und die Publikumsgruppen, zu welcher der Betrachter/Zuhörer des Empfängers gehört, repräsentiert,

(3b) Anwenden jedes Werts des Koeffizienten, der den Grad von Übereinstimmung repräsentiert, welcher erhalten wird mit Bezug auf jede übereinstimmende Kategorie in dem Schritt von Element (3a), zu der vereinbarten Gesamtzahl von Malen der Reproduktion; wobei, für jede übereinstimmende Kategorie die Gesamtzahl der Male der Reproduktion erlangt wird, in welcher der Grad von Übereinstimmung mit Bezug auf die übereinstimmende Kategorie in Betracht gezogen wird,

(3c) Teilen der Gesamtzahl von Malen der Reproduktion, welche in dem Schritt von Element (3b) erlangt wird und in welchem der Grad von Übereinstimmung in Betracht gezogen wird, mit Bezug auf jede übereinstimmende Kategorie, durch die Zahl von Betrachtern/Zuhörern, welche zu der übereinstimmenden Kategorie gehören; wobei, für jede übereinstimmende Kategorie, die Zahl von Malen der Reproduktion erlangt wird, in welchem die Zahl von Betrachtern/Zuhörern, die zu der übereinstimmenden Kategorie gehören, in Betracht gezogen wird,

(3d) basierend auf den Zahlen der Reproduktion, welche in dem Schritt von Element (3c) erlangt werden, und in welchem die Zahlen der Betrachter/Zuhörer, die zu der jeweiligen übereinstimmenden Kategorie gehören, in Betracht gezogen werden, Bestimmen der angemessenen Zahl - der Male der Reproduktion, die dem Betrachter/Zuhörer zugeordnet werden sollen.

**6.** Werbungsdaten-Reproduktionsverfahren nach einem der Ansprüche 1 bis 5, **dadurch gekennzeichnet, dass** es ferner die Schritte umfasst
an der Betrachter/Zuhörerseite

(A) basierend auf der angemessenen Zahl von Malen der Reproduktion der Werbungsdaten von jeder Werbung, welche in dem Schritt von Element (3) bestimmt wird, Bestimmen einer verbleibenden Zahl von Malen der Reproduktion der Werbungsdaten der Werbung,

(B) für die verbleibende Zahl von Malen der Reproduktion der Werbungsdaten für jede Werbung, Bestimmen eines Werts eines Koeffizienten, der ein Gewicht repräsentiert, wobei ein größeres Gewicht einer größeren verbleibenden Zahl von Malen der Reproduktion zugeordnet wird,

(C) basierend auf dem Wert des Koeffizienten, der für die Werbungsdaten für jede Werbung bestimmt wird, Bestimmen einer Prioritätsordnung zum Reproduzieren der Werbungsdaten für jede Werbung an dem Empfänger,

(D) Auswählen der Werbungsdaten von einer oder mehreren Werbungen, die an dem Empfänger zu reproduzieren sind, von den gespeicherten Werbungsdaten der Vielzahl von Werbungen, basierend auf der Prioritätsordnung, und

(E) Reproduzieren der Werbungsdaten von einer oder mehreren Werbungen, die in dem Schritt von Element (D) ausgewählt wurden, an dem Empfänger in Übereinstimmung mit der Prioritätsordnung.

7. Werbungsdaten-Reproduktionsverfahren nach einem der Ansprüche 1 bis 6, **dadurch gekennzeichnet, dass** die angemessene Zahl von Malen der Reproduktion der Werbungsdaten der Werbung, welche in dem Schritt von Element (3) bestimmt wird, die Zahl von Malen der Reproduktion ist, welche als eine obere Grenze der Zahl von Malen für Referenz definiert ist, welche der Empfänger die Werbungsdaten der Werbung reproduzieren kann.

8. Werbungsdaten-Reproduktionsvorrichtung, die Mittel zum Speichern von Werbungsdaten von jeder einer Vielzahl von Werbungen an einer Betrachter/Zuhörerseite und einen Empfänger zum Reproduzieren der Werbungsdaten an der Betrachter/Zuhörerseite umfasst, die Vorrichtung umfassend:

(1) Mittel (42) zum Speichern von Daten, welche die Publikumsgruppe kennzeichnen zu welcher der Betrachter/Zuhörer gehört, welcher die Werbungsdaten an dem Empfänger betrachet/zuhört,

(2) Mittel (42) zum Speichern der Werbungsdaten an jeder der Werbungen, zu welcher Daten hinzugefügt werden, die Publikumsgruppen charakteristisieren, welches Ziele der Werbungsdaten der Werbung sind,

(3) Mittel (41) zum Bestimmen der angemessenen Zahl von Malen der Reproduktion den Werbungsdaten von jeder der Werbungen an dem Empfänger, basierend auf dem Grad von Übereinstimmung zwischen (i) der Daten, die die Publikumsgruppen kennzeichnen, zu welcher der Betrachter/Zuhörer gehört und (ii) den Daten, die zu den Werbungsdaten der Werbung gefügt wurden, die auf der Betrachter/Zuhörerseite gespeichert sind und die Publikumsgruppen kennzeichnen, welches Ziele der Werbungsdaten der Werbung sind,

(4) Mittel zum Bestimmen einer Prioritätsordnung zur Reproduktion der Werbungsdaten für jede Werbung auf dem Empfänger, und

(5) Mittel zum Reproduzieren der Werbungsdaten von einem oder mehreren Werbungen in Übereinstimmung mit der Prioritätsordnung.

9. Werbungsdaten-Reproduktionsvorrichtung nach Anspruch 8, **dadurch gekennzeichnet, dass**
Daten, die die vorbestimmte Zahl von Malen der Reproduktion der Werbungsdaten von jeder Werbung repräsentieren, zu den Werbungsdaten der Werbung hinzugefügt werden, und das Mittel von Element (2) ein Mittel zum Speichern von Daten umfasst, in Assoziation mit der Werbungsdaten der Werbung, die die vorbestimmte Zahl von Malen der Reproduktion der Werbungsdaten der Werbung repräsentieren, und
das Mittel von Element (3) ein Mittel umfasst zum Bestimmen der angemessenen Zahl von Malen der Reproduktion der Werbungsdaten für jede Werbung an dem Empfänger, basierend auf dem Grad von Übereinstimmung und der vorbestimmten Zahl von Malen der Reproduktion der Werbungsdaten der Werbung.

10. Werbungsdaten-Reproduktionsvorrichtung nach Anspruch 9, **dadurch gekennzeichnet, dass** die Daten, die die vorbestimmte Zahl von Malen der Reproduktion der Werbungsdaten der Werbung repräsentieren, die vereinbarte Gesamtzahl von Malen der Reproduktion der Werbungsdaten der Werbung repräsentieren.

11. Werbungsdaten-Reproduktionsvorrichtung nach Anspruch 10, **dadurch gekennzeichnet, dass** die angemessene Zahl von Malen der Reproduktion, welche basierend auf dem Grad von Übereinstimmung durch das Mittel von Element (3) bestimmt wird, in einer Weise bestimmt wird, dass die angemessene Zahl von Malen der Reproduktion die Zahl von Malen der Reproduktion überschreitet, welches das Minimum ist, das für den Empfänger benötigt wird dafür, dass eine Gesamtheit der Zahl von Reproduktionen der Werbungsdaten der Werbung an allen Empfängern, welche die Werbungsdaten der Werbung speichern, lediglich die vereinbarte Gesamtzahl von Malen der Reproduktion erreicht.

12. Werbungsdaten-Reproduktionsvorrichtung nach Anspruch 10 oder 11, **dadurch gekennzeichnet, dass**
die Daten, die die Publikumsgruppen kennzeichnen, zu welcher der Betrachter/Zuhörer gehört, welche durch das Mittel von Element (1) gespeichert ist, erste Daten umfasst, die eine oder mehrere Kategorien repräsentieren, welche die Publikumsgruppen spezifizieren, zu welchen der Betrachter/Zuhörer gehört; wobei die ersten Daten, welche die einen oder mehreren Kategorien repräsentieren, aus Kategoriedaten zum Spezifizieren von Publikumsgruppen ausgewählt werden, wobei die Kategoriedaten zum Spezifizieren von Publikumsgruppen einen oder mehrere Elemente umfassen und jedes Element eine oder mehrere Kategorien umfasst zum Spezifizieren von Publikumsgruppen,

die Daten, die Publikumsgruppen kennzeichnen, welches Ziele von Werbungsdaten der Werbung sind, welche durch das Mittel von Element (2) gespeichert ist, zweite Daten umfassen, die einen oder mehrere Kategorien repräsentieren, welche Publikumsgruppen spezifizieren, welches Ziele von Werbungsdaten der Werbung sind, und Daten, die einen Wert eines Koeffizienten repräsentieren, welcher eine Gewichtung repräsentiert, welche zu jeder der ausgewählten Kategorien assoziiert ist; wobei die zweiten Daten, welche die einen oder mehreren Kategorien repräsentieren, aus den Kategoriedaten zum Spezifizieren von Publikumsgruppen ausgewählt sind, und wobei ein Wert, der ein größeres Gewicht repräsentiert zu einer ausgewählten Kategorie mit höherer Wichtigkeit zugeordnet ist; Daten, die die Zahl von Betrachtern/Zuhörern repräsentieren, die zu jeder der Kategorien gehören, die die Publikumsgruppen spezifizieren, welches die Ziele der Werbungsdaten der Werbung sind, zu den Werbungsdaten der Werbung hinzugefügt werden, und das Mittel von Element (2) ein Mittel umfasst zum Speichern, in Assoziation mit den Werbungsdaten der Werbung, der Daten, die die Zahl von Betrachtern/Zuhörern repräsentieren, welche zu jeder der Kategorien gehören, welche die Publikumsgruppen spezifizieren, welche die Ziele der Werbungsdaten der Werbung sind, und

das Mittel von Element (3) umfasst, für die Werbungsdaten von jeder der Werbungen,

(3a) Mittel zum Bestimmen, basierend auf den Daten, die den Wert des Koeffizienten repräsentieren, der das Gewicht repräsentiert, das zu jeder der Kategorien zugeordnet ist, das durch die zweiten Daten repräsentiert wird, welches mit den Kategorien übereinstimmt, die durch die ersten Daten repräsentiert werden, mit Bezug auf jede der übereinstimmenden Kategorien, des Werts des Koeffizienten, welcher den Grad der Übereinstimmung zwischen den Publikumsgruppen, die durch die Werbung anvisiert werden und die Publikumsgruppen, zu welcher der Betrachter/Zuhörer des Empfängers gehört, repäsentiert,

(3b) Mittel zum Anwenden jedes Werts des Koeffizienten, der den Grad von Übereinstimmung repräsentiert, welcher erhalten wird, mit Bezug auf jede übereinstimmende Kategorie durch das Mittel von Element (3a), zu der vereinbarten Gesamtzahl von Malen der Reproduktion zum Erlangen, für jede übereinstimmende Kategorie, der Gesamtzahl der Male der Reproduktion, in welcher der Grad von Übereinstimmung mit Bezug auf die übereinstimmende Kategorie in Betracht gezogen wird,

(3c) Mittel zum Teilen der Gesamtzahl von Malen der Reproduktion, welche durch das Mittel von Element (3b) erlangt wird und in welchem der Grad von Übereinstimmung in Betracht gezogen wird, mit Bezug auf jede übereinstimmende Kategorie, durch die Zahl von Betrachtern/Zuhörern, welche zu der übereinstimmenden Kategorie gehören zum Erlangen, für jede übereinstimmende Kategorie, die Zahl von Malen der Reproduktion, in welchem die Zahl von Betrachtern/Zuhörern, die zu der übereinstimmenden Kategorie gehören, in Betracht gezogen wird,

(3d) Mittel zum Bestimmen, basierend auf den Zahlen der Reproduktion, welche durch das Mittel von Element (3c) erlangt werden, und in welchem die Zahlen der Betrachter/Zuhörer, die zu der jeweiligen übereinstimmenden Kategorie gehören, in Betracht gezogen werden, der angemessenen Zahl der Male der Reproduktion, die dem Betrachter/Zuhörer zugeordnet werden sollen.

13. Werbungsdaten-Reproduktionsvorrichtung nach einem der Ansprüche 8 bis 12, **dadurch gekennzeichnet, dass** es ferner an der Betrachter/Zuhörerseite umfasst

(A) Mittel zum Bestimmen, basierend auf der angemessenen Zahl von Malen der Reproduktion der Werbungsdaten von jeder Werbung, welche durch das Mittel von Element (3) bestimmt wird, einer verbleibenden Zahl von Malen der Reproduktion der Werbungsdaten der Werbung,

(B) Mittel zum Bestimmen, für die verbleibende Zahl von Malen der Reproduktion der Werbungsdaten für jede Werbung, eines Werts eines Koeffizienten, der ein Gewicht repräsentiert, wobei ein größeres Gewicht einer größeren verbleibenden Zahl von Malen der Reproduktion zugeordnet wird,

(C) Mittel zum Bestimmen, basierend auf dem Wert des Koeffizienten, der für die Werbungsdaten für jede Werbung bestimmt wird, einer Prioritätsordnung zum Reproduzieren der Werbungsdaten für jede Werbung an dem Empfänger,

(D) Mittel zum Auswählen der Werbungsdaten von einer oder mehreren Werbungen, die an dem Empfänger zu reproduzieren sind, von den gespeicherten Werbungsdaten der Vielzahl von Werbungen, basierend auf der Prioritätsordnung, und

(E) Mittel zum Reproduzieren der Werbungsdaten von einer oder mehreren Werbungen, die durch das Mittel von Element (D) ausgewählt wurden, an dem Empfänger in Übereinstimmung mit der Prioritätsordnung.

14. Werbungsdaten-Reproduktionsvorrichtung nach einem der Ansprüche 8 bis 13, **dadurch gekennzeichnet, dass** die angemessene Zahl von Malen der Reproduktion der Werbungsdaten der Werbung, welche durch das Mittel von Element (3) bestimmt wird, die Zahl von Malen der Reproduktion ist, welche als eine obere Grenze der Zahl von Malen für Referenz definiert ist, welche der Empfänger die Werbungsdaten der Werbung reproduzieren kann.

15. Speichermedium zum Speichern eines Programms, welches es einem Computer ermöglicht, eine Werbungsdaten-Reproduktionsprozedur auszuführen, in welcher Werbungsdaten für jede von einer Vielzahl von Werbungen einer Betrachter/Zuhörerseite gespeichert sind und die Werbungsdaten an einem Empfänger an der Betrachter/Zuhörerseite reproduziert werden, wobei die Prozedur die Schritte umfasst:

an der Betrachter/Zuhörerseite,

(1) Speichern von Daten, welche die Publikumsgruppe kennzeichnen zu welcher der Betrachter/Zuhörer gehört, welcher die Werbungsdaten an dem Empfänger betrachet/zuhört,
(2) Speichern der Werbungsdaten an jeder der Werbungen, zu welcher Daten hinzugefügt werden, die Publikumsgruppen charakteristisieren, welches Ziele der Werbungsdaten der Werbung sind,
(3) Bestimmen der angemessenen Zahl von Malen der Reproduktion den Werbungsdaten von jeder der Werbungen an dem Empfänger, basierend auf dem Grad von Übereinstimmung zwischen (i) der Daten, die die Publikumsgruppen kennzeichnen, zu welcher der Beträchter/Zuhörer gehört und (ii) den Daten, die zu den Werbungsdaten der Werbung gefügt wurden, die auf der Betrachter/Zuhörerseite gespeichert sind und die Publikumsgruppen kennzeichnen, welches Ziele der Werbungsdaten der Werbung sind,
(4) Bestimmen einer Prioritätsordnung zur Reproduktion der Werbungsdaten für jede Werbung auf dem Empfänger, und
(5) Reproduzieren der Werbungsdaten von einem oder mehreren Werbungen in Übereinstimmung mit der Prioritätsordnung.

16. Speichermedium nach Anspruch 15, **dadurch gekennzeichnet, dass**
Daten, die die vorbestimmte Zahl von Malen der Reproduktion der Werbungsdaten von jeder Werbung repräsentieren, zu den Werbungsdaten der Werbung hinzugefügt werden, und der Schritt von Element (2) einen Schritt des Speicherns von Daten umfasst, in Assoziation mit der Werbungsdaten der Werbung, die die vorbestimmte Zahl von Malen der Reproduktion der Werbungsdaten der Werbung repräsentieren, und
der Schritt von Element (3) einen Schritt umfasst des Bestimmens der angemessenen Zahl von Malen der Reproduktion der Werbungsdaten für jede Werbung an dem Empfänger, basierend auf dem Grad von Übereinstimmung und der vorbestimmten Zahl von Malen der Reproduktion der Werbungsdaten der Werbung.

17. Speichermedium nach Anspruch 16, **dadurch gekennzeichnet, dass** die Daten, die die vorbestimmte Zahl von Malen der Reproduktion der Werbungsdaten der Werbung repräsentieren, die vereinbarte Gesamtzahl von Malen der Reproduktion der Werbungsdaten der Werbung repräsentieren.

18. Speichermedium nach Anspruch 17, **dadurch gekennzeichnet, dass** die angemessene Zahl von Malen der Reproduktion, welche basierend auf dem Grad von Übereinstimmung in dem Schritt von Element (3) bestimmt wird, in einer Weise bestimmt wird, dass die angemessene Zahl von Malen der Reproduktion die Zahl von Malen der Reproduktion überschreitet, welches das Minimum ist, das für den Empfänger benötigt wird dafür, dass eine Gesamtheit der Zahl von Reproduktionen der Werbungsdaten der Werbung an allen Empfängern, welche die Werbungsdaten der Werbung speichern, lediglich die vereinbarte Gesamtzahl von Malen der Reproduktion erreicht.

19. Speichermedium nach einem der Ansprüche 17 oder 18,
**dadurch gekennzeichnet, dass**
die Daten, die die Publikumsgruppen kennzeichnen, zu welcher der Betrachter/Zuhörer gehört, des Schritts von Element (1) erste Daten umfasst, die eine oder mehrere Kategorien repräsentieren, welche die Publikumsgruppen spezifizieren, zu welchen der Betrachter/Zuhörer gehört; wobei die ersten Daten, welche die einen oder mehreren Kategorien repräsentieren, aus Kategoriedaten zum Spezifizieren von Publikumsgruppen ausgewählt werden, wobei die Kategoriedaten zum Spezifizieren von Publikumsgruppen einen oder mehrere Elemente umfassen und jedes Element eine oder mehrere Kategorien umfasst zum Spezifizieren von Publikumsgruppen,
die Daten, die Publikumsgruppen kennzeichnen, welches Ziele von Werbungsdaten der Werbung des Schritts von Element (2) sind, zweite Daten umfassen, die einen oder mehrere Kategorien repräsentieren, welche Publikumsgruppen spezifizieren, welches Ziele von Werbungsdaten der Werbung sind, und Daten, die einen Wert eines Koeffizienten repräsentieren, welcher eine Gewichtung repräsentiert,
welche zu jeder der ausgewählten Kategorien assoziiert ist; wobei die zweiten Daten, welche die einen oder mehreren Kategorien repräsentieren, aus den Kategoriedaten zum Spezifizieren von Publikumsgruppen ausgewählt sind, und wobei ein Wert, der ein größeres Gewicht repräsentiert zu einer ausgewählten Kategorie mit höherer Wichtigkeit

EP 1 263 224 B1

zugeordnet ist;

Daten, die die Zahl von Betrachtern/Zuhörern repräsentieren, die zu jeder der Kategorien gehören, die die Publikumsgruppen spezifizieren, welches die Ziele der Werbungsdaten der Werbung sind, zu den Werbungsdaten der Werbung hinzugefügt werden, und der Schritt von Element (2) einen Schritt umfasst des Speicherns, in Assoziation mit den Werbungsdaten der Werbung, der Daten, die die Zahl von Betrachtern/Zuhörern repräsentieren, welche zu jeder der Kategorien gehören, welche die Publikumsgruppen spezifizieren, welche die Ziele der Werbungsdaten der Werbung sind, und

der Schritt von Element (3) die Schritte umfasst, für die Werbungsdaten von jeder der Werbungen,

(3a) basierend auf den Daten, die den Wert des Koeffizienten repräsentieren, der das Gewicht repräsentiert, das zu jeder der Kategorien zugeordnet ist, das durch die zweiten Daten repräsentiert wird, welches mit den Kategorien übereinstimmt, die durch die ersten Daten repräsentiert werden, Bestimmen, mit Bezug auf jede der übereinstimmenden Kategorien, den Wert des Koeffizienten, welcher den Grad der Übereinstimmung zwischen den Publikumsgruppen, die durch die Werbung anvisiert werden und die Publikumsgruppen, zu welcher der Betrachter/Zuhörer des Empfängers gehört, repräsentiert,

(3b) Anwenden jedes Werts des Koeffizienten, der den Grad von Übereinstimmung repräsentiert, welcher erhalten wird mit Bezug auf jede übereinstimmende Kategorie in dem Schritt von Element (3a), zu der vereinbarten Gesamtzahl von Malen der Reproduktion; wobei, für jede übereinstimmende Kategorie die Gesamtzahl der Male der Reproduktion erlangt wird, in welcher der Grad von Übereinstimmung mit Bezug auf die übereinstimmende Kategorie in Betracht gezogen wird,

(3c) Teilen der Gesamtzahl von Malen der Reproduktion, welche in dem Schritt von Element (3b) erlangt wird und in welchem der Grad von Übereinstimmung in Betracht gezogen wird, mit Bezug auf jede übereinstimmende Kategorie, durch die Zahl von Betrachtern/Zuhörern, welche zu der übereinstimmenden Kategorie gehören; wobei, für jede übereinstimmende Kategorie, die Zahl von Malen der Reproduktion erlangt wird, in welchem die Zahl von Betrachtern/Zuhörern, die zu der übereinstimmenden Kategorie gehören, in Betracht gezogen wird,

(3d) basierend auf den Zahlen der Reproduktion, welche in dem Schritt von Element (3c) erlangt werden, und in welchem die Zahlen der Betrachter/Zuhörer, die zu der jeweiligen übereinstimmenden Kategorie gehören, in Betracht gezogen werden, Bestimmen der angemessenen Zahl der Male der Reproduktion, die dem Betrachter/Zuhörer zugeordnet werden sollen.

20. Speichermedium nach einem der Ansprüche 15 bis 19, **dadurch gekennzeichnet, dass** die Prozedur ferner die Schritte umfasst:

an der Betrachter/Zuhörerseite

(A) basierend auf der angemessenen Zahl von Malen der Reproduktion der Werbungsdaten von jeder Werbung, welche in dem Schritt von Element (3) bestimmt wird, Bestimmen einer verbleibenden Zahl von Malen der Reproduktion der Werbungsdaten der Werbung,

(B) für die verbleibende Zahl von Malen der Reproduktion der Werbungsdaten für jede Werbung, Bestimmen eines Werts eines Koeffizienten, der ein Gewicht repräsentiert, wobei ein größeres Gewicht einer größeren verbleibenden Zahl von Malen der Reproduktion zugeordnet wird,

(C) basierend auf dem Wert des Koeffizienten, der für die Werbungsdaten für jede Werbung bestimmt wird, Bestimmen einer Prioritätsordnung zum Reproduzieren der Werbungsdaten für jede Werbung an dem Empfänger,

(D) Auswählen der Werbungsdaten von einer oder mehreren Werbungen, die an dem Empfänger zu reproduzieren sind, von den gespeicherten Werbungsdaten der Vielzahl von Werbungen, basierend auf der Prioritätsordnung, und

(E) Reproduzieren der Werbungsdaten von einer oder mehreren Werbungen, die in dem Schritt von Element (D) ausgewählt wurden, an dem Empfänger in Übereinstimmung mit der Prioritätsordnung.

21. Speichermedium nach einem der Ansprüche 15 bis 20, **dadurch gekennzeichnet, dass** die angemessene Zahl von Malen der Reproduktion der Werbungsdaten der Werbung, welche in dem Schritt von Element (3) bestimmt wird, die Zahl von Malen der Reproduktion ist, welche als eine obere Grenze der Zahl von Malen für Referenz definiert ist, welche der Empfänger die Werbungsdaten der Werbung reproduzieren kann.

22. Computerprogramm, welches es einem Computer ermöglicht, eine Werbungsdaten-Reproduktionsprozedur auszuführen, in welcher Werbungsdaten für eine Vielzahl von Werbungen an einer Betrachter/Zuhörerseite gespeichert sind und die Werbungsdaten an einem Empfänger an der Betrachter/Zuhörerseite reproduziert werden, wobei die

45

Prozedur die Schritte umfasst:

an der Betrachter/Zuhörerseite,

(1) Speichern von Daten, welche die Publikumsgruppe kennzeichnen zu welcher der Betrachter/Zuhörer gehört, welcher die Werbungsdaten an dem Empfänger betrachet/zuhört,

(2) Speichern der Werbungsdaten an jeder der Werbungen, zu welcher Daten hinzugefügt werden, die Publikumsgruppen charakteristisieren, welches Ziele der Werbungsdaten der Werbung sind,

(3) Bestimmen der angemessenen Zahl von Malen der Reproduktion den Werbungsdaten von jeder der Werbungen an dem Empfänger, basierend auf dem Grad von Übereinstimmung zwischen (i) der Daten, die die Publikumsgruppen kennzeichnen, zu welcher der Betrachter/Zuhörer gehört und (ii) den Daten, die zu den Werbungsdaten der Werbung gefügt wurden, die auf der Betrachter/Zuhörerseite gespeichert sind und die Publikumsgruppen kennzeichnen, welches Ziele der Werbungsdaten der Werbung sind,

(4) Bestimmen einer Prioritätsordnung zur Reproduktion der Werbungsdaten für jede Werbung auf dem Empfänger, und

(5) Reproduzieren der Werbungsdaten von einem oder mehreren Werbungen in Übereinstimmung mit der Prioritätsordnung.

23. Computerprogramm nach Anspruch 22, **dadurch gekennzeichnet, dass**

Daten, die die vorbestimmte Zahl von Malen der Reproduktion der Werbungsdaten von jeder Werbung repräsentieren, zu den Werbungsdaten der Werbung hinzugefügt werden, und der Schritt von Element (2) einen Schritt des Speicherns von Daten umfasst, in Assoziation mit der Werbungsdaten der Werbung, die die vorbestimmte Zahl von Malen der Reproduktion der Werbungsdaten der Werbung repräsentieren, und

der Schritt von Element (3) einen Schritt umfasst des Bestimmens der angemessenen Zahl von Malen der Reproduktion der Werbungsdaten für jede Werbung an dem Empfänger, basierend auf dem Grad von Übereinstimmung und der vorbestimmten Zahl von Malen der Reproduktion der Werbungsdaten der Werbung.

24. Computerprogramm nach Anspruch 23, **dadurch gekennzeichnet, dass** die Daten, die die vorbestimmte Zahl von Malen der Reproduktion der Werbungsdaten der Werbung repräsentieren, die vereinbarte Gesamtzahl von Malen der Reproduktion der Werbungsdaten der Werbung repräsentieren.

25. Computerprogramm nach Anspruch 24, **dadurch gekennzeichnet, dass** die angemessene Zahl von Malen der Reproduktion, welche basierend auf dem Grad von Übereinstimmung in dem Schritt von Element (3) bestimmt wird, in einer Weise bestimmt wird, dass die angemessene Zahl von Malen der Reproduktion die Zahl von Malen der Reproduktion überschreitet, welches das Minimum ist, das für den Empfänger benötigt wird dafür, dass eine Gesamtheit der Zahl von Reproduktionen der Werbungsdaten der Werbung an allen Empfängern, welche die Werbungsdaten der Werbung speichern, lediglich die vereinbarte Gesamtzahl von Malen der Reproduktion erreicht.

26. Computerprogramm nach Anspruch 24 oder 25, **dadurch gekennzeichnet, dass**

die Daten, die die Publikumsgruppen kennzeichnen, zu welcher der Betrachter/Zuhörer gehört, des Schritts von Element (1) erste Daten umfasst, die eine oder mehrere Kategorien repräsentieren, welche die Publikumsgruppen spezifizieren, zu welchen der Betrachter/Zuhörer gehört; wobei die ersten Daten, welche die einen oder mehreren Kategorien repräsentieren, aus Kategoriedaten zum Spezifizieren von Publikumsgruppen ausgewählt werden, wobei die Kategoriedaten zum Spezifizieren von Publikumsgruppen einen oder mehrere Elemente umfassen und jedes Element eine oder mehrere Kategorien umfasst zum Spezifizieren von Publikumsgruppen,

die Daten, die Publikumsgruppen kennzeichnen, welches Ziele von Werbungsdaten der Werbung des Schritts von Element (2) sind, zweite Daten umfassen, die einen oder mehrere Kategorien repräsentieren, welche Publikumsgruppen spezifizieren, welches Ziele von Werbungsdaten der Werbung sind, und Daten, die einen Wert eines Koeffizienten repräsentieren, welcher eine Gewichtung repräsentiert, welche zu jeder der ausgewählten Kategorien assoziiert ist; wobei die zweiten Daten, welche die einen oder mehreren Kategorien repräsentieren, aus den Kategoriedaten zum Spezifizieren von Publikumsgruppen ausgewählt sind, und wobei ein Wert, der ein größeres Gewicht repräsentiert zu einer ausgewählten Kategorie mit höherer Wichtigkeit zugeordnet ist;

Daten, die die Zahl von Betrachtern/Zuhörern repräsentieren, die zu jeder der Kategorien gehören, die die Publikumsgruppen spezifizieren, welches die Ziele der Werbungsdaten der Werbung sind, zu den Werbungsdaten der Werbung hinzugefügt werden, und der Schritt von Element (2) einen Schritt umfasst des Speicherns, in Assoziation mit den Werbungsdaten der Werbung, der Daten, die die Zahl von Betrachtern/Zuhörern repräsentieren, welche zu jeder der Kategorien gehören, welche die Publikumsgruppen spezifizieren, welche die Ziele der Werbungsdaten der Werbung sind, und

der Schritt von Element (3) die Schritte umfasst, für die Werbungsdaten von jeder der Werbungen,

(3a) basierend auf den Daten, die den Wert des Koeffizienten repräsentieren, der das Gewicht repräsentiert, das zu jeder der Kategorien zugeordnet ist, das durch die zweiten Daten repräsentiert wird, welches mit den Kategorien übereinstimmt, die durch die ersten Daten repräsentiert werden, Bestimmen, mit Bezug auf jede der übereinstimmenden Kategorien, den Wert des Koeffizienten, welcher den Grad der Übereinstimmung zwischen den Publikumsgruppen, die durch die Werbung anvisiert werden und die Publikumsgruppen, zu welcher der Betrachter/Zuhörer des Empfängers gehört, repräsentiert,

(3b) Anwenden jedes Werts des Koeffizienten, der den Grad von Übereinstimmung repräsentiert, welcher erhalten wird mit Bezug auf jede übereinstimmende Kategorie in dem Schritt von Element (3a), zu der vereinbarten Gesamtzahl von Malen der Reproduktion; wobei, für jede übereinstimmende Kategorie die Gesamtzahl der Male der Reproduktion erlangt wird, in welcher der Grad von Übereinstimmung mit Bezug auf die übereinstimmende Kategorie in Betracht gezogen wird,

(3c) Teilen der Gesamtzahl von Malen der Reproduktion, welche in dem Schritt von Element (3b) erlangt wird und in welchem der Grad von Übereinstimmung in Betracht gezogen wird, mit Bezug auf jede übereinstimmende Kategorie, durch die Zahl von Betrachtern/Zuhörern, welche zu der übereinstimmenden Kategorie gehören; wobei, für jede übereinstimmende Kategorie, die Zahl von Malen der Reproduktion erlangt wird, in welchem die Zahl von Betrachtern/Zuhörern, die zu der übereinstimmenden Kategorie gehören, in Betracht gezogen wird,

(3d) basierend auf den Zahlen der Reproduktion, welche in dem Schritt von Element (3c) erlangt werden, und in welchem die Zahlen der Betrachter/Zuhörer, die zu der jeweiligen übereinstimmenden Kategorie gehören, in Betracht gezogen werden, Bestimmen der angemessenen Zahl der Male der Reproduktion, die dem Betrachter/Zuhörer zugeordnet werden sollen.

**27.** Computerprogramm nach einem der Ansprüche 22 bis 26, **dadurch gekennzeichnet, dass** die Prozedur ferner die Schritte umfasst
an der Betrachter/Zuhörerseite

(A) basierend auf der angemessenen Zahl von Malen der Reproduktion der Werbungsdaten von jeder Werbung, welche in dem Schritt von Element (3) bestimmt wird, Bestimmen einer verbleibenden Zahl von Malen der Reproduktion der Werbungsdaten der Werbung,

(B) für die verbleibende Zahl von Malen der Reproduktion der Werbungsdaten für jede Werbung, Bestimmen eines Werts eines Koeffizienten, der ein Gewicht repräsentiert, wobei ein größeres Gewicht einer größeren verbleibenden Zahl von Malen der Reproduktion zugeordnet wird,

(C) basierend auf dem Wert des Koeffizienten, der für die Werbungsdaten für jede Werbung bestimmt wird, Bestimmen einer Prioritätsordnung zum Reproduzieren der Werbungsdaten für jede Werbung an dem Empfänger,

(D) Auswählen der Werbungsdaten von einer oder mehreren der Werbungen, die an dem Empfänger zu reproduzieren sind, von den gespeicherten Werbungsdaten der Vielzahl von Werbungen, basierend auf der Prioritätsordnung, und

(E) Reproduzieren der Werbungsdaten von einer oder mehreren Werbungen, die in dem Schritt von Element (D) ausgewählt wurden, an dem Empfänger in Übereinstimmung mit der Prioritätsordnung.

**28.** Computerprogramm nach einem der Ansprüche 22 bis 27, **dadurch gekennzeichnet, dass** die angemessene Zahl von Malen der Reproduktion der Werbungsdaten der Werbung, welche in dem Schritt von Element (3) bestimmt wird, die Zahl von Malen der Reproduktion ist, welche als eine obere Grenze der Zahl von Malen für Referenz definiert ist, welche der Empfänger die Werbungsdaten der Werbung reproduzieren kann.

## Revendications

**1.** Procédé de reproduction de données publicitaires, dans lequel des données publicitaires pour chacune d'une pluralité de publicités sont stockées d'un côté spectateur/auditeur et les données publicitaires sont reproduites sur un récepteur du côté spectateur/auditeur, le procédé comprenant les étapes consistant du côté spectateur/auditeur à :

(1) stocker des données qui caractérisent des groupes d'audience auxquels appartient le spectateur/auditeur qui regarde/écoute les données publicitaires sur le récepteur,
(2) stocker les données publicitaires de chacune des publicités auxquelles ont été ajoutées des données caractérisant des groupes d'audience qui sont des cibles des données publicitaires de la publicité,

(3) déterminer le nombre approprié de fois de reproduction des données publicitaires de chacune des publicités sur le récepteur, sur la base d'un degré de coïncidence entre (i) les données caractérisant des groupes d'audience auxquels le spectateur/auditeur appartient et (ii) les données qui ont été ajoutées aux données publicitaires de la publicité stockée du côté spectateur/auditeur et qui caractérisent les groupes d'audience qui sont des cibles des données publicitaires de la publicité,

(4) déterminer un ordre de priorité pour reproduire les données publicitaires de chaque publicité sur le récepteur, et

(5) reproduire les données publicitaires d'une publicité ou plus conformément à l'ordre de priorité.

2. Procédé de reproduction de données publicitaires selon la revendication 1, **caractérisé en ce que**

des données représentant le nombre prédéterminé de fois de reproduction des données publicitaires de chaque publicité ont été ajoutées aux données publicitaires de la publicité et l'étape du poste (2) comprend une étape de stockage, en association avec les données publicitaires de la publicité, de données représentant le nombre prédéterminé de fois de reproduction des données publicitaires de la publicité, et

l'étape du poste (3) comprend une étape de détermination du nombre approprié de fois de reproduction des données publicitaires de chaque publicité sur le récepteur sur la base du degré de coïncidence et du nombre prédéterminé de fois de reproduction des données publicitaires de la publicité.

3. Procédé de reproduction de données publicitaires selon la revendication 2, **caractérisé en ce que** les données représentant le nombre prédéterminé de fois de reproduction des données publicitaires de la publicité représentent le nombre total contracté de fois de reproduction des données publicitaires de la publicité.

4. Procédé de reproduction de données publicitaires selon la revendication 3, **caractérisé en ce que** le nombre approprié de fois de reproduction qui est déterminé sur la base du degré de coïncidence à l'étape du poste (3) est déterminé de telle manière que le nombre approprié de fois de reproduction dépasse le nombre de fois de reproduction qui est le minimum requis pour que le récepteur, pour un total des nombres de reproduction des données publicitaires de la publicité sur tous les récepteurs qui stockent les données publicitaires de la publicité, atteigne juste le nombre total contracté de fois de reproduction.

5. Procédé de reproduction de données publicitaires selon la revendication 3 ou 4, **caractérisé en ce que** les données caractérisant les groupes d'audience auxquels le spectateur/auditeur appartient à l'étape du poste (1) comprennent des premières données représentant une catégorie ou plus qui spécifie(nt) les groupes d'audience auxquels le spectateur/auditeur appartient ; dans lequel les premières données qui représentent une catégorie ou plus sont choisies parmi des données de catégorie(s) pour spécifier des groupes d'audience, dans lequel les données de catégorie(s) pour spécifier les groupes d'audience comprennent un poste ou plus et chaque poste comprend une catégorie ou plus pour spécifier des groupes d'audience,

les données caractérisant des groupes d'audience qui sont des cibles des données publicitaires de la publicité de l'étape du poste (2) comprennent des deuxièmes données représentant une catégorie ou plus qui spécifie(nt) les groupes d'audience qui sont des cibles des données publicitaires de la publicité et des données représentant une valeur d'un coefficient qui représente une pondération affectée à chacune des catégories choisies ; dans lequel les deuxièmes données qui représentent l'une ou plusieurs catégorie(s) sont choisies parmi les données de catégorie(s) pour spécifier des groupes d'audience, et dans lequel une valeur représentant une pondération supérieure est affectée à une catégorie choisie ayant plus d'importance,

des données représentant le nombre de spectateurs/auditeurs qui appartiennent à chacune des catégories spécifiant les groupes d'audience qui sont les cibles des données publicitaires de la publicité ont été ajoutées aux données publicitaires de la publicité, et l'étape du poste (2) comprend une étape de stockage, en association avec les données publicitaires de la publicité, de données représentant le nombre de spectateurs/auditeurs qui appartiennent à chacune des catégories spécifiant les groupes d'audience qui sont les cibles des données publicitaires de la publicité, et l'étape du poste (3) comprend, pour les données publicitaires de chacune des publicités, les étapes consistant à :

(3a) sur la base des données représentant la valeur du coefficient représentant la pondération affectée à chacune des catégories représentées par les deuxièmes données qui coïncident avec les catégories représentées par les premières données, déterminer, par rapport à chacune des catégories en coïncidence, la valeur du coefficient qui représente le degré de coïncidence entre les groupes d'audience ciblés par la publicité et les groupes d'audience auxquels le spectateur/auditeur appartient,

(3b) appliquer chaque valeur du coefficient représentant le degré de coïncidence qui est obtenu par rapport à chaque catégorie en coïncidence à l'étape du poste (3a), au nombre total contracté de fois de reproduction ; de manière à obtenir, pour chaque catégorie en coïncidence, le nombre total de fois de reproduction dans lequel le degré de coïncidence par rapport à la catégorie en coïncidence est pris en considération,

(3c) diviser le nombre total de fois de reproduction, qui est obtenu à l'étape du poste (3b) et dans lequel le degré de coïncidence est pris en considération, par rapport à chaque catégorie en coïncidence par le nombre de spectateurs/auditeurs qui appartiennent à la catégorie en coïncidence ; de sorte que, pour chaque catégorie en coïncidence, on obtienne le nombre de fois de reproduction dans lesquels le nombre de spectateurs/auditeurs appartenant à la catégorie en coïncidence est pris en considération, et

(3d) sur la base des nombres de reproduction qui sont obtenus à l'étape du poste (3c) et dans lesquels les nombres de spectateurs/auditeurs appartenant aux catégories respectives en coïncidence sont pris en considération, déterminer le nombre approprié de fois de reproduction à affecter au spectateur/auditeur.

6. Procédé de reproduction de données publicitaires selon l'une quelconque des revendications 1 à 5, **caractérisé en ce qu'**il comprend par ailleurs les étapes consistant du côté spectateur/auditeur à :

(A) sur la base du nombre approprié de fois de reproduction des données publicitaires de chaque publicité qui est déterminé à l'étape du poste (3), déterminer un nombre restant de fois de reproduction des données publicitaires de la publicité,

(B) pour le nombre restant de fois de reproduction des données publicitaires de chaque publicité, déterminer une valeur d'un coefficient représentant une pondération, dans lequel une pondération plus forte est conférée à un nombre restant plus important de fois de reproduction,

(C) sur la base de la valeur du coefficient déterminée pour les données publicitaires de chaque publicité, déterminer un ordre de priorité pour reproduire les données publicitaires de chaque publicité sur le récepteur,

(D) choisir les données publicitaires d'une publicité ou plus à reproduire sur le récepteur à partir des données publicitaires stockées de la pluralité de publicités sur la base de l'ordre de priorité, et

(E) reproduire les données publicitaires de la une publicité ou plus choisies à l'étape du poste (D) sur le récepteur en conformité avec l'ordre de priorité.

7. Procédé de reproduction de données publicitaires selon l'une quelconque des revendications 1 à 6, **caractérisé en ce que** le nombre approprié de fois de reproduction des données publicitaires de chaque publicité, qui est déterminé à l'étape du poste (3), est le nombre de fois de reproduction qui est défini comme limite supérieure du nombre de fois en référence que le récepteur peut reproduire les données publicitaires de la publicité.

8. Appareil de reproduction de données publicitaires comprenant des moyens pour stocker des données publicitaires de chacune d'une pluralité de publicités d'un côté spectateur/auditeur et un récepteur pour reproduire les données publicitaires du côté spectateur/auditeur, l'appareil comprenant :

(1) des moyens (42) pour stocker des données qui caractérisent des groupes d'audience auxquels le spectateur/auditeur, qui regarde/écoute les données publicitaires sur le récepteur, appartient,

(2) des moyens (42) pour stocker les données publicitaires de chaque publicité auxquelles ont été ajoutées des données caractérisant des groupes d'audience qui sont des cibles des données publicitaires de la publicité,

(3) des moyens (41) pour déterminer le nombre approprié de fois de reproduction des données publicitaires de chacune des publicités sur le récepteur sur la base d'un degré de coïncidence entre (i) les données caractérisant des groupes d'audience auxquels le spectateur/auditeur appartient et (ii) les données qui ont été ajoutées aux données publicitaires de la publicité stockée du côté spectateur/auditeur et qui caractérisent des groupes d'audience qui sont des cibles des données publicitaires de la publicité,

(4) des moyens pour déterminer un ordre de priorité pour reproduire les données publicitaires de chaque publicité sur le récepteur, et

(5) des moyens pour reproduire les données publicitaires d'une publicité ou plus conformément à l'ordre de priorité.

9. Appareil de reproduction de données publicitaires selon la revendication 8, **caractérisé en ce que** :

des données représentant le nombre prédéterminé de fois de reproduction des données publicitaires de chaque publicité ont été ajoutées aux données publicitaires de la publicité, et les moyens du poste (2) comprennent des moyens pour stocker, en association avec les données publicitaires de la publicité, des données représentant le nombre prédéterminé de fois de reproduction des données publicitaires de la publicité, et

les moyens du poste (3) comprennent des moyens pour déterminer le nombre approprié de fois de reproduction des données publicitaires de chaque publicité sur le récepteur sur la base du degré de coïncidence et le nombre prédéterminé de fois de reproduction des données publicitaires de la publicité.

**10.** Appareil de reproduction de données publicitaires selon la revendication 9, **caractérisé en ce que** les données représentant le nombre prédéterminé de fois de reproduction des données publicitaires de la publicité représentent le nombre total contracté de fois de reproduction des données publicitaires de la publicité.

**11.** Appareil de reproduction de données publicitaires selon la revendication 10, **caractérisé en ce que** le nombre approprié de fois de reproduction qui est déterminé sur la base du degré de coïncidence par les moyens du poste (3) est déterminé de manière que le nombre approprié de fois de reproduction dépasse le nombre de fois de reproduction qui est le minimum requis pour que le récepteur, pour un total des nombres de reproduction des données publicitaires de la publicité sur tous les récepteurs, qui stockent les données publicitaires de la publicité, atteigne juste le nombre total contracté de fois de reproduction.

**12.** Appareil de reproduction de données publicitaires selon la revendication 10 ou 11, **caractérisé en ce que** :

les données caractérisant les groupes d'audience auxquels le spectateur/auditeur appartient, qui sont stockées par les moyens du poste (1) comprennent des premières données représentant une catégorie ou plus qui spécifie(nt) les groupes d'audience auxquels le spectateur/auditeur appartient ; dans lequel les premières données qui représentent la une catégorie ou plus sont choisies parmi des données de catégorie(s) pour spécifier des groupes d'audience, dans lequel les données de catégorie(s) pour spécifier les groupes d'audience comprennent un poste ou plus et chaque poste comprend une catégorie ou plus pour spécifier des groupes d'audience,
les données caractérisant des groupes d'audience qui sont des cibles des données publicitaires de la publicité, qui sont stockées par les moyens du poste (2) comprennent des deuxièmes données représentant une catégorie ou plus qui spécifie(nt) les groupes d'audience qui sont des cibles des données publicitaires de la publicité et des données représentant une valeur d'un coefficient qui représente une pondération affectée à chacune des catégories choisies ; dans lequel les deuxièmes données qui représentent la une catégorie ou plus sont choisies parmi les données de catégorie(s) pour spécifier des groupes d'audience, et dans lequel une valeur représentant une pondération supérieure est affectée à une catégorie choisie ayant plus d'importance,
des données représentant le nombre de spectateurs/auditeurs qui appartiennent à chacune des catégories spécifiant les groupes d'audience qui sont les cibles des données publicitaires de la publicité ont été ajoutées aux données publicitaires de la publicité et les moyens du poste (2) comprennent des moyens de stockage, en association avec les données publicitaires de la publicité, des données représentant le nombre de spectateurs/ auditeurs qui appartiennent à chacune des catégories spécifiant les groupes d'audience qui sont les cibles des données publicitaires de la publicité, et
les moyens du poste (3) comprennent, pour les données publicitaires de chacune des publicités :

(3a) des moyens pour déterminer, sur la base des données représentant la valeur du coefficient représentant la pondération affectée à chacune des catégories représentées par les deuxièmes données qui coïncident avec les catégories représentées par les premières données, par rapport à chacune des catégories en coïncidence, la valeur du coefficient qui représente le degré de coïncidence entre les groupes d'audience ciblés par la publicité et les groupes d'audience auxquels le spectateur/auditeur appartient,
(3b) des moyens pour appliquer chaque valeur du coefficient représentant le degré de coïncidence qui est obtenu par rapport à chaque catégorie en coïncidence par les moyens du poste (3a), au nombre total contracté de fois de reproduction ; de manière à obtenir, pour chaque catégorie en coïncidence, le nombre total de fois de reproduction dans lesquels le degré de coïncidence par rapport à la catégorie en coïncidence est prise en considération,
(3c) des moyens pour diviser le nombre total de fois de reproduction, qui est obtenu par les moyens du poste (3b) et dans lequel le degré de coïncidence est pris en considération, par rapport à chaque catégorie en coïncidence par le nombre de spectateurs/auditeurs qui appartiennent à la catégorie en coïncidence ; de sorte que, pour chaque catégorie en coïncidence, on obtienne le nombre de fois de ) reproduction dans lequel le nombre de spectateurs/auditeurs appartenant à la catégorie en coïncidence est pris en considération,
(3d) des moyens pour déterminer, sur la base des nombres de reproduction qui sont obtenus par les moyens du poste (3c) et dans lesquels les nombres de spectateurs/auditeurs appartenant aux catégories respectives en coïncidence sont pris en considération, le nombre approprié de fois de reproduction à affecter au spectateur/auditeur.

**13.** Appareil de reproduction de données publicitaires selon l'une quelconque des revendications 8 à 12, **caractérisé en ce qu'**il comprend par ailleurs du côté spectateur/auditeur :

(A) des moyens pour déterminer, sur la base du nombre approprié de fois de reproduction des données publicitaires de chaque publicité qui est déterminé par les moyens du poste (3), un nombre restant de fois de reproduction des données publicitaires de la publicité,

(B) des moyens pour déterminer, pour le nombre restant de fois de reproduction des données publicitaires de chaque publicité, une valeur d'un coefficient représentant une pondération, dans lequel une pondération plus forte est conférée à un nombre restant plus important de fois de reproduction,

(C) des moyens pour déterminer, sur la base de la valeur du coefficient déterminée pour les données publicitaires de chaque publicité, un ordre de priorité pour reproduire les données publicitaires de chaque publicité sur le récepteur,

(D) des moyens pour choisir les données publicitaires d'une publicité ou plus à reproduire sur le récepteur à partir des données publicitaires stockées de la pluralité de publicités sur la base de l'ordre de priorité, et

(E) des moyens pour reproduire les données publicitaires de la une publicité ou plus choisies par les moyens du poste (D) sur le récepteur en conformité avec l'ordre de priorité.

**14.** Appareil de reproduction de données publicitaires selon l'une quelconque des revendications 8 à 13, **caractérisé en ce que** le nombre approprié de fois de reproduction des données publicitaires de chaque publicité, qui est déterminé par les moyens du poste (3), est le nombre de fois de reproduction qui est défini comme limite supérieure du nombre de fois en référence que le récepteur peut reproduire les données publicitaires de la publicité.

**15.** Support de mémoire pour stocker un programme qui permette à un ordinateur d'effectuer une procédure de reproduction de données publicitaires, dans lequel des données publicitaires pour chacune d'une pluralité de publicités sont stockées d'un côté spectateur/auditeur et les données publicitaires sont reproduites sur un récepteur du côté spectateur/auditeur, la procédure comprenant les étapes consistant du côté spectateur/auditeur à :

(1) stocker des données qui caractérisent des groupes d'audience auxquels appartient le spectateur/auditeur qui regarde/écoute les données publicitaires sur le récepteur,

(2) stocker les données publicitaires de chacune des publicités auxquelles ont été ajoutées des données caractérisant des groupes d'audience qui sont des cibles des données publicitaires de la publicité,

(3) déterminer le nombre approprié de fois de reproduction des données publicitaires de chacune des publicités sur le récepteur, sur la base d'un degré de coïncidence entre (i) les données caractérisant des groupes d'audience auxquels le spectateur/auditeur appartient et (ii) les données qui ont été ajoutées aux données publicitaires de la publicité stockée du côté spectateur/auditeur et qui caractérisent les groupes d'audience qui sont des cibles des données publicitaires de la publicité,

(4) déterminer un ordre de priorité pour reproduire les données publicitaires de chaque publicité sur le récepteur, et

(5) reproduire les données publicitaires d'une publicité ou plus conformément à l'ordre de priorité.

**16.** Support de mémoire selon la revendication 15, **caractérisé en ce que** des données représentant le nombre prédéterminé de fois de reproduction des données publicitaires de chaque publicité ont été ajoutées aux données publicitaires de la publicité et l'étape du poste (2) comprend une étape de stockage, en association avec les données publicitaires de la publicité, de données représentant le nombre prédéterminé de fois de reproduction des données publicitaires de la publicité, et
l'étape du poste (3) comprend une étape de détermination du nombre approprié de fois de reproduction des données publicitaires de chaque publicité sur le récepteur sur la base du degré de coïncidence et du nombre prédéterminé de fois de reproduction des données publicitaires de la publicité.

**17.** Support de mémoire selon la revendication 16, **caractérisé en ce que** les données représentant le nombre prédéterminé de fois de reproduction des données publicitaires de la publicité représentent le nombre total contracté de fois de reproduction des données publicitaires de la publicité.

**18.** Support de mémoire selon la revendication 17, **caractérisé en ce que** le nombre approprié de fois de reproduction qui est déterminé sur la base du degré de coïncidence à l'étape du poste (3) est déterminé de telle manière que le nombre approprié de fois de reproduction dépasse le nombre de fois de reproduction qui est le minimum requis pour que le récepteur, pour un total des nombres de reproduction des données publicitaires de la publicité sur tous les récepteurs qui stockent les données publicitaires de la publicité, atteigne juste le nombre total contracté de fois de reproduction.

**19.** Support de mémoire selon la revendication 17 ou 18, **caractérisé en ce que** :

les données caractérisant les groupes d'audience auxquels le spectateur/auditeur appartient à l'étape du poste (1) comprennent des premières données représentant une catégorie ou plus qui spécifie(nt) les groupes d'audience auxquels le spectateur/auditeur appartient ; dans lequel les premières données qui représentent la une catégorie ou plus sont choisies parmi des données de catégorie(s) pour spécifier des groupes d'audience, dans lequel les données de catégorie(s) pour spécifier les groupes d'audience comprennent un poste ou plus et chaque poste comprend une catégorie ou plus pour spécifier des groupes d'audience,

les données caractérisant des groupes d'audience qui sont des cibles des données publicitaires de la publicité de l'étape du poste (2) comprennent des deuxièmes données représentant une catégorie ou plus qui spécifie (nt) les groupes d'audience qui sont des cibles des données publicitaires de la publicité et des données représentant une valeur d'un coefficient qui représente une pondération affecté à chacune des catégories choisies ; dans lequel les deuxièmes données qui représentent la une catégorie ou plus sont choisies parmi les données de catégorie(s) pour spécifier des groupes d'audience, et dans lequel une valeur représentant une pondération supérieure est affectée à une catégorie choisie ayant plus d'importance,

des données représentant le nombre de spectateurs/auditeurs qui appartiennent à chacune des catégories spécifiant les groupes d'audience qui sont les cibles des données publicitaires de la publicité ont été ajoutées aux données publicitaires de la publicité et l'étape du poste (2) comprend une étape de stockage, en association avec les données publicitaires de la publicité, des données représentant le nombre de spectateurs/auditeurs qui appartiennent à chacune des catégories spécifiant les groupes d'audience qui sont les cibles des données publicitaires de la publicité, et

l'étape du poste (3) comprend, pour les données publicitaires de chacune des publicités, les étapes consistant à :

(3a) sur la base des données représentant la valeur du coefficient représentant la pondération affectée à chacune des catégories représentées par les deuxièmes données qui coïncident avec les catégories représentées par les premières données, déterminer, par rapport à chacune des catégories en coïncidence, la valeur du coefficient qui représente le degré de coïncidence entre les groupes d'audience ciblés par la publicité et les groupes d'audience auxquels le spectateur/auditeur appartient,

(3b) appliquer chaque valeur du coefficient représentant le degré de coïncidence qui est obtenu par rapport à chaque catégorie en coïncidence à l'étape du poste (3a), au nombre total contracté de fois de reproduction ; de manière à obtenir, pour chaque catégorie en coïncidence, le nombre total de fois de reproduction, dans lequel le degré de coïncidence par rapport à la catégorie en coïncidence est pris en considération,

(3c) diviser le nombre total de fois de reproduction, qui est obtenu à l'étape du poste (3b) et dans lequel le degré de coïncidence est pris en considération, par rapport à chaque catégorie en coïncidence par le nombre de spectateurs/auditeurs qui appartiennent à la catégorie en coïncidence ; de sorte que, pour chaque catégorie en coïncidence, on obtienne le nombre de fois de reproduction dans lesquels le nombre de spectateurs/auditeurs appartenant à la catégorie en coïncidence est pris en considération, et

(3d) sur la base des nombres de reproduction qui sont obtenus à l'étape du poste (3c) et dans lesquels les nombres de spectateurs/auditeurs appartenant aux catégories respectives en coïncidence sont pris en considération, déterminer le nombre approprié de fois de reproduction à affecter aux spectateur/auditeur.

**20.** Support de mémoire selon l'une quelconque des revendications 15 à 19, **caractérisé en ce que** la procédure comprend par ailleurs les étapes consistant du côté spectateur/auditeur à :

(A) sur la base du nombre approprié de fois de reproduction des données publicitaires de chaque publicité qui est déterminé à l'étape du poste (3), déterminer un nombre restant de fois de reproduction des données publicitaires de la publicité,

(B) pour le nombre restant de fois de reproduction des données publicitaires de chaque publicité, déterminer une valeur d'un coefficient représentant une pondération, dans lequel une pondération plus forte est conférée à un nombre restant plus important de fois de reproduction,

(C) sur la base de la valeur du coefficient déterminée pour les données publicitaires de chaque publicité, déterminer un ordre de priorité pour reproduire les données publicitaires de chaque publicité sur le récepteur,

(D) choisir les données publicitaires d'une publicité ou plus à reproduire sur le récepteur à partir des données publicitaires stockées de la pluralité de publicités sur la base de l'ordre de priorité, et

(E) reproduire les données publicitaires de la une publicité ou plus choisies à l'étape du poste (D) sur le récepteur en conformité avec l'ordre de priorité.

**21.** Support de mémoire selon l'une quelconque des revendications 15 à 20, **caractérisé en ce que** le nombre approprié de fois de reproduction des données publicitaires de chaque publicité, qui est déterminé à l'étape du poste (3), est le nombre de fois de reproduction qui est défini comme limite supérieure du nombre de fois en référence que le récepteur peut reproduire les données publicitaires de la publicité.

**22.** Programme d'ordinateur qui permet à un ordinateur d'effectuer une procédure de reproduction de données publicitaires dans laquelle des données publicitaires pour chacune d'une pluralité de publicités sont stockée d'un côté spectateur/auditeur et les données publicitaires sont reproduites sur un récepteur du côté spectateur/auditeur, la procédure comprenant les étapes consistant du côté spectateur/auditeur à :

(1) stocker des données qui caractérisent des groupes d'audience auxquels le spectateur/auditeur, qui regarde/écoute les données publicitaires sur le récepteur, appartient,

(2) stocker les données publicitaires de chacune des publicités auxquelles ont été ajoutées des données caractérisant des groupes d'audience qui sont des cibles des données publicitaires de la publicité,

(3) déterminer le nombre approprié de fois de reproduction des données publicitaires de chacune des publicités sur le récepteur sur la base d'un degré de coïncidence entre (i) les données caractérisant des groupes d'audience auxquels le spectateur/auditeur appartient et (ii) les données qui ont été ajoutées aux données publicitaires de la publicité stockées du côté spectateur/auditeur et qui caractérisent des groupes d'audience qui sont des cibles des données publicitaires de la publicité,

(4) déterminer un ordre de priorité pour reproduire les données publicitaires de chaque publicité sur le récepteur, et

(5) reproduire les données publicitaires d'une publicité ou plus conformément à l'ordre de priorité

**23.** Programme d'ordinateur selon la revendication 22, **caractérisé en ce que** :

des données représentant le nombre prédéterminé de fois de reproduction des données publicitaires de chaque publicité ont été ajoutées aux données publicitaires de la publicité, et l'étape du poste (2) comprend une étape de stockage, en association avec les données publicitaires de la publicité, de données représentant le nombre prédéterminé de fois de reproduction des données publicitaires de la publicité, et

l'étape du poste (3) comprend une étape pour déterminer le nombre approprié de fois de reproduction des données publicitaires de chaque publicité sur le récepteur sur la base du degré de coïncidence et le nombre prédéterminé de fois de reproduction des données publicitaires de la publicité.

**24.** Programme d'ordinateur selon la revendication 23, **caractérisé en ce que** les données représentant le nombre prédéterminé de fois de reproduction des données publicitaires de la publicité représentent le nombre total contracté de fois de reproduction des données publicitaires de la publicité.

**25.** Programme d'ordinateur selon la revendication 24, **caractérisé en ce que** le nombre approprié de fois de reproduction qui est déterminé sur la base du degré de coïncidence à l'étape du poste (3) est déterminé de manière que le nombre approprié de fois de reproduction dépasse le nombre de fois de reproduction qui est le minimum requis pour que le récepteur, pour un total des nombres de reproduction des données publicitaires de la publicité sur tous les récepteurs, qui stockent les données publicitaires de la publicité, atteigne juste le nombre total contracté de fois de reproduction.

**26.** Programme d'ordinateur selon la revendication 24 ou 25, **caractérisé en ce que** :

les données caractérisant les groupes d'audience auxquels le spectateur/auditeur appartient à l'étape du poste (1) comprennent des premières données représentant une catégorie ou plus qui spécifie(nt) les groupes d'audience auxquels le spectateur/auditeur appartient ; dans lequel les premières données qui représentent la une catégorie ou plus sont choisies parmi des données de catégorie(s) pour spécifier des groupes d'audience, dans lequel les données de catégorie(s) pour spécifier les groupes d'audience comprennent un poste ou plus et chaque poste comprend une catégorie ou plus pour spécifier des groupes d'audience,

les données caractérisant des groupes d'audience qui sont des cibles des données publicitaires de la publicité de l'étape du poste (2) comprennent des deuxièmes données représentant une catégorie ou plus qui spécifie (nt) les groupes d'audience qui sont des cibles des données publicitaires de la publicité et des données représentant une valeur d'un coefficient qui représente une pondération affectée à chacune des catégories choisies ; dans lequel les deuxièmes données qui représentent la une catégorie ou plus sont choisies parmi les données de catégorie(s) pour spécifier des groupes d'audience, et dans lequel une valeur représentant une pondération supérieure est affectée à une catégorie choisie ayant plus d'importance,

des données représentant le nombre de spectateurs/auditeurs qui appartiennent à chacune des catégories spécifiant les groupes d'audience qui sont les cibles des données publicitaires de la publicité ont été ajoutées aux données publicitaires de la publicité et l'étape du poste (2) comprend une étape de stockage, en association avec les données publicitaires de la publicité, de données représentant le nombre de spectateurs/auditeurs qui appartiennent à chacune des catégories spécifiant les groupes d'audience qui sont les cibles des données publicitaires de la publicité, et

l'étape du poste (3) comprend, pour les données publicitaires de chacune des publicités, les étapes consistant à :

(3a) sur la base des données représentant la valeur du coefficient représentant la pondération affectée à chacune des catégories représentées par les deuxièmes données qui coïncident avec les catégories représentées par les premières données, déterminer, par rapport à chacune des catégories en coïncidence, la valeur du coefficient qui représente le degré de coïncidence entre les groupes d'audience ciblés par la publicité et les groupes d'audience auxquels le spectateur/auditeur appartient,

(3b) appliquer chaque valeur du coefficient représentant le degré de coïncidence qui est obtenu par rapport à chaque catégorie en coïncidence à l'étape du poste (3a), au nombre total contracté de fois de reproduction ; de manière à obtenir, pour chaque catégorie en coïncidence, le nombre total de fois de reproduction dans lequel le degré de coïncidence par rapport à la catégorie en coïncidence est pris en considération,

(3c) diviser le nombre total de fois de reproduction, qui est obtenu à l'étape du poste (3b) et dans lequel le degré de coïncidence est pris en considération, par rapport à chaque catégorie en coïncidence par le nombre de spectateurs/auditeurs qui appartiennent à la catégorie en coïncidence ; de sorte que, pour chaque catégorie en coïncidence, on obtienne le nombre de fois de reproduction dans lesquels le nombre de spectateurs/auditeurs appartenant à la catégorie en coïncidence est pris en considération, et

(3d) sur la base des nombres de reproduction qui sont obtenus à l'étape du poste (3c) et dans lesquels les nombres de spectateurs/auditeurs appartenant aux catégories respectives en coïncidence sont pris en considération, déterminer le nombre approprié de fois de reproduction à affecter au spectateur/auditeur.

27. Programme d'ordinateur selon l'une quelconque des revendications 22 à 26, **caractérisé en ce que** la procédure comprend par ailleurs les étapes consistant du côté spectateur/auditeur à :

(A) déterminer, sur la base du nombre approprié de fois de reproduction des données publicitaires de chaque publicité qui est déterminée à l'étape du poste (3), un nombre restant de fois de reproduction des données publicitaires de la publicité,

(B) déterminer, pour le nombre restant de fois de reproduction des données publicitaires de chaque publicité, une valeur d'un coefficient représentant une pondération, dans lequel une pondération plus forte est conférée à un nombre restant plus important de fois de reproduction,

(C) déterminer, sur la base de la valeur du coefficient déterminée pour les données publicitaires de chaque publicité, un ordre de priorité pour reproduire les données publicitaires de chaque publicité sur le récepteur,

(D) choisir les données publicitaires d'une publicité ou plus à reproduire sur le récepteur à partir des données publicitaires stockées de la pluralité de publicités sur la base de l'ordre de priorité, et

(E) reproduire les données publicitaires de la une publicité ou plus choisie(s) à l'étape du poste (D) sur le récepteur en conformité avec l'ordre de priorité.

28. Programme d'ordinateur selon l'une quelconque des revendications 22 à 27, **caractérisé en ce que** le nombre approprié de fois de reproduction des données publicitaires de chaque publicité, qui est déterminé par les moyens du poste (3), est le nombre de fois de reproduction qui est défini comme limite supérieure du nombre de fois en référence que le récepteur peut reproduire les données publicitaires de la publicité.

# Fig. 1

| CALCULATION ELEMENT NAME | CONTROL COEFFICIENT NAME | | VALUE OF CONTROL COEFFICIENT FOR EACH ADVERTISEMENT | | | | | | CONTROL VARIABLE |
|---|---|---|---|---|---|---|---|---|---|
| | | | CM 1 | CM 2 | CM 3 | CM 4 | CM 5 | CM 6 | |
| DISPLAY PERIOD | Tx | | 800 | 700 | 400 | 300 | 500 | 100 | X1 |
| AUDIENCE GROUP SPECIFYING CATEGORY | Cpq — Cax (REGION) | Ca1(REGION A) | 40 | 100 | 20 | 30 | 10 | 40 | X2 |
| | | Ca2(REGION B) | 0 | 0 | 60 | 10 | 10 | 10 | |
| | | • | • | • | • | • | • | • | |
| | | • | • | • | • | • | • | • | |
| | | • | • | • | • | • | • | • | |
| | | Cam(REGION m) | 20 | 0 | 0 | 20 | 10 | 30 | |
| | Cbx (SEX) | Cb1(MALE) | 80 | 50 | 30 | 70 | 60 | 80 | X3 |
| | | Cb2(FEMALE) | 20 | 50 | 70 | 30 | 40 | 20 | |
| | Ccx (AGE) | Cc1(~19YRS) | 10 | 50 | 50 | 30 | 10 | 40 | X4 |
| | | Cc2(20~34) | 20 | 30 | 35 | 30 | 10 | 25 | |
| | | Cc3(35~49) | 40 | 20 | 15 | 20 | 20 | 15 | |
| | | Cc4(50~64) | 20 | 0 | 0 | 10 | 20 | 10 | |
| | | Cc5(65YRS~) | 10 | 0 | 0 | 10 | 40 | 10 | |
| | Cdx (HOBBY) | Cd1(HOBBY A) | 50 | 20 | 80 | 10 | 90 | 30 | X5 |
| | | Cd2(HOBBY B) | 40 | 30 | 10 | 20 | 0 | 60 | |
| | | Cd3(HOBBY C) | 10 | 50 | 10 | 70 | 10 | 10 | |
| PREDETERMINED DISPLAY ORDER | Jn | | 1500 | 1400 | 1300 | 1200 | 1100 | 1000 | X6 |
| AVERAGED DISPLAY NUMBER | Ka | | 40 | 100 | 50 | 40 | 70 | 30 | X7 |
| PREFERRED DISPLAY TIME | Hx | H1 (1:00~5:00) | 0 | 0 | 0 | 0 | 30 | 0 | X8 |
| | | H2 (5:00~9:00) | 0 | 20 | 0 | 0 | 20 | 20 | |
| | | H3 (9:00~13:00) | 0 | 20 | 50 | 0 | 0 | 30 | |
| | | H4 (13:00~17:00) | 0 | 20 | 0 | 20 | 0 | 20 | |
| | | H5 (17:00~21:00) | 100 | 20 | 50 | 60 | 20 | 30 | |
| | | H6 (21:00~1:00) | 0 | 20 | 0 | 20 | 30 | 0 | |
| TASTE OF AUDIENCE (ADVERTISEMENT ATTRIBUTE) | Fx | | 70 (F1) | 70 (F1) | 20 (F2) | 70 (F1) | 50 (F3) | 20 (F2) | X9 |

| | CM 1 | CM 2 | CM 3 | CM 4 | CM 5 | CM 6 |
|---|---|---|---|---|---|---|
| A DEGREE OF COINCIDENCE IN THE CASE THAT AN AUDIENCE OF A RECIEVER BELONGS TO CATEGORIES Ca1, Cb1, Cc1, AND Cd3 AND THE VALUE OF EACH OF CONTROL VARIABLES X2 TO X5 IS 1 : Ct($Ct = Ca1 \times X2 + Cb1 \times X3 + Cc1 \times X4 + Cd3 \times X5$) | 140 | 250 | 110 | 200 | 90 | 170 |
| A DETERMINATION ELEMENT IN THE CASE THAT AN AUDIENSE OF A RECIEVER BELONGS TO CATEGORIES Ca1, Cb1, Cc1 AND Cd3, THE PRESENT TIME BELONGS TO H6, AND THE VALUES OF ALL CONTROL VARIABLES ARE 1 : Sum($Sum = Tx \times X1 + Ct + Jn \times X6 + Ka \times X7 + Hx \times X8 + Fx \times X9$) | 2550 | 2540 | 1880 | 1830 | 1840 | 1320 |
| PRIORITY ORDER : N | 1 | 2 | 3 | 5 | 4 | 6 |

# Fig. 2

| 37a | | 37n |
|---|---|---|
| PROGRAM AND BROADCAST SCHEDULE DATA FROM COMPANY OPERATING CHANNEL 1 | --------- | PROGRAM AND BROADCAST SCHEDULE DATA FROM COMPANY OPERATING CHANNEL n |

| 38a | | 38n |
|---|---|---|
| ADVERTISEMENT DATA AND ADDED DATA, AND REQUEST FOR DISPLAYING DESIGNATED ADVERTISEMENT, FROM CLIENT OF ADVERTISEMENT 1 | --------- | ADVERTISEMENT DATA AND ADDED DATA, AND REQUEST FOR DISPLAYING DESIGNATED ADVERTISEMENT, FROM CLIENT OF ADVERTISEMENT n |

30

**HOST DEVICE**

33
INPUT PART

34
TIMING PART

32
31
PROCESSING/ CONTROL PART

36
RECIEVING PART

35
TRANSMISSION PART

**STRAGE PART**

•DATA RECIEVED FROM RECIEVER
  RECIEVED AUDIENCE CATEGORY DATA
  HISTORY DATA
•DATA FOR BRADCAST
  DATA RELATED TO PROGRAMS
  TIME SCHEDULE DATA
  DATA FOR DESIGNATING ADVERTISEMENT FOR DISPLAY
•DATA RELATED TO ADVERTISEMENT
  ADVERTISEMENT DATA
  ADDED DATA
    ADVERTISEMENT ID DATA
    DEADLINE DATA
    NUMBER OF DISPLAYS DATA
    TARGETED AUDIENCE CATEGORY DATA
    WEIGHT DATA OF CATEGORY DATA
    DISPLAY TIME DATA
    ADVERTISEMENT ATTRIBUTE DATA
•CALCULATION RESULT DATA
  NUMBER OF AUDIENCES FOR EACH CATEGORY
  NUMBER OF ADVERTISEMENT DISPLAYS FOR EACH CHANNEL

40a
39

| RECEIVER | RECEIVER | ------------------- | RECEIVER |
|---|---|---|---|

40n

# Fig. 3

TO RECEIVING PART 36 OF HOST DEVICE 30

FROM TRANSMISSION PART 35 OF HOST DEVICE 30

~ 39

~ 40

RECEIVER

~ 45  **TRANSMISSION PART**

~ 46  **RECIEVING PART**

~ 42

**STRAGE PART**

•DATA RELATED TO AUDIENCE
   AUDIENCE CATEGORY DATA
•DATA RELATED TO ADVERTISEMENT
   ADVERTISEMENT DATA
   ADDED DATA
      ADVERTISEMENT ID DATA
      DEADLINE DATA
      NUMBER OF DISPLAYS DATA
      WEIGHT DATA OF MATCHED
        CATEGORY
      DISPLAY TIME DATA
      ADVERTISEMENT ATTRIBUTE
        DATA
•CALCULATION RESULT DATA
   PRIORITY ORDER OF EACH
   ADVERTISEMENT
•HISTORY DATA

~ 44  **TIMING PART**

41  **PROCESSING/ CONTROL PART**

43  **INPUT PART**

47 ~  **SOUND/IMAGE INFORMATION OUTPUT PART**

DATA FROM AUDIENCE

48 ~  **SOUND/IMAGE OUTPUT DEVICE**

## Fig. 4

```
                    ( START )

1 ─┤ SELECT DATA CHARACTERIZING AUDIENCE GROUP TO
     WHICH AUDIENCE BELONGS (A1)

2 ─┤ STORE THE DATA INDICATING SELECTED CATEGORY IN
     STRAGE PART 42 (A1)

                    ( END )
```

## Fig. 5

```
                    ( START )

     OBTAIN THE NUMBER OF AUDIENCES BELONGING TO
1 ─┤ EACH CATEGORY OF EACH CLASSIFICATION OF THE
     AUDIENCE GROUP SPECIFYING CATEGORY (B1)

                    ( END )
```

## *Fig. 6*

```
                    ( START )
                         |
                         v
   ┌─────────────────────────────────────────────────┐
   │ FROM CLIENT OF ADVERTISEMENT, RECEIVE ADVERTISEMENT │
 1 │ DATA, DISPLAY PERIOD DATA OF ADVERTISEMENT, TOTAL  │
   │ NUMBER OF DISPLAYS OF ADVERTISEMENT DATA, AUDIENCE │
   │ GROUP SPECIFYING CATEGORY DATA, PREFERRED DISPLAY  │
   │ TIME DATA, AND ADVERTISEMENT ATTRIBUTE DATA (C1)   │
   └─────────────────────────────────────────────────┘
                         |
                         v
   ┌─────────────────────────────────────────────────┐
   │ ASSOCIATE EACH CATEGORY OF EACH CLASSIFICATION OF │
 2 │ AUDIENCE GROUP SPECIFYING CATEGORY DATA WITH DATA │
   │ OF THE NUMBER OF AUDIENCE BELONGING TO THE        │
   │ CATEGORY (C2)                                     │
   └─────────────────────────────────────────────────┘
                         |
                         v
   ┌─────────────────────────────────────────────────┐
 3 │    CALCULATE THE AVERAGED DISPLAY NUMBER (C3)     │
   └─────────────────────────────────────────────────┘
                         |
                         v
   ┌─────────────────────────────────────────────────┐
   │ ADD ID DATA, DISPLAY PERIOD DATA, AVERAGED DISPLAY │
 4 │ NUMBER DATA, AUDIENCE GROUP SPECIFYING CATEGORY   │
   │ DATA, PREFERRED DISPLAY TIME DATA, AND ADVERTISEMENT │
   │ ATTRIBUTE DATA TO ADVERTISEMENT DATA (C4)         │
   └─────────────────────────────────────────────────┘
                         |
                         v
   ┌─────────────────────────────────────────────────┐
 5 │  TRANSMIT ADVERTISEMENT DATA AND ADDED DATA (C5)  │
   └─────────────────────────────────────────────────┘
                         |
                         v
                     ( END )
```

# Fig. 7

```
                        ┌─────────────┐
                        │    START    │
                        └─────────────┘
                               │
                               ▼
      ┌──────────────────────────────────────────────────────────┐
  1 ──┤ RECEIVE ADVERTISEMENT DATA AND ADDED DATA FROM            │
      │ HOST DEVICE (D1)                                          │
      └──────────────────────────────────────────────────────────┘
                               │
                               ▼                          4
                          ╱────────╲              ┌──────────────────┐
  2                      ╱  SHOULD   ╲             │ DISCARD RECEIVED  │
                        ╱  RECEIVED   ╲     NO     │ ADVERTISEMENT     │
                       ╱ ADVERTISEMENT DATA╲──────▶│ DATA AND ADDED    │
                       ╲ AND ADDED DATA BE ╱       │ DATA (D2b)        │
                        ╲  STORED (D2) ?  ╱        └──────────────────┘
                         ╲──────────────╱                   │
   3              YES           │                           │
                                ▼                           │
      ┌──────────────────────────────────┐                 │
      │ STORE RECEIVED ADVERTISEMENT      │                 │
      │ DATA AND ADDED DATA (D2a)         │                 │
      └──────────────────────────────────┘                 │
                               │                            │
                               ▼◀───────────────────────────┘
                        ┌─────────────┐
                        │     END     │
                        └─────────────┘
```

# Fig. 8

START

1 — INSERT DISPLAY COMMAND IN ADVERTISEMENT COMMAND SIGNAL (E1)

2 — IS THERE ADVERTISEMENT DATA THAT SHOULD BE DELETED FROM STORAGE PART OF RECEIVER (E2)?    NO

YES

3 — INSERT DELECTION COMMAND IN ADVERTISEMENT COMMAND SIGNAL (E2)

4 — IS A SPECIFIC ADVERTISEMENT DESIGNATED IN ORDER TO DISPLAY IT MOST PREFERENTIALLY (E3)?    NO

YES

5 — INSERT ADVERTISEMENT DESIGNATION COMMAND IN ADVERTISEMENT COMMAND SIGNAL (E3)

6 — DETERMINE VALUE OF CONTROL VARIABLES INCLUDED IN ADVERTISEMENT COMMAND SIGNAL BASED ON HISTORY DATA OR BUSINESS INFORMATION, AND CHANGE CONTROL VARIABLES (E4)

7 — TRANSMIT ADVERTISEMENT COMMAND SIGNAL WITH PROGRAM DATA (E5)

END

## Fig. 9

START

1 — DETERMINE THE NUMBER OF DISPLAYS WHICH IS THE UPPER LIMTI DISPLAY NUMBERS (AVERAGED DISPLAY NUMBER) ON EACH RECEIVER, AND CALCULATE INITIAL VALUE OF WEIGHT (Ka) FOR THE NUMBER (F1)

2 — DETERMINE ORDER OF DISPLAYING EACH ADVERTISEMENT, AND DETERMINE INITIAL VALUE OF CONTROL COEFFICIENT Jn FOR THE PREDETERMINED DISPLAY ORDER (F2)

3 — SET CONTROL COEFFICIENT (Fx) WHICH REFLECTS TASTE OF AUDIENCE FOR EACH CATEGORY OF ADVERTISEMENT AT INITIAL VALUE (F3)

I(FROM FIGS.10 AND 13)

4 — HAS PREDETERMINED TIME PASSED (E.G., ONE MONTH) SINCE SETTING Fx AT INITIAL VALUE? (F4)    YES

NO

5 — CALCULATE CONTROL COEFFICIENT Tx FOR DISPLAY PERIOD OF EACH ADVERTISEMENT, BASED ON DISPLAY PERIOD DATA (F5)

6 — IS THERE ADVERTISEMENT WITH Tr (DEADLINE−PRESENT DATE) < 0 ? (F6)    YES

7 — DELETE THE ADVERTISEMENT DATA AND ADDED DATA FROM STORAGE PART (F6)

NO

8 — HAS A PREDETERMINED TIME (E.G., 24 HOURS) PASSED ? (F7)    YES

NO

TO B OF FIG. 10

EP 1 263 224 B1

## Fig. 10

B

9 — HAS ADVERTISEMENT COMMAND SIGNAL SENT WITH PROGRAM DATA BEEN RECEIVED ? (F8) — NO → TO I OF FIG. 9

YES

10 — IS DELETION COMMAND INCLUDED IN ADVERTISEMENT COMMAND SIGNAL AND ADVERTISEMENT DATA AND ADDED DATA WHICH IS THE OBJECT OF DELETION COMMAND STORED IN STORAGE PART? (F9) — YES

11 — DELETE ADVERTISEMENT DATA AND ADDED DATA WHICH IS THE OBJECT OF DELETION COMMAND (F9)

NO

12 — IS ADVERTISEMENT DESIGNATION COMMAND INCLUDED IN ADVERTISEMENT COMMAND SIGNAL? (F10) — YES

13 — READ ID FROM ADVERTISEMENT COMMAND SIGNAL (F10)

14 — IS ADVERTISEMENT HAVING THE ID STORED IN STORAGE PART ? (F10) — NO

NO

15 — DISPLAY ADVERTISEMENT HAVING THE ID (F10)

YES

16 — DOES TIME OF ADVERTISEMENT TIME FRAME REMAIN? (F11) — NO → TO II OF FIG. 12

TO C1 OF FIG. 11

YES

TO C2 OF FIG. 11

63

## Fig. 11

C1

C2

17 — IS REMAINING NUMBERS OF DISPLAY OF THE DISPLAYSD ADVERTISEMENT 0 ? (F12)

YES

NO

18 — DELETE THE ADVERTISEMENT DATA AND ADDED DATA FROM STORAGE PART (F12)

19 — CALUCULATE WEIGHT (Ka) FOR REMAINING NUMBERS OF DISPLAY WITH RESPECT TO THE DISPLAYED ADVERTISEMENT AND STORE IT (F12)

20 — DETERMINE CONTROL COEFFICIENT Jn FOR PREDETERMINED DISPLAY ORDER(F13)

21 — READ PRESENT TIME OF DAY, AND, FOR EACH ADVERTISEMENT, READ OUT CONTROL COEFFICIENT Hx FOR TIME SLOT TO WHICH THE PRESENT TIME OF DAY BELONGS FROM STORAGE PART (F14)

22 — READ OUT CONTROL COEFFICIENTS Tx, Cpq (Cal, Cb1, Cc1, Cd3 IN THIS EXAMPLE), Jn, Ka AND Fx FOR EACH ADVERTISEMENT FROM STORAGE PART (F15)

23 — READ OUT CONTROL VARIABLE APPLICATION COMMAND INCLUDED IN ADVERTISEMENT COMMAND SIGNAL, AND APPLY CONTROL VARIABLE Xn TO EACH CONTROL COEFFICIENT. ($Tx \times X1 = Tx'$ : $Ca1 \times X2 = Ca1'$ : $Cb1 \times X3 = Cb1'$ : $Cc1 \times X4 = Cc1'$ : $Cd3 \times X5 = Cd3'$ : $Jn \times X6 = Jn'$ : $Ka \times X7 = Ka'$ : $Hx \times X8 = Hx'$ : $Fx \times X9 = Fx'$) (F16)

TO D OF FIG. 12

# Fig. 12

```
┌─────────┐
│    D    │
└─────────┘
```

**24** — CALCULATE DEGREE OF COINCIDENCE Ct($=Ca1'+Cb1'+Cc1'+Cd3'$) BETWEEN AUDIENCE TARGETED BY EACH ADVERTISEMENT AND AUDIENCE GROUP TO WHICH AUDIENCE OF RECEIVER BELONGS (F17)

**25** — FOR EACH ADVERTISEMENT, TOTAL THE VALUES OF CONTROL COEFFICIENTS Tx', Ct, Ka', Jn', Hx', Fx' AND OBTAIN DETERMINATION ELEMENT (Sum) (F18)

**26** — DETERMINE PRIORITY ORDER FOR DISPLAYING EACH ADVERTISEMENT IN THE ORDER OF LARGER VALUE OF Sum (F18)

**27** — RESPOND TO DISPLAY COMMAND INCLUDED IN ADVERTISEMENT COMMAND SIGNAL AND DISPLAY ADVERTISEMENTS IN THE ORDER OF DETERMINED PRIORITY ORDER (F19)

II (FROM FIG. 10)

**28** — REGARDING EACH ADVERTISEMENT, IS REMAINING NUMBERS OF DISPLAY 0 ? (F20)

YES

NO

**29** — DELETE THE ADVERTISEMENT DATA AND ADDED DATA FROM STORAGE PART(F20)

**30** — WITH RESPECT TO DISPLAYED ADVERTISEMENT, CALUCULATE WEIGHT (Ka) FOR REMAINING NUMBERS OF DISPLAY UNTIL THE UPPER LIMIT NUMBERS OF DISPLAY ON EACH RECEIVER AND STORE THE WEIGHT (F21)

**31** — DETERMINE CONTROL COEFFICIENT Jn FOR PREDETERMINED DISPLAY ORDER (F22)

```
┌──────────────────┐
│  TO E OF FIG. 13 │
└──────────────────┘
```

# Fig. 13

```
                    ┌─────────┐
                    ║    E    ║
                    └─────────┘
                         │
                         ▼
        32 ╲         ╱╲
              ╱──────    ──────╲
           ╱   DID AUDIENCE PRESSED    ╲
        ╱   "LIKE BUTTON" OR "DISLIKE BUTTON"   ╲      YES
        ╲  WITH RESPECT TO DISPLAYED ADVERTISEMENT  ╱────────┐
          ╲   DURING THE ADVERTISEMENT IS        ╱          │
             ╲       DISPLAYED ?              ╱             │
                ╲      (F23)            ╱                   │
                   ╲──────  ──────╱                         │
                      NO ╲  ╱                               │
                         │                                  ▼
                         │      33 ╲  ┌──────────────────────────────────────────┐
                         │            │ INCREASE OR DECREASE VALUE OF CONTROL COEFFICIENT │
                         │            │ Fx WITH RESPECT TO ALL ADVERTISEMENTS BELONGING TO │
                         │            │ THE SAME CATEGORY (I.E. ALL ADVERTISEMENTS HAVING  │
                         │            │ SAME ATTRIBUTE) AS THE CATEGORY OF THE         │
                         │            │ ADVERTISEMENT, WITH RESPECT TO THAT (ATTRIBUTE OF │
                         │            │ ADVERTISEMENT) THE BUTTON WAS PRESSED  (F23)  │
                         │            └──────────────────────────────────────────┘
                         │◄──────────────────┘
                         ▼
                 ┌──────────────────┐
                 ║  TO I OF FIG. 9  ║
                 └──────────────────┘
```

# Fig. 14

START

1
AFTER ADVERTISEMENT IS DISPLAYED, ASSOCIATE THE ID DATA OF ADVERTISEMENT WITH HISTORY DATA AND STORE IT (G1)

2
TRANSMIT ACCUMULATED ID DATA AND HISTORY DATA OF ADVERTISEMENTS TO HOST DEVICE (G2)

3
DELETION COMMAND IS RECEIVED, OR REMAINING DISPLAY TIME < 0, OR REMAINING NUMBERS OF DISPLAY = 0 ? (G3)

YES

NO

4
DELETE ONLY TRANSMITTED HISTORY DATA FROM STORAGE PART (G3)

5
DELETE BOTH ID DATA AND HISTORY DATA OF ADVERTISEMENT (G3)

END

# Fig. 15

START

1. HOST DEVICE 30 RECEIVES HISTORY DATA (H1, H2)

2. CALCULATE TOTAL NUMBER OF ACCUMULATED NUMBERS OF DISPLAY FOR EACH ADVERTISEMENT (H3)

3. CALCULATE REMAINING DISPLAE NUMBERS OF EACH ADVERTISEMENT (H4)

4. PREPARE DATA FOR CONTROLLING DISPLAY OF EACH ADVERTISEMENT (DELETION COMMAND, CONTROL VARIABLE APPLICATION COMMAND) (H5)

5. INSERT CONTROL DATA IN ADVERTISEMENT COMMAND SIGNAL (H5)

END

## Fig. 16

```
                    ( START )
                        |
                        |
    1 ─╮                ▼
 ┌─────────────────────────────────────────────────┐
 │ AT THE POINT WHEN HISTORY DATA WAS FED BACK,     │
 │ CALCULATE THE NUMBER THAT EACH ADVERTISEMENT     │
 │ WAS DISPLAYED WITH RESPECT TO EACH CHANNEL  (I1) │
 └─────────────────────────────────────────────────┘
                        |
                        ▼
    2 ─╮            ╱        ╲
               ╱  DEADLINE OF   ╲
            ╱   DISPLAYING         ╲        NO
          ╱   ADVERTISEMENT IS        ╲ ─────────►
          ╲   REACHED, OR TOTAL       ╱
            ╲  NUMBERS OF            ╱
              ╲ DISPLAY IS         ╱
                ╲ COMPLETED      ╱
                  ╲  ? (I2)    ╱
                        |
                       YES
    3 ─╮                ▼
 ┌─────────────────────────────────────────────────┐
 │ FOR EACH CHANNEL, OBTAIN THE NUMBER THAT THE     │
 │ ADVERTISEMENT WAS DISPLAYED (I2a)                │
 └─────────────────────────────────────────────────┘
                        |
    4 ─╮                ▼
 ┌─────────────────────────────────────────────────┐
 │ OBTAIN RATIO OF THE TOTAL NUMBERS OF DISPLAY     │
 │ DEFINED BY CLIENT OF ADVERTISEMENT AND THE       │
 │ NUMBER OF DISPLAY FOR EACH CHANNEL (I2b)         │
 └─────────────────────────────────────────────────┘
                        |
    5 ─╮                ▼
 ┌─────────────────────────────────────────────────┐
 │ DISTRIBUTE ADVERTISEMENT FEES PAID BY SPONSOR TO │
 │ COMPANY OPERATING EACH CHANNEL IN ACCORDANCE     │
 │ WITH THE ABOVE OBTAINED RATIO (I2c)              │
 └─────────────────────────────────────────────────┘
                        |
                        ▼
                    ( END )
```

# Fig. 17

```
( START )
     │
     ▼
```

**1**

RECEIVE ADVERTISEMENT DATA, ADVERTISEMENT'S DISPLAY PERIOD DATA, ADVERTISEMENT'S TOTAL NUMBERS OF DISPLAY DATA, AUDIENCE GROUP SPECIFYING CATEGORY DATA, PREFERRED DISPLAY TIME DATA, ADVERTISEMENT ATTRIBUTE DATA FROM CLIENT OF ADVERTISEMENT (C1')

**2**

ASSOCIATE EACH CATEGORY OF EACH CLASSIFICATION OF AUDIENCE GROUP SPECIFYING CATEGORY DATA WITH DATA REPRESENTING THE NUMBER OF AUDIENCES BELONGING TO THE CATEGORY (C2')

**3**

ADD ID DATA, DISPLAY PERIOD DATA, TOTAL NUMBERS OF DISPLAY DATA, AUDIENCE GROUP SPECIFYING CATEGORY DATA, PREFERRED DISPLAY TIME DATA, ADVERTISEMENT ATTRIBUTE DATA, AND THE NUMBER OF AUDIENCES DATA TO ADVERTISEMENT DATA (C3')

**4**

TRANSMIT ADVERTISEMENT DATA AND ADDED DATA (C4')

```
     │
     ▼
( END )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9707656 A

- WO 9952285 A